(19) **Europäisches Patentamt**
**European Patent Office**
**Office européen des brevets**

(11) **EP 4 514 044 A1**

(12) **EUROPEAN PATENT APPLICATION**
published in accordance with Art. 153(4) EPC

(43) Date of publication:
**26.02.2025  Bulletin 2025/09**

(21) Application number: **23792064.0**

(22) Date of filing: **03.04.2023**

(51) International Patent Classification (IPC):
$H04W\ 72/56$ (2023.01)   $H04W\ 64/00$ (2009.01)
$H04W\ 68/02$ (2009.01)   $H04W\ 72/23$ (2023.01)
$H04L\ 5/00$ (2006.01)   $H04W\ 72/12$ (2023.01)
$H04W\ 72/566$ (2023.01)   $H04W\ 72/21$ (2023.01)

(52) Cooperative Patent Classification (CPC):
**H04L 5/00; H04W 64/00; H04W 68/02;**
**H04W 72/12; H04W 72/21; H04W 72/23;**
**H04W 72/56; H04W 72/566**

(86) International application number:
**PCT/KR2023/004437**

(87) International publication number:
**WO 2023/204484 (26.10.2023 Gazette 2023/43)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.04.2022  KR 20220050306**
**29.04.2022  KR 20220053200**

(71) Applicant: **LG Electronics Inc.**
**Yeongdeungpo-gu**
**Seoul 07336 (KR)**

(72) Inventors:
• **LEE, Jeongsu**
**Seoul 06772 (KR)**
• **HWANG, Seunggye**
**Seoul 06772 (KR)**
• **LEE, Youngdae**
**Seoul 06772 (KR)**
• **KO, Hyunsoo**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING OR RECEIVING SOUNDING REFERENCE SIGNAL IN WIRELESS COMMUNICATION SYSTEM**

(57)     A method performed by a user equipment (UE) in a wireless communication system according to an embodiment of the present disclosure comprises receiving configuration information related to a sounding reference signal (SRS) from a base station, receiving an RRC release message from the base station, and transmitting the SRS in an RRC_INACTIVE state to the base station. The SRS may be related to a positioning. The RRC release message may include configuration information related to the SRS for positioning in the RRC_INACTIVE state. Based on a transmission of the SRS colliding with other physical signal or other physical channel in a time domain, the transmission of the SRS may be dropped or performed in at least one symbol in which the collision occurs.

[FIG. 14]

**Description**

[Technical Field]

The present disclosure relates to a method of transmitting and receiving a sounding reference signal (SRS) in a wireless communication system and a device thereof.

[Background Art]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

Transmission of an SRS for positioning in RRC_INACTIVE state is supported.

[Disclosure]

[Technical Problem]

Transmission of an SRS for positioning may collide with other physical channels/signals transmitted in RRC_INACTIVE state. In such a case, ambiguity may arise as to which transmission should take precedence.

An object of the present disclosure is to propose a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

A method performed by a user equipment (UE) in a wireless communication system according to an embodiment of the present disclosure comprises receiving, from a base station, configuration information related to a sounding reference signal (SRS), receiving an RRC release message from the base station, and transmitting, to the base station, the SRS in the RRC_INACTIVE state.

The SRS may be related to a positioning. An RRC state of the UE may transit from an RRC_CONNECTED state to an RRC_INACTIVE state or an RRC_IDLE state based on the RRC release message. The RRC release message may include configuration information related to the SRS for positioning in the RRC_INACTIVE state. The SRS may be transmitted inside or outside an initial uplink (UL) bandwidth part (BWP).

Based on a transmission of the SRS colliding with other physical signal or other physical channel in a time domain, the transmission of the SRS may be dropped or performed in at least one symbol in which the collision occurs.

Whether to perform the transmission of the SRS may be determined based on a priority between i) the SRS and ii) the other physical signal or the other physical channel, and the other physical channel may include a physical channel related to a small data transmission (SDT).

The SDT may include a configured grant (CG)-SDT and/or a random access (RA)-SDT.

Based on the transmission of the SRS colliding with a physical channel related to the RA-SDT or the CG-SDT in the time domain, the transmission of the SRS may be dropped in at least one symbol in which the collision occurs.

Based on the transmission of the SRS colliding with a physical channel related to the RA-SDT or the CG-SDT in the time domain, the transmission of the SRS may be dropped in at least one symbol in which the collision occurs. Based on the transmission of the SRS colliding with the physical channel related to the CG-SDT in the time domain, the transmission of the SRS may be performed in at least one symbol in which the collision occurs.

A physical channel related to the CG-SDT may be a physical uplink shared channel (PUSCH) transmitted based on a configured grant in the RRC_INACTIVE state.

A physical channel related to the RA-SDT may be a physical uplink shared channel (PUSCH) transmitted based on a random access procedure in the RRC_INACTIVE state.

The RRC release message may further include configuration information related to the SDT.

The configuration information related to the SDT may include information related to a configured grant (CG)-SDT.

The configuration information related to the SRS for positioning in the RRC_INACTIVE state may include information on at least one of i) an SRS resource and/or ii) a BWP. Based on information on the BWP, the SRS may be transmitted inside or outside the initial UL BWP.

The method may further comprise transmitting, to the base station, the SRS in the RRC_CONNECTED state. The SRS may be transmitted inside an active UL BWP.

The method may further comprise transmitting capability information to the base station. The capability information may be related to a support of the transmission of the SRS for positioning in the RRC_INACTIVE state.

The capability information may include at least one of i) information representing whether the transmission of the SRS for positioning for the initial UL BWP in the RRC_INACTIVE state is supported and/or ii) information representing whether the transmission of the SRS for positioning outside the initial UL BWP in the RRC_INACTIVE state is supported.

A user equipment (UE) operating in a wireless communication system according to another embodiment of the present disclosure comprises one or more transceivers, one or more processors configured to control the one or more transceivers, and one or more memories operably connected to the one or more processors.

The one or more memories store instructions for performing operations based on being executed by the one or more processors.

The operations comprise receiving, from a base station, configuration information related to a sounding reference signal (SRS), receiving an RRC release message from the base station, and transmitting, to the base station, the SRS in the RRC_INACTIVE state.

The SRS may be related to a positioning. An RRC state of the UE may transit from an RRC_CONNECTED state to an RRC_INACTIVE state or an RRC_IDLE state based on the RRC release message. The RRC release message may include configuration information related to the SRS for positioning in the RRC_INACTIVE state. The SRS may be transmitted inside or outside an initial uplink (UL) bandwidth part (BWP).

Based on a transmission of the SRS colliding with other physical signal or other physical channel in a time domain, the transmission of the SRS may be dropped or performed in at least one symbol in which the collision occurs.

Whether to perform the transmission of the SRS may be determined based on a priority between i) the SRS and ii) the other physical signal or the other physical channel, and the other physical channel may include a physical channel related to a small data transmission (SDT).

A device controlling a user equipment (UE) in a wireless communication system according to another embodiment of the present disclosure comprises one or more processors, and one or more memories operably connected to the one or more processors.

The one or more memories store instructions for performing operations based on being executed by the one or more processors.

The operations comprise receiving, from a base station, configuration information related to a sounding reference signal (SRS), receiving an RRC release message from the base station, and transmitting, to the base station, the SRS in the RRC_INACTIVE state.

The SRS may be related to a positioning. An RRC state of the UE may transit from an RRC_CONNECTED state to an RRC_INACTIVE state or an RRC_IDLE state based on the RRC release message. The RRC release message may include configuration information related to the SRS for positioning in the RRC_INACTIVE state. The SRS may be transmitted inside or outside an initial uplink (UL) bandwidth part (BWP).

Based on a transmission of the SRS colliding with other physical signal or other physical channel in a time domain, the transmission of the SRS may be dropped or performed in at least one symbol in which the collision occurs.

Whether to perform the transmission of the SRS may be determined based on a priority between i) the SRS and ii) the other physical signal or the other physical channel, and the other physical channel may include a physical channel related to a small data transmission (SDT).

One or more non-transitory computer-readable medium according to still another embodiment of the present disclosure store one or more instructions.

The one or more instructions perform operations based on being executed by the one or more processors.

The operations comprise receiving, from a base station, configuration information related to a sounding reference signal (SRS), receiving an RRC release message from the base station, and transmitting, to the base station, the SRS in the RRC_INACTIVE state.

The SRS may be related to a positioning. An RRC state of the UE may transit from an RRC_CONNECTED state to an RRC_INACTIVE state or an RRC_IDLE state based on the RRC release message. The RRC release message may include configuration information related to the SRS for positioning in the RRC_INACTIVE state. The SRS may be transmitted inside or outside an initial uplink (UL) bandwidth part (BWP).

Based on a transmission of the SRS colliding with other physical signal or other physical channel in a time domain, the transmission of the SRS may be dropped or performed in at least one symbol in which the collision occurs.

Whether to perform the transmission of the SRS may be determined based on a priority between i) the SRS and ii) the other physical signal or the other physical channel, and the other physical channel may include a physical channel related to a small data transmission (SDT).

A method performed by a base station in a wireless communication system according to another embodiment of the present disclosure comprises transmitting, to a user equipment (UE), configuration information related to a sounding reference signal (SRS), transmitting an RRC release message to the UE, and receiving the SRS from the UE of the RRC_INACTIVE state.

The SRS may be related to a positioning. An RRC state of the UE may transit from an RRC_CONNECTED state to an RRC_INACTIVE state or an RRC_IDLE state based on the RRC release message. The RRC release message may include configuration information related to the SRS for positioning in the RRC_INACTIVE state. The SRS may be received inside or outside an initial uplink (UL) bandwidth part (BWP).

Based on a transmission of the SRS colliding with other physical signal or other physical channel in a time domain, the transmission of the SRS may be dropped or performed in at least one symbol in which the collision occurs.

Whether to perform the transmission of the SRS may be determined based on a priority between i) the SRS and ii) the other physical signal or the other physical channel, and the other physical channel may include a physical channel related to a small data transmission (SDT).

A base station operating in a wireless communication system according to another embodiment of the present disclosure comprises one or more transceivers, one or more processors configured to control the one or more transceivers, and one or more memories operably connected to the one or more processors.

The one or more memories store instructions for performing operations based on being executed by the one or more processors.

The operations comprise transmitting, to a user equipment (UE), configuration information related to a sounding reference signal (SRS), transmitting an RRC release message to the UE, and receiving the SRS from the UE of the RRC_INACTIVE state.

The SRS may be related to a positioning. An RRC state of the UE may transit from an RRC_CONNECTED state to an RRC_INACTIVE state or an RRC_IDLE state based on the RRC release message. The RRC release message may include configuration information related to the SRS for positioning in the RRC_INACTIVE state. The SRS may be received inside or outside an initial uplink (UL) bandwidth part (BWP).

Based on a transmission of the SRS colliding with other physical signal or other physical channel in a time domain, the transmission of the SRS may be dropped or performed in at least one symbol in which the collision occurs.

Whether to perform the transmission of the SRS may be determined based on a priority between i) the SRS and ii) the other physical signal or the other physical channel, and the other physical channel may include a physical channel related to a small data transmission (SDT).

[Advantageous Effects]

According to an embodiment of the present disclosure, when transmission of a sounding reference signal (SRS) for positioning in RRC_INACTIVE state collides with other transmissions, the SRS transmission is performed or dropped based on a predefined priority. Therefore, ambiguity in terms of UE operation can be resolved. In addition, the reliability of uplink transmission performed in RRC_INACTIVE state can be improved.

Effects which may be obtained by the present disclosure are not limited to the aforementioned effects, and other technical effects not described above may be evidently understood by a person having ordinary skill in the art to which the present disclosure pertains from the following description.

[Description of Drawings]

FIG. 1 illustrates an example of an overall system structure of NR to which a method proposed in the present disclosure is applicable.

FIG. 2 illustrates a relationship between an uplink frame and a downlink frame in a wireless communication system to which a method proposed by the present disclosure is applicable.

FIG. 3 illustrates an example of a frame structure in an NR system.

FIG. 4 illustrates an example of a resource grid supported by a wireless communication system to which a method proposed in the present disclosure is applicable.

FIG. 5 illustrates examples of a resource grid for each antenna port and numerology to which a method proposed in the present disclosure is applicable.

FIG. 6 illustrates physical channels and general signal transmission used in a 3GPP system.

FIG. 7 illustrates an example of a positioning protocol configuration for measuring a location of a user equipment (UE).

FIG. 8 illustrates an example of architecture of a system for measuring a location of a UE.

FIG. 9 illustrates an example of a procedure for measuring a location of a UE.

FIG. 10 illustrates an example of a protocol layer for supporting LPP message transmission.

FIG. 11 illustrates an example of a protocol layer for supporting NRPPa transmission.

FIG. 12 illustrates operations of a UE, TRP, and LMF to which a method proposed in the present disclosure can be applied.

FIG. 13 is a flowchart illustrating an operation of each UE, TRP and LMF to which a method proposed in the present disclosure can be applied.

FIG. 14 is a flowchart illustrating a method performed by a UE based on an embodiment of the present disclosure.

FIG. 15 is a flowchart illustrating a method performed by a base station based on another embodiment of the present disclosure.

FIG. 16 illustrates a communication system applied to the present disclosure.

FIG. 17 illustrates wireless devices applicable to the present disclosure.

FIG. 18 illustrates a signal process circuit for a transmission signal.

FIG. 19 illustrates another example of a wireless device applied to the present disclosure.

FIG. 20 illustrates a hand-held device applied to the present disclosure.

[Mode for Invention]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), non-orthogonal multiple access (NOMA), and the like. The CDMA may be implemented by radio technology such as universal terrestrial radio access (UTRA) or CDMA2000. The TDMA may be implemented by radio technology such as global system for mobile communications (GSM)/general packet radio service (GPRS)/enhanced data rates for GSM evolution (EDGE). The OFDMA may be implemented as radio technology such as IEEE 802.11 (Wi-Fi), IEEE 802.16 (WiMAX), IEEE 802-20, E-UTRA (evolved UTRA), and the like. The UTRA is a part of a universal mobile telecommunication system (UMTS). 3rd generation partnership project (3GPP) long term evolution (LTE), as a part of an evolved UMTS (E-UMTS) using E-UTRA, adopts the OFDMA in the downlink and the SC-FDMA in the uplink. LTE-A (advanced) is the evolution of 3GPP LTE.

For clarity of description, the present disclosure is described based on the 3GPP communication system (e.g., LTE-A or NR), but the technical spirit of the present disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a standard document detail number. The LTENR may be collectively referred to as the 3GPP system. Matters disclosed in a standard document published before the present disclosure may refer to a background art, terms, abbreviations, etc., used for describing the present disclosure. For example, the following documents may be referenced.

3GPP LTE
36.211: Physical channels and modulation
36.212: Multiplexing and channel coding
36.213: Physical layer procedures
36.300: Overall description
36.331: Radio Resource Control (RRC)
3GPP NR
38.211: Physical channels and modulation
38.212: Multiplexing and channel coding
38.213: Physical layer procedures for control
38.214: Physical layer procedures for data
38.300: NR and NG-RAN Overall Description
36.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. As such, the introduction of next-generation radio access technology considering enhanced mobile broadband communication (eMBB), massive MTC (mMTC), ultra-reliable and low latency communication (URLLC) is discussed, and in the present disclosure, the technology is called NR for convenience. The NR is an expression representing an example of 5G radio access technology (RAT).

In a New RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. By scaling a reference subcarrier spacing by an integer N, different numerologies may be defined.

Definition of terms

eLTE eNB: The eLTE eNB is the evolution of eNB that supports connectivity to EPC and NGC.
gNB: A node which supports the NR as well as connectivity to NGC.
New RAN: A radio access network which supports either NR or E-UTRA or interfaces with the NGC.

Network slice: A network slice is a network defined by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used at an NG2 reference point between new RAN and NGC.

NG-U: A user plane interface used at an NG3 reference point between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: An end point of NG-U interface.

Overview of system

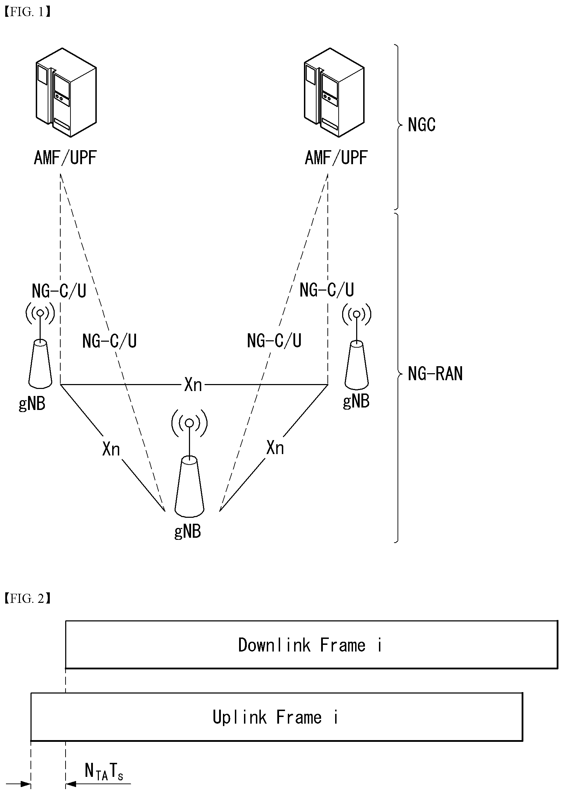

FIG. 1 illustrates an example overall NR system structure to which a method as proposed in the disclosure may apply.

Referring to FIG. 1, an NG-RAN is constituted of gNBs to provide a control plane (RRC) protocol end for user equipment (UE) and NG-RA user plane (new AS sublayer/PDCP/RLC/MAC/PHY).

The gNBs are mutually connected via an Xn interface.

The gNBs are connected to the NGC via the NG interface.

More specifically, the gNB connects to the access and mobility management function (AMF) via the N2 interface and connects to the user plane function (UPF) via the N3 interface.

**New RAT (NR) numerology and frame structure**

In the NR system, a number of numerologies may be supported. Here, the numerology may be defined by the subcarrier spacing and cyclic prefix (CP) overhead. At this time, multiple subcarrier spacings may be derived by scaling the basic subcarrier spacing by integer N (or, $\mu$). Further, although it is assumed that a very low subcarrier spacing is not used at a very high carrier frequency, the numerology used may be selected independently from the frequency band.

Further, in the NR system, various frame structures according to multiple numerologies may be supported.

Hereinafter, an orthogonal frequency division multiplexing (OFDM) numerology and frame structure that may be considered in the NR system is described.

The multiple OFDM numerologies supported in the NR system may be defined as shown in Table 1.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

NR supports multiple numerologies (or subcarrier spacings (SCS)) for supporting various 5G services. For example, if SCS is 15 kHz, NR supports a wide area in typical cellular bands. If SCS is 30 kHz/60 kHz, NR supports a dense urban, lower latency and a wider carrier bandwidth. If SCS is 60 kHz or higher, NR supports a bandwidth greater than 24.25 GHz in order to overcome phase noise.

An NR frequency band is defined as a frequency range of two types FR1 and FR2. The FR1 and the FR2 may be configured as in Table 1 below. Furthermore, the FR2 may mean a millimeter wave (mmW).

[Table 2]

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

With regard to the frame structure in the NR system, the size of various fields in the time domain is expressed as a multiple of time unit of $T_s = 1/(\Delta f_{max} \cdot N_f)$, where $\Delta f_{max} = 480 \cdot 10^3$, and $N_f = 4096$. Downlink and uplink transmissions is constituted of a radio frame with a period of $T_f = (\Delta f_{max} N_f/100) \cdot T_s = 10\text{ms}$. Here, the radio frame is constituted of 10 subframes each of which has a period of $T_{sf} = (\Delta f_{max} N_f/1000) \cdot T_s = 1\text{ms}$. In this case, one set of frames for uplink and one set of frames for downlink may exist.

FIG. 2 illustrates a relationship between an uplink frame and downlink frame in a wireless communication system to which a method described in the present disclosure is applicable.

As illustrated in FIG. 2, uplink frame number i for transmission from the user equipment (UE) should begin $T_{TA} = N_{TA} T_s$ earlier than the start of the downlink frame by the UE.

For numerology $\mu$, slots are numbered in ascending order of $n_s^{\mu} \in \left\{0,..., N_{subframe}^{slots,\mu} - 1\right\}$ in the subframe and in ascending order of $n_{s,f}^{\mu} \in \left\{0,..., N_{frame}^{slots,\mu} - 1\right\}$ in the radio frame. One slot includes consecutive OFDM symbols of $N_{symb}^{\mu}$, and $N_{symb}^{\mu}$ is determined according to the used numerology and slot configuration. In the subframe, the start of slot $n_s^{\mu}$ is temporally aligned with the start of $n_s^{\mu} N_{symb}^{\mu}$.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame,\mu}$ of slots per radio frame, and the number $N_{slot}^{subframe,\mu}$ of slots per subframe in a normal CP. Table 4 represents the number of OFDM symbols per slot, the number of slots per radio frame, and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

[Table 4]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

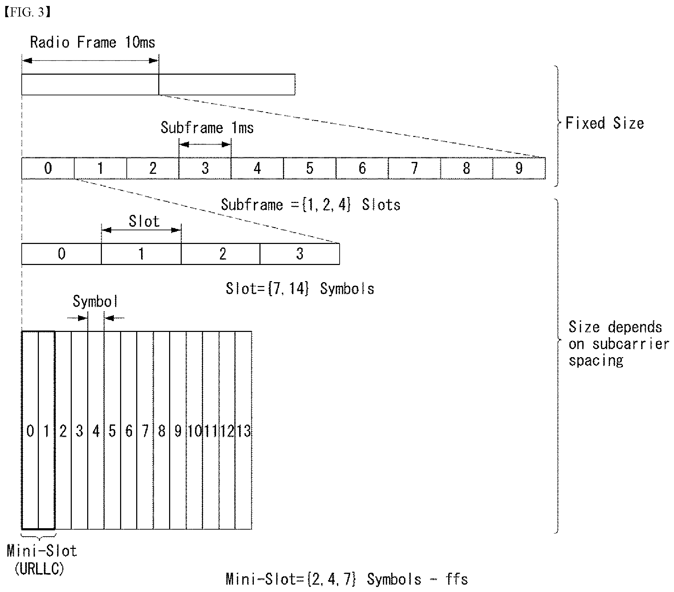

FIG. 3 illustrates an example of a frame structure in a NR system. FIG. 3 is merely for convenience of explanation and does not limit the scope of the present disclosure.

In Table 4, in case of $\mu$ =2, i.e., as an example in which a subcarrier spacing (SCS) is 60 kHz, one subframe (or frame) may include four slots with reference to Table 3, and one subframe = { 1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

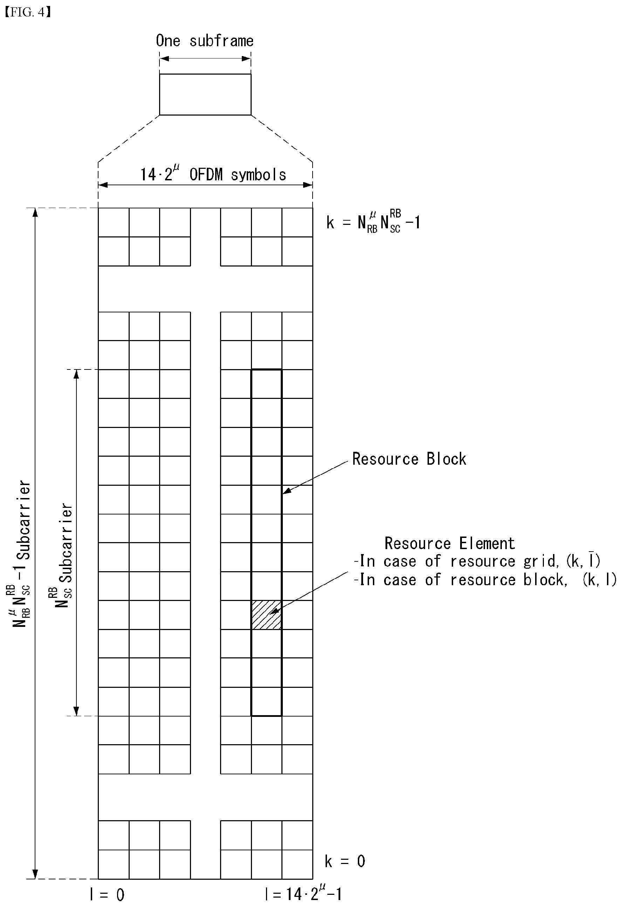

FIG. 4 illustrates an example of a resource grid supported in a wireless communication system to which a method proposed in the present disclosure is applicable.

Referring to FIG. 4, a resource grid consists of $N_{\text{RB}}^{\mu} N_{\text{sc}}^{\text{RB}}$ subcarriers on a frequency domain, each subframe consisting of $14 \cdot 2^\mu$ OFDM symbols, but the present disclosure is not limited thereto.

In the NR system, a transmitted signal is described by one or more resource grids, consisting of $N_{\text{RB}}^{\mu} N_{\text{sc}}^{\text{RB}}$ subcarriers, and $2^\mu N_{\text{symb}}^{(\mu)}$ OFDM symbols, where $N_{\text{RB}}^{\mu} \leq N_{\text{RB}}^{\max,\mu}$. $N_{\text{RB}}^{\max,\mu}$ denotes a maximum transmission bandwidth and may change not only between numerologies but also between uplink and downlink.

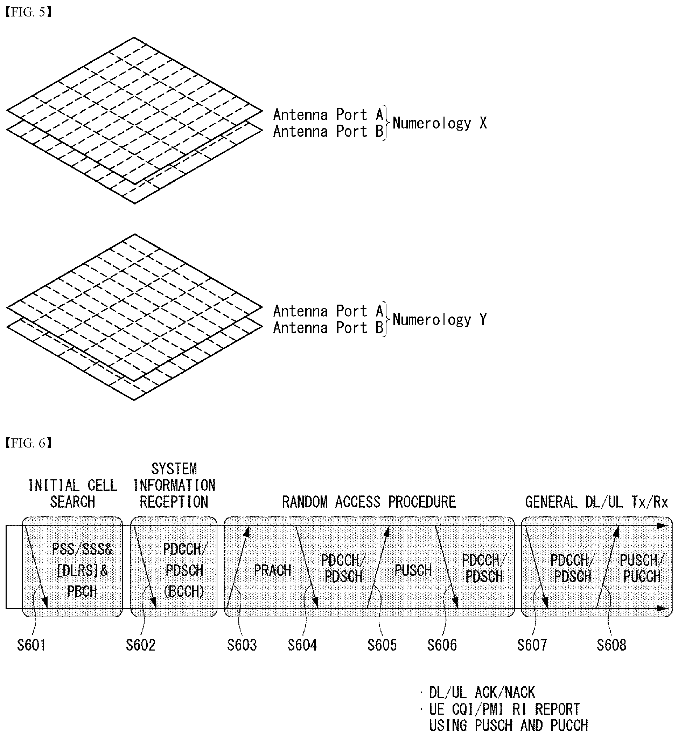

In this case, as illustrated in FIG. 5, one resource grid may be configured per numerology $\mu$ and antenna port p.

FIG. 5 illustrates examples of a resource grid per antenna port and numerology to which a method proposed in the present disclosure is applicable.

Each element of the resource grid for the numerology $\mu$ and the antenna port p is called a resource element and is uniquely identified by an index pair $(k,\bar{l})$, where $k = 0,..., N_{\text{RB}}^{\mu} N_{\text{sc}}^{\text{RB}} - 1$ is an index on a frequency domain, and $\bar{l} = 0,...,2^\mu N_{\text{symb}}^{(\mu)} - 1$ refers to a location of a symbol in a subframe. The index pair $(k,\bar{l})$ is used to refer to a resource element in a slot, where $l = 0,...,N_{\text{symb}}^{\mu} - 1$.

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indexes p and $\mu$ may be dropped, and as a result, the complex value may be $a_{k,\bar{l}}^{(p)}$ or $a_{k,\bar{l}}$.

Further, a physical resource block is defined as $N_{\text{sc}}^{\text{RB}} = 12$ consecutive subcarriers in the frequency domain.

Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN).

The common resource blocks are numbered from 0 and upwards in the frequency domain for subcarrier spacing configuration $\mu$.

The center of subcarrier 0 of common resource block 0 for the subcarrier spacing configuration $\mu$ coincides with 'point A'. A common resource block number $n_{\text{CRB}}^{\mu}$ in the frequency domain and resource elements (k,l) for the subcarrier spacing configuration $\mu$ may be given by the following Equation 1.

【Equation 1】

$$n_{\text{CRB}}^{\mu} = \left\lfloor \frac{k}{N_{\text{sc}}^{\text{RB}}} \right\rfloor$$

Here, $k$ may be defined relative to the point A so that $k = 0$ corresponds to a subcarrier centered around the point A.

Physical resource blocks are defined within a bandwidth part (BWP) and are numbered from 0 to $N_{\text{BWP},i}^{\text{size}} - 1$, where $i$ is No. Of the BWP. A relation between the physical resource block $n_{\text{PRB}}$ in BWP $i$ and the common resource block $n_{\text{CRB}}$ may be given by the following Equation 2.

【Equation 2】

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ may be the common resource block where the BWP starts relative to the common resource block 0.

Physical Channel and General Signal Transmission

FIG. 6 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S601). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S602).

Meanwhile, when there is no radio resource first accessing the eNB or for signal transmission, the UE may perform a Random Access Procedure (RACH) to the eNB (S603 to S606). To this end, the UE may transmit a specific sequence to a preamble through a Physical Random Access Channel (PRACH) (S603 and S605) and receive a response message (Random Access Response (RAR) message) for the preamble through the PDCCH and a corresponding PDSCH. In the case of a contention based RACH, a Contention Resolution Procedure may be additionally performed (S606).

The UE that performs the above procedure may then perform PDCCH/PDSCH reception (S607) and Physical Uplink Shared Channel (PUSCH)/Physical Uplink Control Channel (PUCCH) transmission (S608) as a general uplink/-downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

Hereinafter, matters related to the definition of TRP mentioned in the present specification will be described in detail.

The base station described in this disclosure may be a generic term for an object that transmits/receives data to and from UE. For example, the base station described herein may be a concept including one or more transmission points (TPs), one or more transmission and reception points (TRPs), and the like. For example, multiple TPs and/or multiple TRPs described herein may be included in one base station or included in multiple base stations. In addition, the TP and/or TRP may include a panel of a base station, a transmission and reception unit, and the like.

In addition, the TRP described in this disclosure means an antenna array having one or more antenna elements available in a network located at a specific geographical location in a specific area. Although this disclosure is described with respect to "TRP" for convenience of explanation, the TRP may be replaced with a base station, a transmission point (TP), a cell (e.g., a macro cell/small cell/pico cell, etc.), an antenna array, or a panel and understood and applied as such.

Hereinafter, matters related to positioning in a wireless communication system will be described in detail.

The following shows definitions of abbreviations used in relation to the above positioning.

5GS: 5G System
AoA: Angle of Arrival
AP: Access Point
BDS: BeiDou Navigation Satellite System

BSSID: Basic Service Set Identifier
CID: Cell-ID (positioning method)
E-SMLC: Enhanced Serving Mobile Location Centre
E-CID: Enhanced Cell-ID (positioning method)
ECEF: Earth-Centered, Earth-Fixed
ECI: Earth-Centered-Inertial
EGNOS: European Geostationary Navigation Overlay Service
E-UTRAN: Evolved Universal Terrestrial Radio Access Network
GAGAN: GPS Aided Geo Augmented Navigation
GLONASS: GLObal'nayaNAvigatsionnaya Sputnikovaya Sistema (Engl.: Global Navigation Satellite System)
GMLC: Gateway Mobile Location Center
GNSS: Global Navigation Satellite System
GPS: Global Positioning System
HESSID: Homogeneous Extended Service Set Identifier
LCS: LoCation Services
LMF: Location Management Function
LPP: LTE Positioning Protocol
MBS: Metropolitan Beacon System
MO-LR: Mobile Originated Location Request
MT-LR: Mobile Terminated Location Request
NG-C: NG Control plane
NG-AP: NG Application Protocol
NI-LR: Network Induced Location Request
NRPPa: NR Positioning Protocol A
OTDOA: Observed Time Difference Of Arrival
PDU: Protocol Data Unit
PRS: Positioning Reference Signal
QZSS: Quasi-Zenith Satellite System
RRM: Radio Resource Management
RSSI: Received Signal Strength Indicator
RSTD: Reference Signal Time Difference / Relative Signal Time Difference
SBAS: Space Based Augmentation System
SET: SUPL Enabled Terminal
SLP: SUPL Location Platform
SSID: Service Set Identifier
SUPL: Secure User Plane Location
TADV: Timing Advance
TBS: Terrestrial Beacon System
TOA: Time of Arrival
TP: Transmission Point (TRP : Transmission and Reception Point)
UE: User Equipment
WAAS: Wide Area Augmentation System
WGS-84: World Geodetic System 1984
WLAN: Wireless Local Area Network

Positioning

Positioning may mean determining the geographic location and / or speed of the UE by measuring a radio signal. The location information may be requested by a client (e.g. an application) related to the UE and reported to the client. In addition, the location information may be included in a core network or may be requested by a client connected to the core network. The location information may be reported in a standard format such as cell-based or geographic coordinates, and in this case, the estimation error values for the location(position) and speed of the UE and/or the positioning measurement method used for positioning may be reported together.

Positioning Protocol Configuration

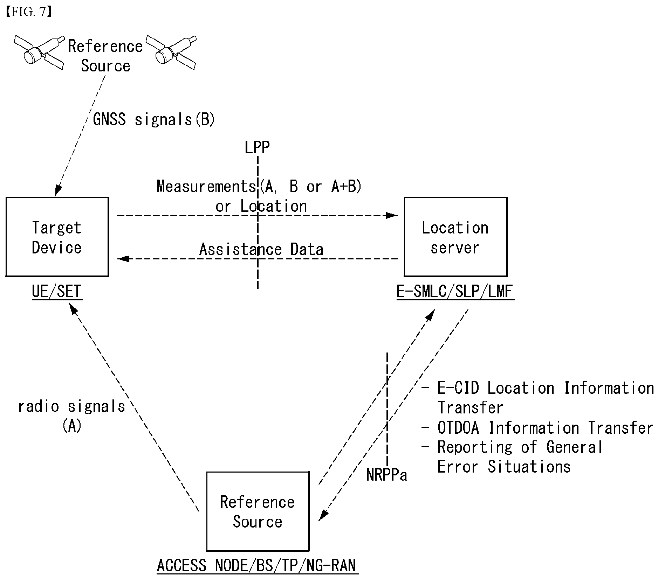

FIG. 7 illustrates an example of a positioning protocol configuration for measuring a location of a user equipment (UE).

Positioning Architecture

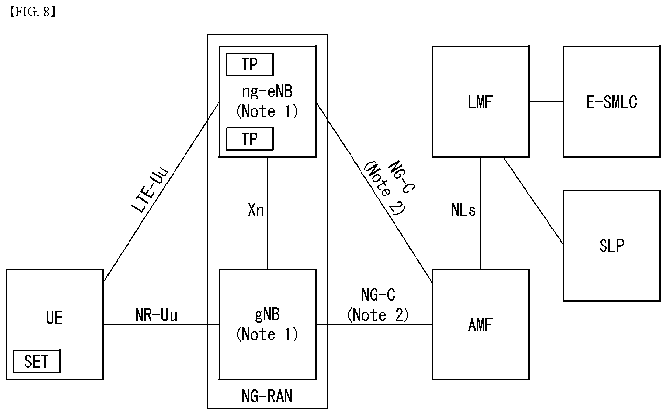

FIG. 8 illustrates an example of architecture of a system for measuring a location of a UE.

Referring to FIG. 8, the AMF (Core Access and Mobility Management Function) may receive a request for location service related to a specific target UE from another entity such as the GMLC (Gateway Mobile Location Center), or may decide to start the location service on behalf of the specific target UE in the AMF itself. Then, the AMF transmits a location service request to the LMF (Location Management Function). The LMF receiving the location service request may process the location service request and return a processing result including the estimated location of the UE to the AMF. On the other hand, based on the location service request being received from another entity such as the GMLC other than the AMF, the AMF may transmit the processing result received from the LMF to another entity.

New generation evolved-NB (ng-eNB) and gNB may be network elements of NG-RAN that can provide measurement results for location tracking, and measure a radio signal for the target UE and transmit the result to the LMF. In addition, the ng-eNB may control some TPs (Transmission Points), such as remote radio heads, or PRS-only TPs supporting a PRS-based beacon system for E-UTRA.

The LMF may be connected to an Enhanced Serving Mobile Location Center (E-SMLC), and the E-SMLC may enable the LMF to access the E-UTRAN. For example, the E-SMLC may enable the LMF to support Observed Time Difference Of Arrival (OTDOA) which is one of the E-UTRAN positioning measurement methods, based on the downlink measurement which is obtained by the target UE through a signal transmitted from TPs dedicated for PRS in the eNB and/or E-UTRAN.

Position Measurement Procedure

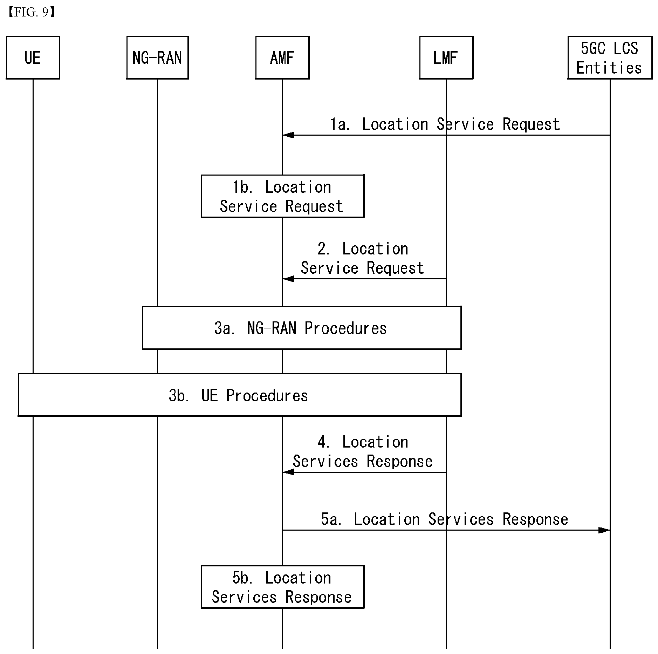

FIG. 9 illustrates an example of a procedure for measuring a location of a UE.

When the UE is in CM-IDLE (Connection Management - IDLE) state, when the AMF receives a location service request, the AMF may establish a signaling connection with the UE, and request a network trigger service to allocate a specific serving gNB or ng-eNB. This operation process is omitted in FIG. 9. That is, in FIG. 8, it may be assumed that the UE is in a connected mode. However, the signaling connection may be released during the positioning process by the NG-RAN for reasons such as signaling and data inactivity.

Looking at the operation process of the network for measuring the location of the UE in detail with reference to FIGS. 8 and 9, in step 1a, a 5GC entity such as GMLC may request a location service for measuring the location of a target UE with a serving AMF. However, even if the GMLC does not request the location service, based on step 1b, the serving AMF may determine that the location service is necessary for measuring the location of the target UE. For example, in order to measure the location of the UE for an emergency call, the serving AMF may decide to directly perform the location service.

Then, based on step 2, the AMF may send a location service request to the LMF, and based on step 3a, the LMF may initiate location procedures for obtaining location measurement data or location measurement assistance data together with the serving ng-eNB and the serving gNB. For example, the LMF may request location-related information related to one or more UEs to the NG-RAN, and instruct the type of location information required and the associated QoS. Then, in response to the request, the NG-RAN may transmit the location-related information to the LMF. In this case, based on the method for determining the location by the request being E-CID, the NG-RAN may transmit additional location-related information to the LMF through one or more NRPPa messages. Here, 'location-related information' may mean all values used for location calculation, such as actual location estimation information and wireless measurement or location measurement, etc. In addition, the protocol used in step 3a may be an NRPPa protocol, which will be described later.

Additionally, based on step 3b, the LMF may initiate location procedures for downlink positioning with the UE. For example, the LMF may send location assistance data to the UE, or obtain a location estimate or location measurement. For example, in step 3b, a capability transfer process may be performed. Specifically, the LMF may request capability information from the UE, and the UE may transmit capability information to the LMF. In this case, the capability information may include information on a location measurement method that the LFM or UE can support, information on various aspects of a specific location measurement method, such as various types of assistance data for A-GNSS, and information on common characteristics that are not limited to any one location measurement method, such as the ability to handle multiple LPP transactions, etc. Meanwhile, in some cases, even if the LMF does not request capability information from the UE, the UE may provide capability information to the LMF.

As another example, a location assistance data transfer process may be performed in step 3b. Specifically, the UE may request location assistance data from the LMF, and may indicate required specific location assistance data to the LMF. Then, the LMF may deliver location assistance data corresponding thereto to the UE, and additionally, may transmit additional assistance data to the UE through one or more additional LPP messages. On the other hand, location assistance data transmitted from the LMF to the UE may be transmitted through a unicast method, and in some cases, the LMF may transmit location assistance data and/or additional assistance data to the UE without the UE requesting assistance data from the LMF.

As another example, a location information transfer process may be performed in step 3b. Specifically, the LMF may request the UE for location-related information related to the UE, and may indicate the type of location information required and the associated QoS. Then, in response to the request, the UE may transmit the location related information to the LMF. In this case, the UE may additionally transmit additional location-related information to the LMF through one or more LPP messages. Here, 'location-related information' may mean all values used for location calculation, such as actual location estimation information and wireless measurement or location measurement, etc, and representatively, there may be a Reference Signal Time Difference (RSTD) value measured by the UE based on downlink reference signals transmitted from a plurality of NG-RAN and/or E-UTRAN to the UE. Similar to the above, the UE may transmit the location-related information to the LMF even if there is no request from the LMF.

On the other hand, the processes made in step 3b described above may be performed independently, but may be performed continuously. In general, step 3b is performed in the order of a capability transfer process, an assistance data transfer process, and a location information transfer process, but is not limited to this order. In other words, step 3b is not limited to a specific order in order to improve the flexibility of location measurement. For example, the UE may request location assistance data at any time to perform the location measurement request already requested by the LMF. In addition, if the location information delivered by the UE does not satisfy the QoS required, the LMF may also request location information, such as location measurements or location estimates, at any time. Similarly, when the UE does not perform measurement for location estimation, the UE may transmit capability information to the LMF at any time.

In addition, when an Error occurs in the information or request exchanged between the LMF and the UE in step 3b, an Error message may be transmitted/received, and an Abort message may be transmitted/received for stopping position measurement.

On the other hand, the protocol used in step 3b may be an LPP protocol, which will be described later.

Meanwhile, step 3b may be additionally performed after step 3a is performed, or may be performed instead of step 3a.

In step 4, the LMF may provide a location service response to the AMF. In addition, the location service response may include information on whether the location estimation of the UE was successful and the location estimate of the UE. After that, if the procedure of FIG. 9 is initiated by step 1a, the AMF may deliver a location service response to a 5GC entity such as GMLC, and if the procedure of FIG. 9 is initiated by step 1b, the AMF may use a location service response to provide a location service related to an emergency call or the like.

LTE Positioning Protocol (LPP)

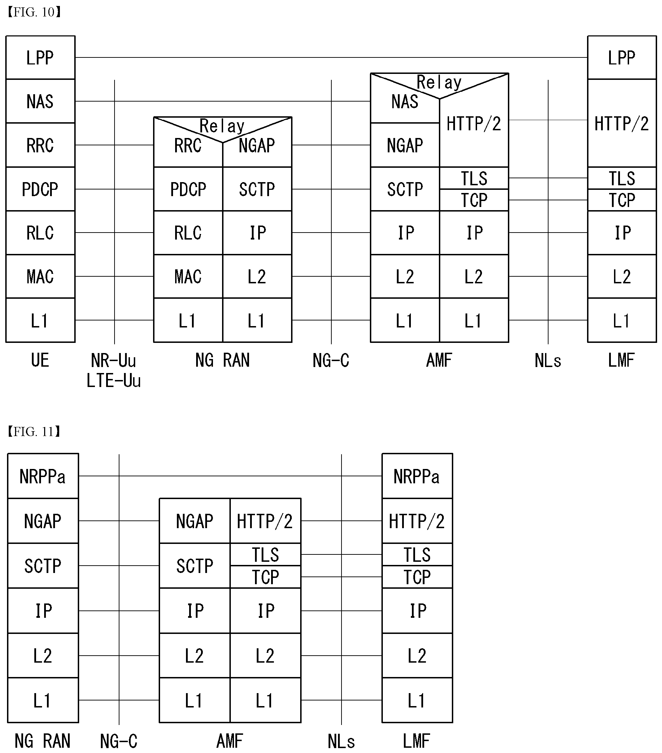

FIG. 10 illustrates an example of a protocol layer for supporting LPP message transmission.

Referring to FIG. 10, an LPP PDU may be transmitted through a NAS PDU between the MAF and the UE. The LPP may terminate a connection between a target device (e.g., UE in the control plane or SUPL Enabled Terminal (SET) in the user plane) and a location server (e.g. LMF in the control plane or SLP in the user plane). The LPP message may be delivered in the form of a transparent PDU through an intermediate network interface using an appropriate protocol such as NGAP through the NG-C interface, NAS/RRC through the LTE-Uu and NR-Uu interfaces. The LPP protocol enables positioning for NR and LTE based on various positioning methods.

For example, the target device and the location server may exchange capability information, assistance data for positioning, and/or location information with each other through the LPP protocol. In addition, error information exchange and/or an instruction to stop the LPP procedure may be performed through the LPP message.

LPP procedures for UE Positioning

A signal transmission/reception operation based on the LPP protocol to which the method proposed in the present disclosure can be applied may be performed based on Table 5 below.

[Table 5]

| |
|---|
| As described above, the protocol operates between a "target" and a "server". In the control-plane context, these entities are the UE and LMF respectively; in the SUPL context they are the SET and the SLP. A procedure may be initiated by either the target or the server.<br>1) Capability Transfer |

(continued)

Capabilities in an LPP context refer to the ability of a target or server to support different position methods defined for LPP, different aspects of a particular position method (e.g. different types of assistance data for A-GNSS) and common features not specific to only one position method (e.g. ability to handle multiple LPP transactions). These capabilities are defined within the LPP protocol and transferred between the target and the server using LPP transport.

The exchange of capabilities between a target and a server may be initiated by a request or sent as "unsolicited" information. If a request is used, the server sends an LPP Request Capabilities message to the target device with a request for capability information. The target sends an LPP Provide Capabilities message.

Example of LPP Capability Transfer procedure

1. The server may send a request for the LPP related capabilities of the target.

2. The target transfers its LPP-related capabilities to the server. The capabilities may refer to particular position methods or may be common to multiple position methods.

LPP Capability Indication procedure is used for unsolicited capability transfer.

2) Assistance data Transfer

Assistance data may be transferred either by request or unsolicited. In this version of the specification, assistance data delivery is supported only via unicast transport from server to target.

Example of LPP Assistance Data Transfer procedure

1. The target may send a request to the server for assistance data and may indicate the particular assistance data needed.

2.The server transfers assistance data to the target. The transferred assistance data should match any assistance data requested in step 1.

3. Optionally, the server may transfer additional assistance data to the target in one or more additional LPP messages.

LPP Assistance Data Delivery procedure is used for unilateral assistance data transfer. This procedure is unidirectional;

assistance data are always delivered from the server to the target.

3) Location Information Transfer

The term "location information" applies both to an actual position estimate and to values used in computing position (e.g., radio measurements or positioning measurements). It is delivered either in response to a request or unsolicited.

Example of LPP Location Information Transfer procedure

1. The server may send a request for location information to the target, and may indicate the type of location information needed and associated QoS.

2. In response to step 1, the target transfers location information to the server. The location information transferred should match the location information requested in step 1.

3. Optionally (e.g., if requested in step 1), the target in step 2 may transfer additional location information to the server in one or more additional LPP messages.

LPP Location Information Delivery procedure is used for unilateral location information transfer.

Furthermore, the LPP Location Information Delivery procedure can only be piggybacked in the MO-LR request.

4) Multiple Transactions

Multiple LPP transactions may be in progress simultaneously between the same target and server nodes, to improve flexibility and efficiency. However, no more than one LPP procedure between a particular pair of target and server nodes to obtain location information shall be in progress at any time for the same position method.

In this example, the objective is to request location measurements from the target, and the server does not provide assistance data in advance, leaving the target to request any needed assistance data.

Example of multiple LPP procedures

1. The server sends a request to the target for positioning measurements.

2. The target sends a request for particular assistance data.

3. The server returns the assistance data requested in step 2.

4. The target obtains and returns the location information (e.g., positioning method measurements) requested in step 1.

(continued)

| |
|---|
| 5) Error handling |
| The procedure is used to notify the sending endpoint by the receiving endpoint that the receiving LPP message is erroneous or unexpected. This procedure is bidirectional at the LPP level; either the target or the server may take the role of either endpoint in the corresponding procedure. |
| Example of Error handling procedure |
| 1. The target or server sends a LPP message to the other endpoint (i.e, "Server/Target"). |
| 2. If the server or target ("Server/Target") detects that the receiving LPP message is erroneous or unexpected, the |
| server or target transfers error indication information to the other endpoint ("Target/Server"). |
| 6) Abort |
| The procedure is used to notify the other endpoint by one endpoint to abort an ongoing procedure between the two endpoints. |
| This procedure is bidirectional at the LPP level; either the target or the server may take the role of either endpoint in the corresponding procedure. |
| Example of Abort procedure |
| 1. A LPP procedure is ongoing between target and server. |
| 2. If the server or target ("Server/Target") determines that the procedure must be aborted, and then the server or target sends an LPP Abort message to the other endpoint ("Target/Server") carrying the transaction ID for the procedure. |

NR Positioning Protocol A (NRPPa)

FIG. 11 illustrates an example of a protocol layer for supporting NRPPa transmission. Specifically, FIG. 11 illustrates a protocol layer for supporting transmission of an NRPPa PDU (NR Positioning Protocol a Protocol Data Unit).

The NRPPa may be used for information exchange between the NG-RAN node and the LMF. Specifically, the NRPPa may be used to exchange E-CID for measurement transmitted from ng-eNB to LMF, data for supporting the OTDOA positioning method, Cell-ID and Cell location ID for the NR Cell ID positioning method, and the like. The AMF may route NRPPa PDUs based on the routing ID of the associated LMF through the NG-C interface even if there is no information on the associated NRPPa transaction.

The procedure of the NRPPa protocol for location and data collection can be divided into two types. The first type is a UE associated procedure for delivering information on a specific UE (e.g., location measurement information, etc.), and the second type is a non-UE associated procedure for delivering information applicable to an NG-RAN node and related TPs (e.g., gNB/ng-eNG/TP timing information, etc.). The two types of procedures may be supported independently or at the same time.

NRPPa Procedure

A signal transmission/reception operation based on the NRPPa protocol to which the embodiments proposed in the present disclosure can be applied may be performed based on Table 6 below.

[Table 6]

| |
|---|
| Positioning and data acquisition transactions between a LMF and NG-RAN node are modelled by using procedures of the NRPPa protocol. There are two types of NRPPa procedures: |
| - UE associated procedure, i.e. transfer of information for a particular UE (e.g. positioning measurements); |
| - Non UE associated procedure, i.e. transfer of information applicable to the NG-RAN node and associated TPs (e.g. gNB/ng-eNB/TP timing information). |
| Parallel transactions between the same LMF and NG-RAN node are supported; i.e. a pair of LMF and NG-RAN node may have more than one instance of an NRPPa procedure in execution at the same time. |
| For possible extensibility, the protocol is considered to operate between a generic "access node" (e.g. ng-eNB) and a "server" (e.g. LMF). A procedure is only initiated by the server. |
| Example of a single NRPPa transaction |
| 1. Access Node sends NRPPa Procedure Request to Server. |
| 2. Server sends NRPPa Procedure Response to Acces Node. |
| N. Access Node sends NRPPa Procedure Response (end transaction) to Server. (this step may be omitted). |

(continued)

| The exmaple shows a single NRPPa transaction. The transaction is terminated in step 2 in the case of a non UE associated procedure. For a UE associated procedure to gather information concerning the access node, additional responses may be allowed (e.g. sending of updated information periodically and/or whenever there is some significant change). In this case, the |
| --- |
| transaction may be ended after some additional responses. In the NRPPa protocol, the described transaction may be realized by the execution of one procedure defined as a request and a response, followed by one or several procedures initiated by the NG-RAN node (each procedure defined as a single message) to realize the additional responses. An example of LPPa transaction type may be "Location Information Transfer". The term "location information" applies both to an actual position estimate and to values used in computing position (e.g., radio measurements or positioning measurements). It is delivered in response to a request. Example of Location information transfer 1. The server sends a request for location related information to the NG-RAN node, and indicates the type of location information needed and associated QoS. The request may refer to a particular UE. 2. In response to step 1, the NG-RAN Node transfers location related information to the server. The location related information transferred should match the location related information requested in step 1. 3. If requested in step 1, the NG-RAN node may transfer additional location related information to the server in one or more additional NRPPa messages when the positioning method is E-CID for E-UTRA. |

In the present disclosure, a message exchanged (transmitted and received) between a UE (a target device)/-location server for positioning and a configuration related to the message may be based on Table 7 below.

【Table 7】

```
RequestCapabilities

The RequestCapabilities message body in a LPP message is used by the location server to request the target device capability

information for LPP and the supported individual positioning methods.

-- ASN1START

RequestCapabilities ::= SEQUENCE {
        criticalExtensions              CHOICE {
                c1                                                      CHOICE {
                        requestCapabilities-r9          RequestCapabilities-r9-IEs,
                        spare3 NULL, spare2 NULL, spare1 NULL

                },
                criticalExtensionsFuture        SEQUENCE {}
        }
}


RequestCapabilities-r9-IEs ::= SEQUENCE {
        commonIEsRequestCapabilities            CommonIEsRequestCapabilities            OPTIONAL,        --
Need ON
        a-gnss-RequestCapabilities                      A-GNSS-RequestCapabilities
        OPTIONAL,             -- Need ON
        otdoa-RequestCapabilities                       OTDOA-RequestCapabilities
        OPTIONAL,             -- Need ON
        ecid-RequestCapabilities                        ECID-RequestCapabilities
        OPTIONAL,             -- Need ON
        epdu-RequestCapabilities                        EPDU-Sequence
                OPTIONAL,             -- Need ON
        ...,
        [[              sensor-RequestCapabilities-r13  Sensor-RequestCapabilities-r13          OPTIONAL,         --
```

```
Need ON
                tbs-RequestCapabilities-r13            TBS-RequestCapabilities-r13
        OPTIONAL,            -- Need ON
                wlan-RequestCapabilities-r13    WLAN-RequestCapabilities-r13            OPTIONAL,            --
Need ON
                bt-RequestCapabilities-r13            BT-RequestCapabilities-r13
        OPTIONAL            -- Need ON
        ]],
        [[          nr-ECID-RequestCapabilities-r16          NR-ECID-RequestCapabilities-r16
        OPTIONAL,            -- Need ON
                nr-Multi-RTT-RequestCapabilities-r16
                                                                NR-Multi-
RTT-RequestCapabilities-r16

                                                        OPTIONAL,          -- Need ON
                nr-DL-AoD-RequestCapabilities-r16
                                                                NR-DL-AoD-
RequestCapabilities-r16            OPTIONAL,            -- Need ON
                nr-DL-TDOA-RequestCapabilities-r16
                                                                NR-DL-
TDOA-RequestCapabilities-r16  OPTIONAL,            -- Need ON
                nr-UL-RequestCapabilities-r16            NR-UL-RequestCapabilities-r16 OPTIONAL        --
Need ON
        ]]
}

-- ASN1STOP
```

```
ProvideCapabilities
```

The ProvideCapabilities message body in a LPP message indicates the LPP capabilities of the target device to the location server.

```
-- ASN1START

ProvideCapabilities ::= SEQUENCE {
        criticalExtensions            CHOICE {
                c1                                              CHOICE {
                        provideCapabilities-r9            ProvideCapabilities-r9-IEs,
                        spare3 NULL, spare2 NULL, spare1 NULL
                },
                criticalExtensionsFuture        SEQUENCE {}
        }
}
```

```
ProvideCapabilities-r9-IEs ::= SEQUENCE {
        commonIEsProvideCapabilities        CommonIEsProvideCapabilities            OPTIONAL,
        a-gnss-ProvideCapabilities          A-GNSS-ProvideCapabilities
        OPTIONAL,
        otdoa-ProvideCapabilities           OTDOA-ProvideCapabilities
        OPTIONAL,
        ecid-ProvideCapabilities            ECID-ProvideCapabilities
        OPTIONAL,
        epdu-ProvideCapabilities            EPDU-Sequence
                    OPTIONAL,
        ...,
        [[      sensor-ProvideCapabilities-r13  Sensor-ProvideCapabilities-r13      OPTIONAL,
                tbs-ProvideCapabilities-r13     TBS-ProvideCapabilities-r13
        OPTIONAL,
                wlan-ProvideCapabilities-r13    WLAN-ProvideCapabilities-r13        OPTIONAL,
                bt-ProvideCapabilities-r13      BT-ProvideCapabilities-r13
        OPTIONAL
        ]],
        [[      nr-ECID-ProvideCapabilities-r16     NR-ECID-ProvideCapabilities-r16
        OPTIONAL,
                nr-Multi-RTT-ProvideCapabilities-r16
                                                                    NR-Multi-
RTT-ProvideCapabilities-r16     OPTIONAL,
                nr-DL-AoD-ProvideCapabilities-r16
                                                                    NR-DL-AoD-
ProvideCapabilities-r16                 OPTIONAL,
                nr-DL-TDOA-ProvideCapabilities-r16
                                                                    NR-DL-
TDOA-ProvideCapabilities-r16           OPTIONAL,
                nr-UL-ProvideCapabilities-r16   NR-UL-ProvideCapabilities-r16       OPTIONAL
        ]]
}

-- ASN1STOP
```

```
RequestAssistanceData
The RequestAssistanceData message body in a LPP message is used by the target device to request assistance data from the
location server.
-- ASN1START

RequestAssistanceData ::= SEQUENCE {
        criticalExtensions              CHOICE {
                    c1                                                      CHOICE {
```

```
                        requestAssistanceData-r9          RequestAssistanceData-r9-IEs,
                        spare3 NULL, spare2 NULL, spare1 NULL
                }
                criticalExtensionsFuture          SEQUENCE {}
        }
}


RequestAssistanceData-r9-IEs ::= SEQUENCE {
        commonIEsRequestAssistanceData                    CommonIEsRequestAssistanceData
        OPTIONAL,
        a-gnss-RequestAssistanceData          A-GNSS-RequestAssistanceData          OPTIONAL,
        otdoa-RequestAssistanceData                    OTDOA-RequestAssistanceData
        OPTIONAL,
        epdu-RequestAssistanceData                    EPDU-Sequence
                OPTIONAL,
        ...,
        [[        sensor-RequestAssistanceData-r14

                                                                          Sensor-
RequestAssistanceData-r14          OPTIONAL,
                tbs-RequestAssistanceData-r14  TBS-RequestAssistanceData-r14          OPTIONAL,
                wlan-RequestAssistanceData-r14WLAN-RequestAssistanceData-r14                OPTIONAL
        ]],
        [[        nr-Multi-RTT-RequestAssistanceData-r16  NR-Multi-RTT-RequestAssistanceData-r16 OPTIONAL,
                nr-DL-AoD-RequestAssistanceData-r16                NR-DL-AoD-RequestAssistanceData-r16
        OPTIONAL,
                nr-DL-TDOA-RequestAssistanceData-r16  NR-DL-TDOA-RequestAssistanceData-r16 OPTIONAL
        ]]
}


-- ASN1STOP


ProvideAssistanceData
```

The ProvideAssistanceData message body in a LPP message is used by the location server to provide assistance data to the target device either in response to a request from the target device or in an unsolicited manner.

```
-- ASN1START


ProvideAssistanceData ::= SEQUENCE {
        criticalExtensions                CHOICE {
                c1                                                        CHOICE {
                        provideAssistanceData-r9          ProvideAssistanceData-r9-IEs,
```

```
spare3 NULL, spare2 NULL, spare1 NULL
                },
```

```
                criticalExtensionsFuture        SEQUENCE {}
            }
    }


ProvideAssistanceData-r9-IEs ::= SEQUENCE {
        commonIEsProvideAssistanceData              CommonIEsProvideAssistanceData
        OPTIONAL,           -- Need ON
        a-gnss-ProvideAssistanceData        A-GNSS-ProvideAssistanceData        OPTIONAL,        --
Need ON
        otdoa-ProvideAssistanceData             OTDOA-ProvideAssistanceData
        OPTIONAL,           -- Need ON
        epdu-Provide-Assistance-Data        EPDU-Sequence
        OPTIONAL,           -- Need ON
        ...,
        [[
        sensor-ProvideAssistanceData-r14        Sensor-ProvideAssistanceData-r14        OPTIONAL,        --
Need ON
        tbs-ProvideAssistanceData-r14       TBS-ProvideAssistanceData-r14       OPTIONAL,        --
Need ON
        wlan-ProvideAssistanceData-r14      WLAN-ProvideAssistanceData-r14              OPTIONAL
        -- Need ON
        ]],
        [[      nr-Multi-RTT-ProvideAssistanceData-r16
                                                                    NR-Multi-
RTT-ProvideAssistanceData-r16

                                                    OPTIONAL,       -- Need ON
                nr-DL-AoD-ProvideAssistanceData-r16
                                                                    NR-DL-AoD-
ProvideAssistanceData-r16       OPTIONAL,       -- Need ON
                nr-DL-TDOA-ProvideAssistanceData-r16
                                                                    NR-DL-
TDOA-ProvideAssistanceData-r16

                                                    OPTIONAL        -- Need ON
        ]]
    }


-- ASN1STOP
```

| ProvideAssistanceData field descriptions |
| --- |
| commonIEsProvideAssistanceData |
| This IE is provided for future extensibility and should not be included in this version of the protocol. |

```
RequestLocationInformation

The RequestLocationInformation message body in a LPP message is used by the location server to request positioning
measurements or a position estimate from the target device.

-- ASN1START


RequestLocationInformation ::= SEQUENCE {
```

```
        criticalExtensions              CHOICE {
                c1                                              CHOICE {
                        requestLocationInformation-r9   RequestLocationInformation-r9-IEs,
                        spare3 NULL, spare2 NULL, spare1 NULL
                },
                criticalExtensionsFuture        SEQUENCE {}
        }
}


RequestLocationInformation-r9-IEs ::= SEQUENCE {
        commonIEsRequestLocationInformation

        CommonIEsRequestLocationInformation    OPTIONAL,         -- Need ON
        a-gnss-RequestLocationInformation              A-GNSS-RequestLocationInformation       OPTIONAL,       --
Need ON
        otdoa-RequestLocationInformation               OTDOA-RequestLocationInformation        OPTIONAL,       --
Need ON
        ecid-RequestLocationInformation                         ECID-RequestLocationInformation
        OPTIONAL,               -- Need ON
        epdu-RequestLocationInformation                         EPDU-Sequence
                OPTIONAL,               -- Need ON
        ...,
        [[
        sensor-RequestLocationInformation-r13
                                                                                                Sensor-
RequestLocationInformation-r13


                                                                        OPTIONAL,               -- Need ON
        tbs-RequestLocationInformation-r13     TBS-RequestLocationInformation-r13      OPTIONAL,       --
Need ON
        wlan-RequestLocationInformation-r13    WLAN-RequestLocationInformation-r13    OPTIONAL,       --
Need ON
        bt-RequestLocationInformation-r13      BT-RequestLocationInformation-r13       OPTIONAL        --
Need ON
        ]],
```

```
            [[              nr-ECID-RequestLocationInformation-r16

                                                                    NR-ECID-
RequestLocationInformation-r16

                                                                    OPTIONAL,        -- Need ON
                        nr-Multi-RTT-RequestLocationInformation-r16

                                                                    NR-Multi-
RTT-RequestLocationInformation-r16

                                                                    OPTIONAL,        -- Need ON
                        nr-DL-AoD-RequestLocationInformation-r16

                                                                    NR-DL-AoD-
RequestLocationInformation-r16

                                                                    OPTIONAL,        -- Need ON
                        nr-DL-TDOA-RequestLocationInformation-r16

                                                                    NR-DL-
TDOA-RequestLocationInformation-r16
```

```
                    OPTIONAL        -- Need ON
        ]]
}

-- ASN1STOP
```

| RequestLocationInformation field descriptions |
| --- |
| commonIEsRequestLocationInformation |
| This field specifies the location information type requested by the location server and optionally other configuration information associated with the requested location information. This field should always be included in this version of the protocol. |

ProvideLocationInformation

The ProvideLocationInformation message body in a LPP message is used by the target device to provide positioning measurements or position estimates to the location server.

-- ASN1START

```
ProvideLocationInformation ::= SEQUENCE {
        criticalExtensions              CHOICE {
                c1                                                      CHOICE {
                        provideLocationInformation-r9   ProvideLocationInformation-r9-IEs,
                        spare3 NULL, spare2 NULL, spare1 NULL
                },
                criticalExtensionsFuture        SEQUENCE {}
```

```
            }
}

ProvideLocationInformation-r9-IEs ::= SEQUENCE {
        commonIEsProvideLocationInformation

        CommonIEsProvideLocationInformation    OPTIONAL,
        a-gnss-ProvideLocationInformation      A-GNSS-ProvideLocationInformation    OPTIONAL,
        otdoa-ProvideLocationInformation       OTDOA-ProvideLocationInformation     OPTIONAL,
        ecid-ProvideLocationInformation                ECID-ProvideLocationInformation
        OPTIONAL,
        epdu-ProvideLocationInformation                EPDU-Sequence
                OPTIONAL,
        ...,
        [[
        sensor-ProvideLocationInformation-r13
                                                                                Sensor-
ProvideLocationInformation-r13

                                                                OPTIONAL,
        tbs-ProvideLocationInformation-r13     TBS-ProvideLocationInformation-r13   OPTIONAL,
        wlan-ProvideLocationInformation-r13    WLAN-ProvideLocationInformation-r13  OPTIONAL,
        bt-ProvideLocationInformation-r13      BT-ProvideLocationInformation-r13    OPTIONAL
        ]],
        [[      nr-ECID-ProvideLocationInformation-r16
                                                                NR-ECID-
ProvideLocationInformation-r16         OPTIONAL,
                nr-Multi-RTT-ProvideLocationInformation-r16
```

```
                                                                NR-Multi-RTT-
ProvideLocationInformation-r16 OPTIONAL,
                nr-DL-AoD-ProvideLocationInformation-r16
                                                                NR-DL-AoD-
ProvideLocationInformation-r16 OPTIONAL,
                nr-DL-TDOA-ProvideLocationInformation-r16
                                                                NR-DL-TDOA-
ProvideLocationInformation-r16 OPTIONAL
        ]]
}

-- ASN1STOP
```

```
-- ASN1START

OTDOA-SignalMeasurementInformation ::= SEQUENCE {
        systemFrameNumber            BIT STRING (SIZE (10)),
        physCellIdRef                        INTEGER (0..503),
        cellGlobalIdRef                      ECGI                            OPTIONAL,
        earfcnRef                            ARFCN-ValueEUTRA        OPTIONAL,
        -- Cond NotSameAsRef0
        referenceQuality             OTDOA-MeasQuality              OPTIONAL,
        neighbourMeasurementList     NeighbourMeasurementList,

        ...,
        [[ earfcnRef-v9a0            ARFCN-ValueEUTRA-v9a0    OPTIONAL            --       Cond
NotSameAsRef1
        ]],
        [[ tpIdRef-r14                       INTEGER (0..4095)         OPTIONAL,          --
Cond ProvidedByServer0
                prsIdRef-r14                 INTEGER (0..4095)         OPTIONAL,          --
Cond ProvidedByServer1
                additionalPathsRef-r14

                                                     AdditionalPathList-r14      OPTIONAL,
                nprsIdRef-r14                INTEGER (0..4095)         OPTIONAL,          --
Cond ProvidedByServer2
                carrierFreqOffsetNB-Ref-r14

                                                     CarrierFreqOffsetNB-r14     OPTIONAL,
        -- Cond NB-IoT
                hyperSFN-r14                 BIT STRING (SIZE (10))    OPTIONAL           --
Cond H-SFN
        ]],
        [[
                motionTimeSource-r15                 MotionTimeSource-r15        OPTIONAL
        ]]
}

NeighbourMeasurementList ::= SEQUENCE (SIZE(1..24)) OF NeighbourMeasurementElement

NeighbourMeasurementElement ::= SEQUENCE {
        physCellIdNeighbour          INTEGER (0..503),
        cellGlobalIdNeighbour        ECGI                            OPTIONAL,
        earfcnNeighbour                      ARFCN-ValueEUTRA        OPTIONAL,
        -- Cond NotSameAsRef2
```

```
        rstd                                         INTEGER (0..12711),
        rstd-Quality                         OTDOA-MeasQuality,
```

```
                ...,
        [[ earfcnNeighbour-v9a0        ARFCN-ValueEUTRA-v9a0      OPTIONAL               --      Cond
NotSameAsRef3
        ]],
        [[ tpIdNeighbour-r14 INTEGER (0..4095)             OPTIONAL,               --      Cond
ProvidedByServer0
                prsIdNeighbour-r14   INTEGER (0..4095)             OPTIONAL,        --      Cond
ProvidedByServer1
                delta-rstd-r14              INTEGER (0..5)                   OPTIONAL,
                additionalPathsNeighbour-r14
                                                AdditionalPathList-r14        OPTIONAL,
                nprsIdNeighbour-r14 INTEGER (0..4095)             OPTIONAL,        --      Cond
ProvidedByServer2
                carrierFreqOffsetNB-Neighbour-r14
                                                CarrierFreqOffsetNB-r14       OPTIONAL
                -- Cond NB-IoT
        ]],
        [[
                delta-SFN-r15                      INTEGER (-8192..8191)       OPTIONAL
        ]]
}


AdditionalPathList-r14 ::= SEQUENCE (SIZE(1..maxPaths-r14)) OF AdditionalPath-r14


maxPaths-r14        INTEGER ::= 2


MotionTimeSource-r15 ::= SEQUENCE {
        timeSource-r15                          ENUMERATED {servingCell, referenceCell, gnss, mixed,

        other, none, ...}
}


-- ASN1STOP


-- ASN1START


ECID-SignalMeasurementInformation ::= SEQUENCE {
        primaryCellMeasuredResults   MeasuredResultsElement       OPTIONAL,
        measuredResultsList                  MeasuredResultsList,
        ...
}


MeasuredResultsList ::= SEQUENCE (SIZE(1..32)) OF MeasuredResultsElement
```

```
MeasuredResultsElement ::= SEQUENCE {
        physCellId                                  INTEGER (0..503),
        cellGlobalId                                CellGlobalIdEUTRA-AndUTRAOPTIONAL,
        arfcnEUTRA                                  ARFCN-ValueEUTRA,
        systemFrameNumber              BIT STRING (SIZE (10))
```

```
        OPTIONAL,
        rsrp-Result                                 INTEGER (0..97)
        OPTIONAL,
        rsrq-Result                                 INTEGER (0..34)
        OPTIONAL,
        ue-RxTxTimeDiff                             INTEGER (0..4095)
        OPTIONAL,
        ...,
        [[        arfcnEUTRA-v9a0                    ARFCN-ValueEUTRA-v9a0
        OPTIONAL                    -- Cond EARFCN-max
        ]],
        [[        nrsrp-Result-r14         INTEGER (0..113)                OPTIONAL,
                  nrsrq-Result-r14         INTEGER (0..74)
        OPTIONAL,
                  carrierFreqOffsetNB-r14  CarrierFreqOffsetNB-r14         OPTIONAL,
                  -- Cond NB-IoT
                  hyperSFN-r14                       BIT STRING (SIZE (10))
        OPTIONAL
        ]],
        [[
                  rsrp-Result-v1470        INTEGER (-17..-1)               OPTIONAL,
                  rsrq-Result-v1470        INTEGER (-30..46)               OPTIONAL
        ]]
}


-- ASN1STOP


-- ASN1START


NR-DL-TDOA-SignalMeasurementInformation-r16 ::= SEQUENCE {
        dl-PRS-ReferenceInfo-r16         DL-PRS-IdInfo-r16,
        nr-DL-TDOA-MeasList-r16      NR-DL-TDOA-MeasList-r16,
        ...
}


NR-DL-TDOA-MeasList-r16 ::= SEQUENCE (SIZE(1.. nrMaxTRPs)) OF NR-DL-TDOA-MeasElement-r16
```

```
NR-DL-TDOA-MeasElement-r16 ::= SEQUENCE {
        trp-ID-r16                                          TRP-ID-r16
OPTIONAL,
        nr-DL-PRS-ResourceId-r16          NR-DL-PRS-ResourceId-r16      OPTIONAL,
        nr-DL-PRS-ResourceSetId-r16       NR-DL-PRS-ResourceSetId-r16 OPTIONAL,
        nr-TimeStamp-r16                          NR-TimeStamp-r16,
        nr-RSTD-r16                                          INTEGER (0..ffs),    -- FFS on the
value range
        nr-AdditionalPathList-r16         NR-AdditionalPathList-r16              OPTIONAL,
        nr-TimingMeasQuality-r16                         NR-TimingMeasQuality-r16,
        nr-PRS-RSRP-Result-r16            INTEGER (FFS)                      OPTIONAL,
```

```
-- FFS, value range to be decided in RAN4.
        nr-DL-TDOA-AdditionalMeasurements-r16                  NR-DL-TDOA-
AdditionalMeasurements-r16,
        ...
}
NR-DL-TDOA-AdditionalMeasurements-r16      ::=    SEQUENCE    (SIZE    (1..3))    OF    NR-DL-TDOA-
AdditionalMeasurementElement-r16


NR-AdditionalPathList-r16 ::= SEQUENCE (SIZE(1..2)) OF NR-AdditionalPath-r16


NR-DL-TDOA-AdditionalMeasurementElement-r16 ::= SEQUENCE {
        nr-DL-PRS-ResourceId-r16                 NR-DL-PRS-ResourceId-r16      OPTIONAL,
        nr-DL-PRS-ResourceSetId-r16       NR-DL-PRS-ResourceSetId-r16 OPTIONAL,
        nr-TimeStamp-r16                         NR-TimeStamp-r16,
        nr-RSTD-ResultDiff-r16                   INTEGER (0..ffs),    -- FFS on the value range to be
decided in RAN4
        dl-PRS-RSRP-ResultDiff-r16    INTEGER (FFS)                 OPTIONAL, -- FFS on the value range       to
be decided in RAN4
        nr-AdditionalPathList-r16         NR-AdditionalPathList-r16              OPTIONAL,
...
}


nrMaxTRPs                    INTEGER ::= 256              -- Max TRPs per UE


-- ASN1STOP


-- ASN1START


NR-DL-AoD-SignalMeasurementInformation-r16 ::= SEQUENCE {
        nr-DL-AoD-MeasList-r16                   NR-DL-AoD-MeasList-r16,
```

```
                ...
        }
        NR-DL-AoD-MeasList-r16 ::= SEQUENCE (SIZE(1..nrMaxTRPs)) OF NR-DL-AoD-MeasElement-r16

        NR-DL-AoD-MeasElement-r16 ::= SEQUENCE {
                trp-ID-r16                                              TRP-ID-r16
                OPTIONAL,
                nr-DL-PRS-ResourceId-r16              NR-DL-PRS-ResourceId-r16       OPTIONAL,
                nr-DL-PRS-ResourceSetId-r16          NR-DL-PRS-ResourceSetId-r16 OPTIONAL,
                nr-TimeStamp-r16                                 NR-TimeStamp-r16,
                nr-PRS-RSRP-Result-r16                           INTEGER (FFS)
                OPTIONAL, -- Need RAN4 inputs on value range
                nr-DL-PRS-RxBeamIndex-r16            INTEGER (1..8),
                nr-TimingMeasQuality-r16                         NR-TimingMeasQuality-r16,
                nr-DL-Aod-AdditionalMeasurements-r16      NR-DL-AoD-AdditionalMeasurements-r16,
                ...
        }

        NR-DL-AoD-AdditionalMeasurements-r16 ::= SEQUENCE (SIZE (1..7)) OF NR-DL-AoD-
```

```
        AdditionalMeasurementElement-r16

        NR-DL-AoD-MeasurementElement-r16 ::= SEQUENCE {
                nr-DL-PRS-ResourceId-r16              NR-DL-PRS-ResourceId-r16       OPTIONAL,
                nr-DL-PRS-ResourceSetId-r16          NR-DL-PRS-ResourceSetId-r16 OPTIONAL,
                nr-TimeStamp-r16                                 NR-TimeStamp-r16,
                nr-PRS-RSRP-ResultDiff-r16           INTEGER (FFS)
                OPTIONAL, -- Need RAN4 inputs on value range
                nr-DL-PRS-RxBeamIndex-r16            INTEGER (1..8),
                ...
        }

        nrMaxTRPs                  INTEGER ::= 256          -- Max TRPs

        -- ASN1STOP

        –       NR-TimeStamp
        The IE NR-TimeStamp defines the UE measurement associated time stamp.
        -- ASN1START

        NR-TimeStamp-r16 ::= SEQUENCE {
                dl-PRS-ID-r16                        INTEGER (0..255),
                nr-PhysCellID-r16                    NR-PhysCellID-r16                    OPTIONAL,
```

```
-- Need ON
nr-CellGlobalID-r16                    NCGI-r15
OPTIONAL,        -- Need ON
nr-ARFCN-r16                                    ARFCN-ValueNR-r15
OPTIONAL,        -- Cond NotSameAsRefServ
nr-SFN-r16                                              INTEGER (0..1023),
nr-Slot-r16                            CHOICE {
              scs15-r16                            INTEGER (0..9),
              scs30-r16                            INTEGER (0..19),
              scs60-r16                            INTEGER (0..39),
              scs120-r16                           INTEGER (0..79)
       },
       ...
}

-- ASN1STOP
```

| Conditional presence | Explanation |
|---|---|
| NotSameAsRefServ0 | The field is mandatory present if the SFN is not from the reference TRP; otherwise it is not present. |

Positioning Measurement Method

The positioning measurement methods supported by NG-RAN may include GNSS, OTDOA, E-CID (enhanced cell ID), Multi RTT (round trip time)/Multi-cell RTT, barometric pressure sensor positioning, WLAN positioning, Bluetooth positioning, and TBS (terrestrial beacon system), UTDOA (Uplink Time Difference of Arrival), etc. Among the positioning measurement methods, any one positioning measurement method may be used to measure the location of the UE, but two or more positioning measurement methods may be used to measure the location of the UE.

Sounding Procedure for positioning purpose

sounding procedure for positioning the UE in an NR system to which various embodiments of the present disclosure are applicable may be based on Table 8 below.

[Table 8]

| 6.2.1.4 UE sounding procedure for positioning purposes |
|---|
| When the SRS is configured by the higher layer parameter SRS-PosResource and if the higher layer parameter spatialRelationInfoPos is configured, it contains the ID of the configuration fields of a reference RS according to Clause 6.3.2 of [TS 38.331]. The reference RS can be an SRS configured by the higher layer parameter SRS-Resource or SRS-PosResource, CSI-RS, SS/PBCH block, or a DL PRS configured on a serving cell or a SS/PBCH block or a DL PRS configured on a non-serving cell. If the UE is configured for transmission of SRS-PosResource in RRC_INACTIVE mode, the configured spatialRelationInfoPos is also applicable. The UE is not expected to transmit multiple SRS resources with different spatial relations in the same OFDM symbol. If the UE is not configured with the higher layer parameter spatialRelationInfoPos the UE may use a fixed spatial domain transmission filter for transmissions of the SRS configured by the higher layer parameter SRS-PosResource across multiple SRS resources or it may use a different spatial domain transmission filter across multiple SRS resources. In RRC_CONNECTED mode, the UE is only expected to transmit an SRS configured by the higher layer parameter SRS- |

(continued)

| PosResource within the active UL BWP of the UE.<br>When the configuration of SRS is done by the higher layer parameter SRS-PosResource, the UE can only be provided with a single RS source in spatialRelationInfoPos per SRS resource for positioning.<br>For operation on the same carrier, if an SRS configured by the higher parameter SRS-PosResource collides with a scheduled PUSCH, the SRS is dropped in the symbols where the collision occurs. |
| --- |

Triggering Sounding Procedure for positioning purpose

For example, the sounding procedure may be triggered by the SRS request field included in DCI format 0_1. A more specific DCI format configuration may be based on Table 9 below.

【Table 9】

| 7.3.1.1.2 Format 0_1<br><br>DCI format 0_1 is used for the scheduling of one or multiple PUSCH in one cell, or indicating CG downlink feedback informatin (CG-DFI) to a UE.<br><br>If DCI format 0_1 is used for the scheduling of one or multiple PUSCH in one cell or activating type 2 CG transmission, all the remaining fileds are set as follows:<br><br>- SRS request – 2 bits as defined by Table 7.3.1.1.2-24 for UEs not configured with supplementaryUplink in ServingCellConfig in the cell; 3 bits for UEs configured with supplementaryUplink in ServingCellConfig in the cell where the first bit is the non-SUL/SUL indicator as defined in Table 7.3.1.1.1-1 [TS 38.212] and the second and third bits are defined by Table 7.3.1.1.2-24. This bit field may also indicate the associated CSI-RS according to Clause 6.1.1.2 of [6, TS 38.214].<br>Table 7.3.1.1.2-24: SRS request |
| --- |

| Value of SRS request field | Triggered aperiodic SRS resource set(s) for DCI format 0_1, 0_2, 1_1, 1_2, and 2_3 configured with higher layer parameter srs-TPC-PDCCH-Group set to 'typeB' | Triggered aperiodic SRS resource set(s) for DCI format 2_3 configured with higher layer parameter srs-TPC-PDCCH-Group set to 'typeA' |
| --- | --- | --- |
| 00 | No aperiodic SRS resource set triggered | No aperiodic SRS resource set triggered |
| 01 | SRS resource set(s) configured with higher layer parameter aperiodicSRS-ResourceTrigger set to 1 or an entry in aperiodicSRS-ResourceTriggerList set to 1 | SRS resource set(s) configured with higher layer parameter usage in SRS-ResourceSet set to 'antennaSwitching' and resourceType in SRS-ResourceSet set to 'aperiodic' for a 1st set of serving cells configured by higher layers, or<br><br>SRS resource set(s) configured by [SRS-ResourceSetForPositioning] and resourceType in [SRS-ResourceSetForPositioning] set to 'aperiodic' for a 1st set of serving cells configured by higher layers |
| 10 | SRS resource set(s) configured with higher layer parameter aperiodicSRS-ResourceTrigger set to 2 or an entry in aperiodicSRS-ResourceTriggerList set to 2 | SRS resource set(s) configured with higher layer parameter usage in SRS-ResourceSet set to 'antennaSwitching' and resourceType in SRS-ResourceSet set to 'aperiodic' for a 2nd set of serving cells configured by higher layers, or |

| | | | SRS resource set(s) configured by [SRS-ResourceSetForPositioning] and resourceType in [SRS-ResourceSetForPositioning] set to 'aperiodic' for a 2nd set of serving cells configured by higher layers |
|---|---|---|---|
| 11 | | SRS resource set(s) configured with higher layer parameter aperiodicSRS-ResourceTrigger set to 3 or an entry in aperiodicSRS-ResourceTriggerList set to 3 | SRS resource set(s) configured with higher layer parameter usage in SRS-ResourceSet set to 'antennaSwitching' and resourceType in SRS-ResourceSet set to 'aperiodic' for a 3rd set of serving cells configured by higher layers, or <br><br> SRS resource set(s) configured by [SRS-ResourceSetForPositioning] and resourceType in [SRS-ResourceSetForPositioning] set to 'aperiodic' for a 3rd set of serving cells configured by higher layers |

Mapping SRS of Sounding Procedure for positioning purpose

| | | | ResourceSetForPositioning] set to 'aperiodic' for a 2nd set of serving cells configured by higher layers |
|---|---|---|---|
| 11 | | SRS resource set(s) configured with higher layer parameter aperiodicSRS-ResourceTrigger set to 3 or an entry in aperiodicSRS-ResourceTriggerList set to 3 | SRS resource set(s) configured with higher layer parameter usage in SRS-ResourceSet set to 'antennaSwitching' and resourceType in SRS-Resource-Set set to 'aperiodic' for a 3rd set of serving cells configured by higher layers, or <br><br> SRS resource set(s) configured by [SRS-ResourceSetForPositioning] and resourceType in [SRS-ResourceSetForPositioning] set to 'aperiodic' for a 3rd set of serving cells configured by higher layers |

In the NR system to which various embodiments of the present disclosure are applicable, PRS mapping may be based on Table 10 below.

【Table 10】

6.4.1.4 Sounding reference signal

6.4.1.4.1 SRS resource

An SRS resource is configured by the SRS-Resource IE or the [SRS-for-positioning] IE

6.4.1.4.2 Sequence generation

The sounding reference signal sequence for an SRS resource shall be generated according to

$$r^{(p_i)}(n, l') = r_{u,v}^{(\alpha_i, \delta)}(n)$$

$$0 \leq n \leq M_{sc,b}^{SRS} - 1$$

$$l' \in \{0,1,...,N_{\text{symb}}^{\text{SRS}} - 1\}$$

where $M_{\text{sc},b}^{\text{SRS}}$ is given by clause 6.4.1.4.3, $r_{u,v}^{(\alpha,\delta)}(n)$ is given by clause 5.2.2 with $\delta = \log_2(K_{\text{TC}})$ and the transmission comb number $K_{\text{TC}} \in \{2,4,8\}$ is contained in the higher-layer parameter transmissionComb. The cyclic shift $\alpha_i$ for antenna port $p_i$ is given as

$$\alpha_i = 2\pi \frac{n_{\text{SRS}}^{\text{cs},i}}{n_{\text{SRS}}^{\text{cs,max}}}$$

$$n_{\text{SRS}}^{\text{cs},i} = \left( n_{\text{SRS}}^{\text{cs}} + \frac{n_{\text{SRS}}^{\text{cs,max}}(p_i - 1000)}{N_{\text{ap}}^{\text{SRS}}} \right) \mod n_{\text{SRS}}^{\text{cs,max}} \quad ,$$

where $n_{\text{SRS}}^{\text{cs}} \in \{0, 1, ..., n_{\text{SRS}}^{\text{cs,max}} - 1\}$ is contained in the higher layer parameter transmissionComb. The maximum number of cyclic shifts $n_{\text{SRS}}^{\text{cs,max}}$ are given by Table 6.4.1.4.2-1.

The sequence group $u = (f_{\text{gh}}(n_{\text{s,f}}^{\mu}, l') + n_{\text{ID}}^{\text{SRS}}) \mod 30$ and the sequence number $v$ in clause 5.2.2 [TS 38.211] depends on the higher-layer parameter groupOrSequenceHopping in the SRS-Config IE or the [SRS-for-positioning] IE. The SRS sequence identity $n_{\text{ID}}^{\text{SRS}}$ is given by the higher layer parameter sequenceId in the SRS-Config IE, in which case $n_{\text{ID}}^{\text{SRS}} \in \{0,1,...,1023\}$, or the [SRS-for-positioning] IE, in which case $n_{\text{ID}}^{\text{SRS}} \in \{0,1,...,65535\}$. The quantity $l' \in \{0,1,...,N_{\text{symb}}^{\text{SRS}} - 1\}$ is the OFDM symbol number within the SRS resource.

Table 6.4.1.4.2-1: Maximum number of cyclic shifts $n_{\text{SRS}}^{\text{cs,max}}$ as a function of $K_{\text{TC}}$.

| $K_{\text{TC}}$ | $n_{\text{SRS}}^{\text{cs,max}}$ |
|---|---|
| 2 | 8 |
| 4 | 12 |
| 8 | 6 |

### 6.4.1.4.3 Mapping to physical resources

When SRS is transmitted on a given SRS resource, the sequence $r^{(p_i)}(n, l')$ for each OFDM symbol $l'$ and for each of the antenna ports of the SRS resource shall be multiplied with the amplitude scaling factor $\beta_{\text{SRS}}$ in order to conform to the transmit power specified in [5, 38.213] and mapped in

sequence starting with $r^{(p_i)}(0, l')$ to resource elements $(k, l)$ in a slot for each of the antenna ports $p_i$ according to

$$a_{K_{\text{TC}}k' + k_0^{(p_i)}, l' + l_0}^{(p_i)} = \begin{cases} \frac{1}{\sqrt{N_{\text{ap}}}} \beta_{\text{SRS}} r^{(p_i)}(k', l') & k' = 0,1,...,M_{\text{sc},b}^{\text{SRS}} - 1 \quad l' = 0,1,...,N_{\text{symb}}^{\text{SRS}} - 1 \\ 0 & \text{otherwise} \end{cases}$$

The length of the sounding reference signal sequence is given by

$$M_{\text{sc},b}^{\text{SRS}} = m_{\text{SRS},b} N_{\text{sc}}^{\text{RB}} / K_{\text{TC}}$$

where $m_{\text{SRS},b}$ is given by a selected row of Table 6.4.1.4.3-1 [TS 38.211] with $b = B_{\text{SRS}}$ where $B_{\text{SRS}} \in \{0,1,2,3\}$ is given by the field b-SRS contained in the higher-layer parameter freqHopping if configured, otherwise $B_{\text{SRS}} = 0$. The row of the

table is selected according to the index $C_{\text{SRS}} \in \{0,1,...,63\}$ given by the field c-SRS contained in the higher-layer parameter freqHopping.

The frequency-domain starting position $k_0^{(p_i)}$ is defined by

$$k_0^{(p_i)} = \bar{k}_0^{(p_i)} + \sum_{b=0}^{B_{\text{SRS}}} K_{\text{TC}} M_{\text{sc},b}^{\text{SRS}} n_b$$

where

$$\bar{k}_0^{(p_i)} = n_{\text{shift}} N_{\text{sc}}^{\text{RB}} + \left( k_{\text{TC}}^{(p_i)} + k_{\text{offset}}^{l'} \right) \bmod K_{\text{TC}}$$

$$k_{\text{TC}}^{(p_i)} = \begin{cases} \left( \bar{k}_{\text{TC}} + K_{\text{TC}}/2 \right) \bmod K_{\text{TC}} & \text{if } n_{\text{SRS}}^{\text{cs}} \in \left\{ n_{\text{SRS}}^{\text{cs,max}}/2, \dots, n_{\text{SRS}}^{\text{cs,max}} - 1 \right\} \text{ and } N_{\text{ap}}^{\text{SRS}} = 4 \text{ and } p_i \in \{1001, 1003\} \\ \bar{k}_{\text{TC}} & \text{otherwise} \end{cases}$$

If $N_{\text{BWP}}^{\text{start}} \leq n_{\text{shift}}$ the reference point for $k_0^{(p_i)} = 0$ is subcarrier 0 in common resource block 0, otherwise the reference point is the lowest subcarrier of the BWP.

If the SRS is configured by the IE [SRS-for-positioning], the quantity $k_{\text{offset}}^{l'}$ is given by Table 6.4.1.4.3-2, otherwise $k_{\text{offset}}^{l'} = 0$.

The frequency domain shift value $n_{\text{shift}}$ adjusts the SRS allocation with respect to the reference point grid and is contained in the higher-layer parameter freqDomainShift in the SRS-Config IE or the [SRS-for-positioning] IE. The transmission comb offset $\bar{k}_{\text{TC}} \in \{0,1,\dots,K_{\text{TC}} - 1\}$ is contained in the higher-layer parameter transmissionComb in the SRS-Config IE or the [SRS-for-positioning] IE and $n_b$ is a frequency position index.

Table 6.4.1.4.3-2: The offset $k_{\text{offset}}^{l'}$ for SRS as a function of $K_{\text{TC}}$ and $l'$.

| $K_{\text{TC}}$ | $k_{\text{offset}}^{0}, \dots, k_{\text{offset}}^{N_{\text{symb}}^{\text{SRS}}-1}$ | | | | |
|---|---|---|---|---|---|
| | $N_{\text{symb}}^{\text{SRS}} = 1$ | $N_{\text{symb}}^{\text{SRS}} = 2$ | $N_{\text{symb}}^{\text{SRS}} = 4$ | $N_{\text{symb}}^{\text{SRS}} = 8$ | $N_{\text{symb}}^{\text{SRS}} = 12$ |
| 2 | 0 | 0,1 | 0,1,0,1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

The SRS for positioning purpose may be configured based on Table 11 below.

### 6.4.1.4.4 Sounding reference signal slot configuration

For an SRS resource configured as periodic or semi-persistent by the higher-layer parameter resourceType, a periodicity $T_{\text{SRS}}$ (in slots) and slot offset $T_{\text{offset}}$ are configured according to the higher-layer parameter periodicityAndOffset-p or periodicityAndOffset-sp in the SRS-Config IE, or periodicityAndOffset in the [SRS-for-positioning] IE. Candidate slots in which the configured SRS resource may be used for SRS transmission are the slots satisfying

$$\left( N_{\text{slot}}^{\text{frame},\mu} n_f + n_{s,f}^{\mu} - T_{\text{offset}} \right) \bmod T_{\text{SRS}} = 0$$

SRS is transmitted as described in clause 11.1 of [5, TS 38.213].

[275]　　　【Table 11】

| **SRS-Config** |
| --- |
| The IE *SRS-Config* is used to configure sounding reference signal transmissions. The configuration defines a list of SRS- |

Resources, a list of SRS-PosResources, a list of SRS-PosResourceSets and a list of SRS-ResourceSets. Each resource set defines a set of SRS-Resources or SRS-PosResources. The network triggers the transmission of the set of SRS-Resources or SRS-PosResources using a configured aperiodicSRS-ResourceTrigger (L1 DCI). The network does not configure SRS specific power control parameters, *alpha, p0* or *pathlossReferenceRS* if *unifiedTCI-StateType* is configured for the serving cell.

**SRS-Config information element**

```
-- ASN1START
-- TAG-SRS-CONFIG-START
SRS-Config ::=                        SEQUENCE {
                                              (...)
    srs-PosResourceSetToReleaseList-r16          SEQUENCE (SIZE(1..maxNrofSRS-PosResourceSets-r16)) OF SRS-
PosResourceSetId-r16

OPTIONAL, -- Need N
    srs-PosResourceSetToAddModList-r16           SEQUENCE (SIZE(1..maxNrofSRS-PosResourceSets-r16)) OF SRS-
PosResourceSet-r16          OPTIONAL,-- Need N
    srs-PosResourceToReleaseList-r16             SEQUENCE (SIZE(1..maxNrofSRS-PosResources-r16)) OF SRS-
PosResourceId-r16               OPTIONAL,-- Need N
    srs-PosResourceToAddModList-r16              SEQUENCE (SIZE(1..maxNrofSRS-PosResources-r16)) OF SRS-
PosResource-r16                 OPTIONAL -- Need N
    ]]
}
                                              (...)
SRS-PosResourceSet-r16 ::=            SEQUENCE {
    srs-PosResourceSetId-r16                 SRS-PosResourceSetId-r16,
    srs-PosResourceIdList-r16                        SEQUENCE (SIZE(1..maxNrofSRS-ResourcesPerSet)) OF SRS-
PosResourceId-r16
                                                              OPTIONAL,    --
Cond Setup
    resourceType-r16                     CHOICE {
        aperiodic-r16                        SEQUENCE {
            aperiodicSRS-ResourceTriggerList-r16          SEQUENCE (SIZE(1..maxNrofSRS-TriggerStates-1))
                                              OF        INTEGER          (1..maxNrofSRS-TriggerStates-1)
OPTIONAL, -- Need M
            ...
        },
        semi-persistent-r16                  SEQUENCE {
            ...
        },
        periodic-r16                         SEQUENCE {
            ...
        }
    },
    alpha-r16                            Alpha                                    OPTIONAL, --
```

```
Need S
    p0-r16                          INTEGER (-202..24)                          OPTIONAL, -
- Cond Setup
    pathlossReferenceRS-Pos-r16     CHOICE {
        ssb-IndexServing-r16            SSB-Index,
        ssb-Ncell-r16                   SSB-InfoNcell-r16,
        dl-PRS-r16                      DL-PRS-Info-r16
    }
```

```
OPTIONAL, -- Need M
    ...
}


SRS-ResourceSetId ::=              INTEGER (0..maxNrofSRS-ResourceSets-1)


SRS-PosResourceSetId-r16 ::=       INTEGER (0..maxNrofSRS-PosResourceSets-1-r16)


SRS-PosResource-r16::=            SEQUENCE {
    srs-PosResourceId-r16            SRS-PosResourceId-r16,
    transmissionComb-r16             CHOICE {
        n2-r16                           SEQUENCE {
            combOffset-n2-r16                INTEGER (0..1),
            cyclicShift-n2-r16               INTEGER (0..7)
        },
        n4-r16                           SEQUENCE {
            combOffset-n4-r16                INTEGER (0..3),
            cyclicShift-n4-r16               INTEGER (0..11)
        },
        n8-r16                           SEQUENCE {
            combOffset-n8-r16                INTEGER (0..7),
            cyclicShift-n8-r16               INTEGER (0..5)
        },
        ...
    },
    resourceMapping-r16              SEQUENCE {
        startPosition-r16                INTEGER (0..13),
        nrofSymbols-r16                  ENUMERATED {n1, n2, n4, n8, n12}
    },
    freqDomainShift-r16              INTEGER (0..268),
    freqHopping-r16                  SEQUENCE {
        c-SRS-r16                        INTEGER (0..63),
        ...
    },
```

```
    groupOrSequenceHopping-r16              ENUMERATED { neither, groupHopping, sequenceHopping },
    resourceType-r16                        CHOICE {
        aperiodic-r16                           SEQUENCE {
            slotOffset-r16                          INTEGER (1..32)                         OPTIONAL,
-- Need S

            ...
        },
        semi-persistent-r16                     SEQUENCE {
            periodicityAndOffset-sp-r16             SRS-PeriodicityAndOffset-r16,

            ...,
            [[
            periodicityAndOffset-sp-Ext-r16        SRS-PeriodicityAndOffsetExt-r16         OPTIONAL
-- Need R
            ]]
        },
        periodic-r16                            SEQUENCE {
            periodicityAndOffset-p-r16              SRS-PeriodicityAndOffset-r16,

            ...,
            [[
            periodicityAndOffset-p-Ext-r16         SRS-PeriodicityAndOffsetExt-r16         OPTIONAL
-- Need R
            ]]
        }
```

```
},
    sequenceId-r16                          INTEGER (0..65535),
    spatialRelationInfoPos-r16              SRS-SpatialRelationInfoPos-r16                 OPTIONAL,
-- Need R
    ...
}


SRS-SpatialRelationInfoPos-r16 ::=      CHOICE {
    servingRS-r16                           SEQUENCE {
        servingCellId                           ServCellIndex                            OPTIONAL,
-- Need S
        referenceSignal-r16                     CHOICE {
            ssb-IndexServing-r16                    SSB-Index,
            csi-RS-IndexServing-r16                 NZP-CSI-RS-ResourceId,
            srs-SpatialRelation-r16                 SEQUENCE {
                resourceSelection-r16                   CHOICE {
                    srs-ResourceId-r16                      SRS-ResourceId,
                    srs-PosResourceId-r16                   SRS-PosResourceId-r16
```

```
            },
            uplinkBWP-r16                          BWP-Id
        }
    }
},
ssb-Ncell-r16                      SSB-InfoNcell-r16,
dl-PRS-r16                         DL-PRS-Info-r16
}


SSB-Configuration-r16  ::=         SEQUENCE {
    ssb-Freq-r16                   ARFCN-ValueNR,
    halfFrameIndex-r16             ENUMERATED {zero, one},
    ssbSubcarrierSpacing-r16       SubcarrierSpacing,
    ssb-Periodicity-r16            ENUMERATED { ms5, ms10, ms20, ms40, ms80, ms160, spare2,spare1 }
OPTIONAL, -- Need S
    sfn0-Offset-r16                SEQUENCE {
        sfn-Offset-r16                INTEGER (0..1023),
        integerSubframeOffset-r16     INTEGER (0..9)                          OPTIONAL
-- Need R
    }                                                                 OPTIONAL, --
Need R
    sfn-SSB-Offset-r16             INTEGER (0..15),
    ss-PBCH-BlockPower-r16                                            INTEGER    (-60..50)
OPTIONAL   -- Cond Pathloss
}


SSB-InfoNcell-r16  ::=             SEQUENCE {
    physicalCellId-r16             PhysCellId,
    ssb-IndexNcell-r16             SSB-Index                          OPTIONAL, --
Need S
    ssb-Configuration-r16          SSB-Configuration-r16              OPTIONAL
-- Need S
}


DL-PRS-Info-r16  ::=              SEQUENCE {
    dl-PRS-ID-r16                  INTEGER (0..255),
    dl-PRS-ResourceSetId-r16       INTEGER (0..7),
    dl-PRS-ResourceId-r16          INTEGER (0..63)                    OPTIONAL
-- Need S
```

```
}
SRS-PosResourceId-r16 ::=          INTEGER (0..maxNrofSRS-PosResources-1-r16)
-- TAG-SRS-CONFIG-STOP
```

```
-- ASN1STOP
```

Referring to Table 11, SRS-config information element may include a list of one or more SRS-PosResourceSets and a list of one or more SRS-PosResources. Specifically, an SRS resource set for positioning may be configured by the SRS-PosResourceSet, and SRS resources for positioning may be configured by the SRS-PosResource.

**Small Data Transmission (SDT)**

In the NR system to which various embodiments of the present disclosure are appliable, operation for small data transmission may be based on Table 12 below.

[Table 12]

| |
|---|
| The MAC entity may be configured by RRC with SDT and the SDT procedure may be initiated by RRC layer. The SDT procedure can be performed either by Random Access procedure with 2-step RA type or 4-step RA type (i.e., RA-SDT) or by configured grant Type 1 (i.e., CG-SDT). <br> RRC configures the following parameters for SDT procedure: <br>   - *sdt-DataVolumeThreshold*: data volume threshold for the UE to determine whether to perform SDT procedure; <br>   - *sdt-RSRP-Threshold:* RSRP threshold for UE to determine whether to perform SDT procedure; <br>   - *cg-SDT RSRP-ThresholdSSB:* an RSRP threshold configured for SSB selection for CG-SDT. <br> The MAC entity shall, if initiated by the upper layers for SDT procedure: <br>   1> if the data volume of the pending UL data across all RBs configured for SDT is less than or equal to *sdt-DataVolumeThreshold*; and <br>   NOTE: For SDT procedure, the MAC entity also considers the suspended RBs configured with SDT for data volume calculation. It is up to the UE's implementation how the UE calculates the data volume for the suspended RBs. Size of the CCCH message is not considered for data volume calculation <br>   1> if the RSRP of the downlink pathloss reference is higher than *sdt-RSRP-Threshold*; or <br>   1> if *sdt-RSRP-Threshold* is not configured: <br>     2> if the Serving Cell is configured with supplementary uplink as specified in TS 38.331 [5]; and <br>     2> if the RSRP of the downlink pathloss reference is less than *rsrp-ThresholdSSB-SUL*: <br>       3> select the SUL carrier. <br>     2> else: <br>       3> select the NUL carrier. <br>     2> if CG-SDT is configured on the selected UL carrier, and TA for CG-SDT is valid according to clause 5.27.2 in the first available CG occasion for initial CG-SDT transmission with CCCH message according to clause 5.8.2; and <br>     2> if, for each RB having data available for transmission, *configuredGrantTypeIAllowed,* if configured, is configured with value *true* for the corresponding logical channel; and <br>     2> if at least one SSB configured for CG-SDT with SS-RSRP above *cg-SDT-RSRP-ThresholdSSB* is available: <br>       3> indicate to the upper layers that the conditions for initiating SDT procedure are fulfilled; <br>       3> perform CG-SDT procedure on the selected UL carrier according to clause 5.8.2. <br>     2> else if a set of Random Access resources for performing RA-SDT are selected according to clause 5.1.1b on the selected UL carrier: <br>       3> if *cg-SDT-TimeAlignmentTimer* is running, consider *cg-SDT-TimeAlignmentTimer* as expired and perform the corresponding actions in clause 5.2; <br>       3> indicate to the upper layers that the conditions for initiating SDT procedure are fulfilled. <br>     2> else: <br>       3> indicate to the upper layers that the conditions for initiating SDT procedure are not fulfilled. <br>   1> else: |

(continued)

| |
|---|
| 2> indicate to the upper layers that the conditions for initiating SDT procedure are not fulfilled. |
| If RA-SDT is selected above and after the Random Access procedure is successfully completed (see clause 5.1.6), the UE monitors PDCCH addressed to C-RNTI received in random access response until the RA-SDT procedure is terminated. If CG-SDT is selected above and after the initial transmission for CG-SDT is performed, the UE monitors PDCCH addressed to C-RNTI as stored in UE Inactive AS context as specified in TS 38.331 [5] and CS-RNTI until the CG-SDT procedure is terminated. |

## Random Access Procedure (RACH)

When accessing the base station for the first time or there is no radio resource for signal transmission, the UE may perform a random access procedure with respect to the base station.

Random access procedures are used for a variety of purposes. For example, the random access procedure may be triggered based on following events.

- network initial access from RRC_IDLE,
- RRC Connection Re-establishment procedure, handover,
- UE-triggered UL data transmission
- Transition from RRC_INACTIVE (e.g.: RRC_INACTIVE → RRC_CONNECTED, RRC Connection Resume procedure from RRC_INACTIVE)
- Small Data Transmission (SDT) in RRC_INACTIVE

The UE may acquire UL synchronization and UL transmission resources through a random access procedure.

In terms of random access resources, the random access procedure is divided into a contention-based random access procedure and a contention free random access procedure. The contention-based random access procedure is divided into a 4-step random access procedure (4-step RACH) and a 2-step random access procedure (2-step RACH).

When the (contention-based) random access procedure is performed in 4 steps (Type-1 random access procedure, 4-step RACH), the UE may transmit a message (message 1, Msg1) including a preamble related to a specific sequence through a physical random access channel (PRACH), and receive a response message (Random Access Response (RAR) message) (message 2, Msg2) to the preamble through the PDCCH and the corresponding PDSCH. The UE may transmit a message (message 3, Msg3) including a Physical Uplink Shared Channel (PUSCH) by using the scheduling information in the RAR, and perform a collision (contention) resolution procedure such as reception of a physical downlink control channel signal and a corresponding physical downlink shared channel signal. The UE may receive a message (message 4, Msg4) including collision (contention) resolution information for a collision resolution procedure from the base station.

The UE may transmit the UL transmission on the uplink shared channel as Msg3 of the random access procedure based on random access response information. Msg3 may include an RRC connection request and a UE identifier. As a response to Msg3, the network may transmit Msg4, which may be treated as a contention resolution message on DL. By receiving Msg4, the UE may enter the RRC connected state. As mentioned above, the UL grant in the RAR schedules PUSCH transmission to the base station. The PUSCH carrying the initial UL transmission by the UL grant in the RAR is also referred to as Msg3 PUSCH.

Type-2 random access procedure (2-step RACH procedure), in which a (contention-based) random access procedure is performed in two steps, has been proposed to simplify the RACH procedure to achieve low signaling overhead and low latency.

The operation of transmitting message 1 and the operation of transmitting message 3 in the 4-step RACH procedure may be performed as one operation in which the UE performs transmission of one message (message A) including PRACH and PUSCH in the 2-step RACH procedure, and the operation of transmitting message 2 and transmitting message 4 by the base station In the 4-step RACH procedure may be performed as one operation in which the base station performs transmission of one message (message B) including the RAR and collision resolution information in the 2-step RACH procedure.

## PUSCH transmission in RRC inactive state

In the NR system to which various embodiments of the present disclosure are appliable, a PUSCH transmission operation in RRC_INACTIVE state may be based on Table 13 below.

【Table 13】

19    PUSCH transmission in RRC_INACTIVE state

19.1    Configured-grant based PUSCH transmission

A UE indicated to release a dedicated RRC connection can be provided one or more configurations by respective one or more *ConfiguredGrantConfig*, for configured grant Type 1 PUSCH transmissions on the initial UL BWP [12, TS 38.331]. For the remaining of this clause, PUSCH transmissions refer to configured grant Type-1 PUSCH transmissions for a configuration provided by *ConfiguredGrantConfig*.

A UE can be provided by *sdt-SSB-Subset* a number of SS/PBCH block indexes $N_{\mathrm{PUSCH}}^{\mathrm{SS/PBCH}}$ to map to a number of valid PUSCH occasions for PUSCH transmissions over an association period. If the UE is not provided *sdt-SSB-Subset*, the UE determines $N_{\mathrm{PUSCH}}^{\mathrm{SS/PBCH}}$ from the value of *ssb-PositionsInBurst* in *SIB1* or by *ServingCellConfigCommon*. A PUSCH occasion for a PUSCH transmission is defined by a time resource and a frequency resource and is associated with a DM-RS provided by *cg-DMRS-Configuration* for the configuration of PUSCH transmissions.

An association period, starting from frame with SFN 0, for mapping $N_{\mathrm{PUSCH}}^{\mathrm{SS/PBCH}}$ SS/PBCH block indexes, from the number of SS/PBCH block indexes, to valid PUSCH occasions and associated DM-RS resources is the smallest value in the set determined by the PUSCH configuration period provided by *periodicity* in *ConfiguredGrantConfig* according to Table 19.1-1 such that $N_{\mathrm{PUSCH}}^{\mathrm{SS/PBCH}}$ SS/PBCH block indexes are mapped at least once to valid PUSCH occasions and associated DM-RS resources within the association period. A UE is provided a number of SS/PBCH block indexes associated with a PUSCH occasion and a DM-RS resource by *sdt-SSB-perCG-PUSCH*. If after an integer number of SS/PBCH block indexes to PUSCH occasions and associated DMRS resources mapping cycles within the association period there is a set of PUSCH occasions and associated DMRS resources that are not mapped to $N_{\mathrm{PUSCH}}^{\mathrm{SS/PBCH}}$ SS/PBCH block indexes, no SS/PBCH block indexes are mapped to the set of PUSCH occasions and associated DMRS resources. An association pattern period includes one or more association periods and is determined so that a pattern between PUSCH occasions with associated DMRS resources and SS/PBCH block indexes repeats at most every 640 msec. PUSCH occasions and associated DMRS resources not associated with SS/PBCH block indexes after an integer number of association periods, if any, are not used for PUSCH transmissions.

**Table 19.1-1: Mapping between PUSCH configuration period and SS/PBCH block to configured PUSCH resource association period**

| PUSCH configuration period $T_{cg}$ (msec) | Association period (number of PUSCH configuration periods except when PUSCH configuration period is less than 5 msec) |
|---|---|
| 5 | {1, 2, 4, 8,16, 32, 64, 128} |
| 8 | {1, 2, 4, 5, 8, 10, 16, 20, 40, 80} |
| 10 | {1, 2, 4, 8,16, 32, 64} |
| 16 | {1, 2, 4, 5, 8,10,20,40} |
| 20 | {1, 2, 4, 8,16, 32} |
| 32 | {1, 2, 4, 5, 10, 20} |
| 40 | {1, 2, 4, 8, 16} |
| 64 | {1, 2, 5, 10} |
| 80 | {1, 2, 4, 8} |
| 128 | {1, 5} |
| 160 | {1, 2, 4} |

| 320 | $\{1, 2\}$ | |
| 640 | $\{1\}$ | |

$N_{\mathrm{PUSCH}}^{\mathrm{SS/PBCH}}$ SS/PBCH block indexes are mapped to valid PUSCH occasions and associated DMRS resources in the following order

- first, in increasing order of DMRS resource indexes within a PUSCH occasion, where a DMRS resource index $DMRS_{id}$ is determined first in an ascending order of a DMRS port index and second in an ascending order of a DMRS sequence index [4, TS 38.211]

- second, in increasing order of PUSCH configuration period indexes

A PUSCH occasion is valid if it does not overlap with a valid PRACH occasion as described in clause 8.1.

For unpaired spectrum and for SS/PBCH blocks with indexes provided by *ssb-PositionsInBurst* in *SIB1* or by *ServingCellConfigCommon*

- if a UE is not provided *tdd-UL-DL-ConfigurationCommon*, a PUSCH occasion is valid if the PUSCH occasion
    - does not precede a SS/PBCH block in the PUSCH slot, and
    - starts at least $N_{\mathrm{gap}}$ symbols after a last SS/PBCH block symbol, where $N_{\mathrm{gap}}$ is provided in Table 8.1-2

- if a UE is provided *tdd-UL-DL-ConfigurationCommon*, a PUSCH occasion is valid if the PUSCH occasion
    - is within UL symbols
    - starts at least $N_{\mathrm{gap}}$ symbols after a last downlink symbol, and at least $N_{\mathrm{gap}}$ symbols after a last SS/PBCH block symbol, where $N_{\mathrm{gap}}$ is provided in Table 8.1-2

A UE determines a power of a PUSCH transmission as described in clause 7.1.1, where the UE obtains $PL_{b,f,c}(q_d)$ using a RS resource from an SS/PBCH block with index associated with the PUSCH transmission.

A UE can be provided a USS set by *sdt-CG-SearchSpace*, or a CSS set by *sdt-SearchSpace*, to monitor PDCCH for detection of DCI format 0_0 with CRC scrambled by C-RNTI or CS-RNTI for scheduling PUSCH transmission or of DCI format 1_0 with CRC scrambled by C-RNTI for scheduling PDSCH receptions [12, TS 38.331]. The UE may assume that the DM-RS antenna port associated with the PDCCH receptions, the DM-RS antenna port associated with the PDSCH receptions, and the SS/PBCH block associated with the PUSCH transmission are quasi co-located with respect to average gain and quasi co-location 'typeA' or 'typeD' properties. The UE transmits a PUCCH with HARQ-ACK information associated with the PDSCH receptions as described in clause 9.2.1 using a same spatial domain transmission filter as for the last PUSCH transmission.

19.2    Random-access based PUSCH transmission

A UE indicated to release a dedicated RRC connection can be provided a configuration for a Type-1 and/or a Type-2 random access procedure on the initial UL BWP [12, TS 38.331]. PRACH occasions can have either a common configuration as, or a separate configuration from, PRACH occasions for Type-1 or Type-2 random access procedure as described in clause 8.1. The UE procedure is as described in clause 8, including clauses 8.1 through 8.4. The UE transmits a PRACH preamble with a power determined as described in clause 7.4.

For a common configuration of PRACH occasions and a Type-1 or a Type-2 random access procedure, a UE can be provided a number of SS/PBCH block indexes associated with one PRACH occasion by *sdt-CB-PreamblesPerSSB-PerSharedRO* or *sdt-msgA-CB-PreamblesPerSSB-PerSharedRO*, respectively. A PRACH transmission can be on a subset of PRACH occasions associated with a same SS/PBCH block index within an SSB-RO mapping cycle as determined by a PRACH mask index provided by *sdt-SSB-SharedRO-MaskIndex* or *sdt-msgA-SSB-SharedRO-MaskIndex* according to [11, TS 38.321].

A UE can be provided by *sdt-SearchSpace* a CSS set to monitor, after contention resolution as described in clause 8.4, PDCCH for detection of a DCI format 0_0 or DCI format 1_0 with CRC scrambled by C-

RNTI for scheduling respective PUSCH transmissions or PDSCH receptions; otherwise, if the UE is not provided *sdt-SearchSpace*, the UE monitors PDCCH according to a Type1-PDCCH CSS set as described in clause 10.1. The UE may assume that the DM-RS antenna port associated with the PDCCH receptions, the DM-RS antenna port associated with the PDSCH receptions, and the SS/PBCH block associated with the PRACH transmission are quasi co-located with respect to average gain and quasi co-location 'typeA' or 'typeD' properties.

The contents described above (e.g., 3GPP system, positioning protocol, sounding procedure for positioning purpose, small data transmission, random access procedure, PUSCH transmission in RRC_inactive state, etc.) can be applied by being combined with methods proposed in the present disclosure described below, or can be supplemented to clarify technical features of methods proposed in the present disclosure. Methods to be described below are merely distinguished for convenience of explanation. Thus, as long as the methods are not mutually exclusive, it is obvious that partial configuration of any method can be substituted or combined with partial configuration of another method. That is, various embodiments of the present disclosure described below can be combined in whole or in part to constitute other various embodiments of the present disclosure unless mutually excluded, which can be clearly understood by a person with ordinary skill in the art.

In the existing NR system before Rel-17, a positioning measurement (or a procedure related to the positioning measurement) was supported only in the RRC connected state. Specifically, the entire procedure in which the UE receives PRS for the purpose of location measurement of the UE and reports an analysis of the received PRS to the base station/server was supported only in the RRC connected state. In addition, UL positioning measurement through SRS transmission was equally supported only in the RRC connected state.

Various applications have been required, such as to support more accurate use cases for the IOT environment RRC inactive state, and it has been determined that positioning measurement in the RRC inactive state is supported in Rel-17. The PRS resource and/or the SRS resource may be configured not only inside an initial bandwidth part (BWP) but also outside the initial BWP for gain in terms of accuracy. In other words, the transmission of the PRS (and/or the transmission of the SRS) may be performed inside the initial BWP and/or outside the initial BWP. Here, the initial BWP may mean an initial uplink (UL) BWP.

The present disclosure sequentially describes a configuration method and a delivery method of a priority rule in consideration of a resource collision with other UL channels for SRS transmission in an RRC inactive state at a UE side. In the present disclosure, the terms 'RRC inactive state' and 'RRC connected state' related to an RRC state of the UE can be changed/interpreted/applied to 'RRC_INACTIVE mode' and 'RRC_CONNECTED mode', respectively.

For convenience of description, the present disclosure is described focusing on an uplink channel, but it is not intended to limit the application of a priority rule according to embodiments of the present disclosure. In other words, the priority rule described below can be applied in relation to at least one of other downlink channels, other downlink physical signals, other uplink channels, and/or other uplink physical signals. For example, in embodiments described below, an uplink channel (e.g., PUSCH) related to a priority can be changed/interpreted/applied to a downlink channel (e.g., PDSCH).

The above-described priority rule is described in detail below.

From Rel-17, the positioning measurement may be supported not only in RRC connected state but also in RRC inactive state.

Information on SRS resources that the UE shall transmit when performing DL+UL positioning measurement such as UL or multi-RRT may be configured based on at least one of the following embodiments.

According to an embodiment, the SRS resource in the RRC inactive state may be configured through a message releasing RRC connection (e.g., RRC Release message).

For example, the base station may configure the SRS resource in the RRC inactive state to the UE in a form of suspending resources pre-configured to the UE in the connected state through the RRC Release message. The RRC Release message may include configuration information (e.g., suspendConfig) for RRC_INACTIVE state. The suspendConfig may include configuration information related to the SRS for positioning in the RRC inactive state.

The configuration information (e.g., SRS-PosRRC-InactiveConfig-r17) related to the SRS for positioning in the RRC inactive state may include i) a configuration (e.g., SRS-PosConfig-r17 → srs-PosResourceSetToAddModList-r17, srs-PosResourceToAddModList-r17) related to resources of the SRS and/or ii) a bandwidth part (BWP) configuration (e.g., bwp-NUL-r17 and/or bwp-SUL-r17). A carrier related to the BWP on which the SRS is transmitted may be a normal uplink carrier and/or a supplementary uplink carrier. The configuration related to the resources of the SRS may include information on at least one of SRS resources and/or a set of SRS resources.

For example, the RRC Release message may be based on Table 14below.

【Table 14】

```
–                       RRCRelease
The RRCRelease message is used to command the release of an RRC connection or the suspension of the RRC connection.
                                          RRCRelease message
-- ASN1START
-- TAG-RRCRELEASE-START

RRCRelease ::=                   SEQUENCE {
    rrc-TransactionIdentifier    RRC-TransactionIdentifier,
    criticalExtensions           CHOICE {
        rrcRelease                   RRCRelease-IEs,
        criticalExtensionsFuture     SEQUENCE {}
    }
}

RRCRelease-IEs ::=              SEQUENCE {
    redirectedCarrierInfo                                                    RedirectedCarrierInfo
OPTIONAL,    -- Need N
    cellReselectionPriorities                                               CellReselectionPriorities
OPTIONAL,    -- Need R
    suspendConfig                                                           SuspendConfig
OPTIONAL,    -- Need R
    deprioritisationReq          SEQUENCE {
        deprioritisationType         ENUMERATED {frequency, nr},
        deprioritisationTimer        ENUMERATED {min5, min10, min15, min30}
    }
OPTIONAL,    -- Need N
    lateNonCriticalExtension                                                OCTET    STRING
OPTIONAL,
    nonCriticalExtension                                                    RRCRelease-v1540-IEs
OPTIONAL
}


SuspendConfig ::=              SEQUENCE {
    fullI-RNTI                   I-RNTI-Value,
    shortI-RNTI                  ShortI-RNTI-Value,
```

```
    ran-PagingCycle                 PagingCycle,
    ran-NotificationAreaInfo        RAN-NotificationAreaInfo                        OPTIONAL,
-- Need M
    t380                                                    PeriodicRNAU-TimerValue
OPTIONAL,    -- Need R
    nextHopChainingCount            NextHopChainingCount,
    ...,
    [[
    sl-UEIdentityRemote-r17                                         RNTI-Value
OPTIONAL, -- Cond L2RemoteUE
    sdt-Config-r17              SetupRelease { SDT-Config-r17 }                 OPTIONAL,
-- Need M
    srs-PosRRC-Inactive-r17                        SetupRelease { SRS-PosRRC-Inactive-r17 }
OPTIONAL,    -- Need M
    ran-ExtendedPagingCycle-r17                            ExtendedPagingCycle-r17
OPTIONAL    -- Cond RANPaging
    ]]
```

```
}


SDT-Config-r17 ::=              SEQUENCE {
    sdt-DRB-List-r17                        SEQUENCE (SIZE (0..maxDRB)) OF DRB-Identity
OPTIONAL,    -- Need M
    sdt-SRB2-Indication-r17                             ENUMERATED    {allowed}
OPTIONAL,    -- Need R
    sdt-MAC-PHY-CG-Config-r17                           SetupRelease   {SDT-CG-Config-r17}
OPTIONAL,    -- Need M
    sdt-DRB-ContinueROHC-r17                     ENUMERATED  { cell,   rna  }
OPTIONAL    -- Need S
}


SDT-CG-Config-r17 ::= OCTET STRING (CONTAINING SDT-MAC-PHY-CG-Config-r17)


SDT-MAC-PHY-CG-Config-r17 ::=       SEQUENCE {
    -- CG-SDT specific configuration
    cg-SDT-ConfigLCH-RestrictionToAddModList-r17 SEQUENCE (SIZE(1..maxLC-ID)) OF   CG-SDT-ConfigLCH-
Restriction-r17 OPTIONAL,    -- Need N
    cg-SDT-ConfigLCH-RestrictionToReleaseList-r17 SEQUENCE (SIZE(1..maxLC-ID)) OF   LogicalChannelIdentity
OPTIONAL,    -- Need N
    cg-SDT-ConfigInitialBWP-NUL-r17                     SetupRelease   {BWP-UplinkDedicatedSDT-r17}
OPTIONAL,    -- Need M
    cg-SDT-ConfigInitialBWP-SUL-r17                     SetupRelease   {BWP-UplinkDedicatedSDT-r17}
OPTIONAL,    -- Need M
```

```
        cg-SDT-ConfigInitialBWP-DL-r17                                      BWP-DownlinkDedicatedSDT-r17
OPTIONAL,      -- Need M
        cg-SDT-TimeAlignmentTimer-r17                                                    TimeAlignmentTimer
OPTIONAL,      -- Need M
        cg-SDT-RSRP-ThresholdSSB-r17                                                           RSRP-Range
OPTIONAL,      -- Need M
        cg-SDT-TA-ValidationConfig-r17                     SetupRelease  {  CG-SDT-TA-ValidationConfig-r17  }
OPTIONAL,      -- Need M
        cg-SDT-CS-RNTI-r17                                                                     RNTI-Value
OPTIONAL,      -- Need M
        ...
}


CG-SDT-TA-ValidationConfig-r17 ::=    SEQUENCE {
        cg-SDT-RSRP-ChangeThreshold-r17          ENUMERATED { dB2, dB4, dB6, dB8, dB10, dB14, dB18, dB22,
                                                    dB26, dB30, dB34, spare5, spare4, spare3, spare2, spare1}
}


BWP-DownlinkDedicatedSDT-r17 ::=       SEQUENCE {
        pdcch-Config-r17                                                   SetupRelease  {  PDCCH-Config  }
OPTIONAL,      -- Need M
        pdsch-Config-r17                                                   SetupRelease  {  PDSCH-Config  }
OPTIONAL,      -- Need M
        ...
}


BWP-UplinkDedicatedSDT-r17 ::=           SEQUENCE {
        pusch-Config-r17                                                   SetupRelease  {  PUSCH-Config  }
OPTIONAL,      -- Need M
        configuredGrantConfigToAddModList-r17                   ConfiguredGrantConfigToAddModList-r16
OPTIONAL,      -- Need N


        configuredGrantConfigToReleaseList-r17                  ConfiguredGrantConfigToReleaseList-r16
OPTIONAL,      -- Need N
        ...
}


CG-SDT-ConfigLCH-Restriction-r17 ::= SEQUENCE {
        logicalChannelIdentity-r17           LogicalChannelIdentity,
        configuredGrantType1Allowed-r17                                ENUMERATED           {true}
OPTIONAL,      -- Need R
        allowedCG-List-r17                   SEQUENCE (SIZE (0.. maxNrofConfiguredGrantConfigMAC-1-r16)) OF
ConfiguredGrantConfigIndexMAC-r16
```

```
OPTIONAL        -- Need R
}

SRS-PosRRC-Inactive-r17 ::= OCTET STRING (CONTAINING SRS-PosRRC-InactiveConfig-r17)

SRS-PosRRC-InactiveConfig-r17 ::=          SEQUENCE {
    srs-PosConfigNUL-r17                                              SRS-PosConfig-r17
OPTIONAL,        -- Need R
    srs-PosConfigSUL-r17                                              SRS-PosConfig-r17
OPTIONAL,        -- Need R
    bwp-NUL-r17                                                       BWP
OPTIONAL,        -- Need S
    bwp-SUL-r17                                                       BWP
OPTIONAL,        -- Need S
    inactivePosSRS-TimeAlignmentTimer-r17                             TimeAlignmentTimer
OPTIONAL,        -- Need M
    inactivePosSRS-RSRP-ChangeThreshold-r17                 RSRP-ChangeThreshold-r17
OPTIONAL        -- Need M
}

RSRP-ChangeThreshold-r17 ::= ENUMERATED {dB4, dB6, dB8, dB10, dB14, dB18, dB22, dB26, dB30, dB34, spare6,
spare5, spare4, spare3, spare2, spare1}

SRS-PosConfig-r17 ::=                SEQUENCE {
    srs-PosResourceSetToReleaseList-r17    SEQUENCE    (SIZE(1..maxNrofSRS-PosResourceSets-r16))    OF    SRS-
PosResourceSetId-r16 OPTIONAL,-- Need N
    srs-PosResourceSetToAddModList-r17      SEQUENCE    (SIZE(1..maxNrofSRS-PosResourceSets-r16))    OF    SRS-
PosResourceSet-r16    OPTIONAL,-- Need N
    srs-PosResourceToReleaseList-r17            SEQUENCE    (SIZE(1..maxNrofSRS-PosResources-r16))    OF    SRS-
PosResourceId-r16         OPTIONAL,-- Need N
    srs-PosResourceToAddModList-r17              SEQUENCE    (SIZE(1..maxNrofSRS-PosResources-r16))    OF    SRS-
PosResource-r16          OPTIONAL -- Need N
}
```

| **srs-PosRRC-InactiveConfig** |
| --- |
| SRS for positioning configuration during RRC_INACTIVE state. |
| **suspendConfig** |
| Indicates configuration for the RRC_INACTIVE state. The network does not configure *suspendConfig* when the network redirect the UE to an inter-RAT carrier frequency or if the UE is configured with a DAPS bearer. |

| ***SRS-PosRRC-InactiveConfig* field descriptions** |
| --- |

| | |
|---|---|
| ***bwp-NUL*** | |
| BWP configuration for SRS for Positioning during the RRC_INACTIVE state in Normal Uplink Carrier. If the field is absent UE is configured with an SRS for Positioning associated with the initial UL BWP and transmitted, during the RRC_INACTIVE state, inside the initial UL BWP with the same CP and SCS as | |

| |
|---|
| configured for initial UL BWP. |

| |
|---|
| ***bwp-SUL*** |
| BWP configuration for SRS for Positioning during the RRC_INACTIVE state in Supplementary Uplink Carrier. If the field is absent UE is configured with an SRS for Positioning associated with the initial UL BWP and transmitted, during the RRC_INACTIVE state, inside the initial UL BWP with the same CP and SCS as configured for initial UL BWP. |
| ***inactivePosSRS-RSRP-ChangeThreshold*** |
| RSRP threshold for the increase/decrease of RSRP for time alignment validation as specified in TS 38.321 [3]. |
| ***inactivePosSRS-TimeAlignmentTimer*** |
| TAT value for SRS for positioning transmission during RRC_INACTIVE state as specified in TS 38.321 [3]. The network always configures this field when *srs-PosRRC-Inactive* is configured. |
| ***srs-PosConfigNUL*** |
| SRS for Positioning configuration in RRC_INACTIVE state in Normal Uplink Carrier. |
| ***srs-PosConfigSUL*** |
| SRS for Positioning configuration in RRC_INACTIVE state in Supplementary Uplink Carrier. |

According to an embodiment, a base station may transmit, to a UE, configuration information related to SRS for positioning in RRC inactive state via a physical channel used for data transmission to the UE in the RRC inactive state. For example, the base station may transmit the configuration information to the UE via a physical channel related to Configured Grant-Small Data Transmission (CG-SDT) or Random Access-Small Data Transmission (RA-SDT). The Small Data Transmission (SDT) may refer to transmission/signaling of data performed through a radio bearers allowed in the RRC inactive state without a transition to RRC connected state.

The UE may transmit the SRS to the base station in the RRC inactive state based on the configuration information. For example, the SRS transmission in the RRC inactive state may be periodic and/or semi-persistent. For example, a resource type of resources (e.g., SRS-PosResource) for the SRS transmission in the RRC inactive state may be configured with 'semi-persistent' or 'periodic'.

The SRS resource may be configured/transmitted in up to 12 symbols (e.g., 1, 2, 4, 8 or 12 symbol(s)) within 1 slot. The expression 'the SRS resource is transmitted' in the present disclosure may mean 'the SRS is transmitted based on the SRS resource' or 'the SRS is transmitted on the SRS resource'.

An overlap configuration may be performed on UL channel (PRACH/msgA or msg3 as well as configured grant (CG)/random access (RA) based SDT) based on the configuration related to the SRS resource. Therefore, a priority configuration between the SRS transmitted for positioning in the RRC Inactive state and other channels is required.

Information related to a method described below may be configured based on an RRC message or system information. For example, information related to embodiments described below may be transmitted together in resource configuration for SRS for positioning. Specifically, the RRC Release message may include information related to a priority described below. For example, the information related to the priority described below may be pre-defined/pre-configured. Specifically, the information related to the priority described below may be information defined/configured in UE/base station implementation.

For PRACH, the following operation may be performed with respect to collision avoidance. Specifically, in a situation of single cell operation or Intra band CA, PRACH transmission is not performed in the same slot as SRS in order to prevent collision with other transmissions in advance (see Table 15 below).

[Table 151

> In 38.213 v17.1.0
>
> For single cell operation or for operation with carrier aggregation in a same frequency band, a UE does not transmit PRACH and PUSCH/PUCCH/SRS in a same slot or when a gap between the first or last symbol of a PRACH transmission in a first slot is separated by less than $N$ symbols from the last or first symbol, respectively, of a PUSCH/PUCCH/SRS transmission in a second slot where $N = 2$ for $\mu = 0$ or $\mu = 1$, $N = 4$ for $\mu = 2$ or $\mu = 3$, $N = 16$ for $\mu = 5$, $N = 32$ for $\mu = 6$, and $\mu$ is the SCS configuration for the active UL BWP. For a PUSCH transmission with repetition Type B, this applies to each a ctual repetition for PUSCH transmission [6, TS 38.214].

However, msg3 or msgA related to the RACH procedure has no restriction on SRS for positioning (i.e., transmission restriction in the same slot). In addition, the UE can transmit small data in the RRC inactive state without RRC connection from Rel-15 (Small Data Transmission in RRC inactive State). Hence, RACH based SDT and configured-grant based SDT are supported. The PUSCH data may also be transmitted within the initial BWP. Except for a PRACH preamble, a collision may occur between the SRS for positioning and the physical channel that may be transmitted in the RRC inactive state. Specifically, a collision may occur between data channel (CG-SDT based PUSCH or RA-SDT based PUSCH), that may be transmitted from the UE to the base station in the RRC inactive state, and SRS for positioning in the RRC inactive state supported from Rel-17. In addition, since ACK information in the CG-SDT is transmitted to PUCCH in response to the base station, a collision may occur between the PUCCH and the SRS (for positioning) in the RRC inactive state.

Here, the collision may mean that two transmissions (e.g., SRS transmission and PUCCH/PUSCH transmission) overlap in a time domain. For example, the collision may mean that at least one symbol for the SRS transmission overlaps with at least one symbol for the PUCCH transmission. For example, the collision may mean that at least one symbol for the SRS transmission is the same as at least one symbol for the PUCCH transmission. In at least one symbol where the collision occurs, based on the priority rule, only one of the two transmissions may be performed, and the other transmission may be dropped. In this instance, an operation in which transmission is dropped due to the collision may be expressed as that the UE does not perform the corresponding transmission from a perspective of UE operation. In this instance, the operation of the UE for collision handling (i.e., the operation that the UE performs one transmission and drops the other transmission in order to prevent the collision) may be performed only when carriers for the two transmissions are the same. The above operation is merely an example of the UE operation, and the operation of the UE for collision handling may be performed even when the carriers are not the same.

The present disclosure describes a priority for a PUSCH transmitted by a UE and an SRS for positioning, and a rule of the priority may be configured as below. In the rule below, symbol '>' means that a variable on the left has a higher priority than a variable on the right.

For example, if SRS for positioning > PUSCH for RACH, transmission of SRS for positioning has a priority for transmission of PUSCH for RACH. That is, in at least one symbol where a collision occurs, the transmission of SRS for positioning may be performed, and the transmission of PUSCH for RACH may be dropped.

For example, if SRS for positioning < PUSCH for RACH, transmission of PUSCH for RACH has a priority for transmission of SRS for positioning. That is, in at least one symbol where a collision occurs, the transmission of PUSCH for RACH may be performed, and the transmission of SRS for positioning may be dropped.

msg3 and msgA are determined at the UE side based on a selection of RACH type (e.g., Type 1 - 4-step RACH → msg3 or Type 2 → 2-step RACH → msgA). Therefore, since the overlapping is not expected in the time domain, msg3 and msgA are hereinafter referred to as 'PUSCH for PRACH'.

In CG-SDT and RA-SDT, the UE expects to preferentially select the CG- SDT, and when the associated PUSCH is not valid, the UE attempts the RA-SDT (i.e., the UE first performs the CG-SDT and performs the RA-SDT when the related resource/configuration is not valid). The PUSCH for CG-SDT and the PUSCH for RA-SDT are not expected to collide with each other, and thus are hereinafter referred to as 'PUSCH for SDT'.

In other words, in embodiments described below, 'PUSCH for PRACH' may mean at least one of i) msg3 and/or ii) msgA, and 'PUSCH for SDT' may mean at least one of i) PUSCH for CG-SDT and/or ii) PUSCH for RA-SDT.

In addition, for convenience of description of the priority rule below, PUSCH used for RA based SDT is denoted as RA-SDT, and PUSCH used for CG-based SDT is denotes as CG-SDT.

1. Rule # 1: SRS for positioning > PUSCH for RACH > PUSCH for SDT

According to the present embodiment, a rule defining SRS for positioning as the highest priority is defined. The rule according to the present embodiment considers the following technical matters.

For positioning measurement, the UE performs SRS for positioning transmission after a positioning related request is delivered from the LMF. Currently, in Rel-17, semi-persistent SRS transmission is requested as necessary for power saving of the UE. In the present embodiment, a request for SRS transmission (for positioning) itself is determined as a request considering an emergency situation, etc., and the SRS for positioning is given the highest priority.

Here, in case of PUSCH for RACH and RA-SDT, resources can be independently configured by the base station, so a collision cannot occur. On the other hand, the collision may occur in the CG-SDT. Specifically, in the CG-SDT, since resource allocation is repeatedly possible, collision with PUSCH for PRACH transmitted later may occur. In general, if it is determined that the RACH procedure is more important than data transmission, the rule (i.e., Rule #1) according to the present embodiment may be applied. In this instance, since the UE can determine that the PUSCH for SDT(RA-SDT) is invalid, the UE may expect not to transmit a related preamble in a previous slot. The reason for this rule is as follows. In the case of CG-SDT, this is because the UE determines that the PUSCH resource is invalid when the collision occurs, and the UE may then attempt the RA-SDT in a duration in which the collision does not occur.

2. Rule #1-1: SRS for positioning > PUSCH for SDT > PUSCH for RACH

According to the present embodiment, SRS for positioning is given the highest priority for the same reason as the Rule # 1, but the CG-SDT is given a higher priority than PUSCH for RACH. That is, the present embodiment is a method of giving the importance of small data higher than that of RACH. The rule according to the present embodiment considers the following technical matters. In the case of SDT, a state transition to RRC connected state is unnecessary because an amount of data to be transmitted is small, and thus PRACH transmission (e.g., preamble transmission) is unnecessary. Considering this, the RA-SDT may be defined as having a priority over the PUSCH for RACH. In this instance, since the UE can determine that the PUSCH for SDT (RA-SDT) is invalid, the UE may expect not to transmit a related preamble in a previous slot.

3. Rule #2: PUSCH for RACH > SRS for positioning > PUSCH for SDT

According to the present embodiment, associated data (msg2, msgA PUSCH) is defined as the highest priority based on the priority of the PRACH. Other data (for SDT) is configured as a lower priority than the SRS for positioning due to the reason described in the Rule #1 ('emergency situation').

The SRS for positioning has a higher priority than the PUSCH for RA-SDT. The UE may determine that the resources (i.e., the resource for the PUSCH for RA-SDT) are invalid due to overlapping between the SRS for positioning and the PUSCH for RA-SDT. Afterwards, the UE may use a general preamble other than a preamble for the SDT when selecting the preamble. Since a plurality of SDTs can be configured, they may affect delay in the location measurement. Considering this, in the rule according to the present embodiment, the priority of the SRS for positioning is configured to be higher than the priority of data (i.e., PUSCH for SDT).

Based on the priority rule according to the present embodiment, the UE may prioritize the SRS for positioning transmission rather than the transmission of the SDT (i.e., in symbol(s) where the collision occurs, the UE may drop the SDT and perform the transmission of the SRS for positioning). Afterwards, the UE may transit to the RRC connected state and transmit data.

If repetition of the SRS is set to be long, the SRS may collide with the PUSCH for SDT. Hence, when the SRS is dropped, a delay for the SRS for positioning transmission may occur. According to the present embodiment, the SRS for positioning is configured to be higher in priority than the PUSCH for SDT, and the SRS is not dropped when the collision occurs as in the above example. Therefore, the delay in the location measurement can be prevented.

In the case of CG-SDT, the UE may determine that the PUSCH resource where the collision occurs (e.g., the symbol(s) where the collision occurs) is invalid. Then, the UE may perform the RA-SDT. When a collision occurs between the RA-SDT and other transmissions, after that time point, the UE may retry the RA-SDT transmission based on a configured/indicated backoff indicator (BI).

4. Rule #2-1: PUSCH for RACH > CG-SDT > SRS for positioning > RA-SDT

This rule is a method of giving a highest priority to PUSCH for RACH as in the reason described in the Rule #2. According to the present embodiment, priorities of SRS for positioning and SDT are defined differently depending on a type of the SDT (i.e., CG-SDT or RA-SDT). Specifically, the CG-SDT is configured to be higher in priority than the SRS for positioning, and the RA-SDT is configured to be lower in priority than the SRS for positioning.

When small data transmission is needed, the UE expects to perform first the CG-SDT. Therefore, the UE may expect to perform the SDT through the CG- SDT as soon as possible and to perform the SRS transmission from remaining SRS resources for positioning before the deactivation for semi-persistent is delivered. In the case of RA-SDT, the UE may expect to attempt retransmission through the RA-SDT as indicated by BI.

### 5. Rule #2-2: PUSCH for RACH > RA-SDT > SRS for positioning > CG-SDT

This rule is a method of giving a highest priority to PUSCH for RACH as in the reason described in the Rule #2 and varying a priority of SRS for positioning depending on a type of SDT. When small data transmission is needed, the UE may first perform CG-SDT. Since the UE only needs to perform RA-SDT in the event of failure of CG-SDT, the priority of the SRS for positioning is configured to be higher than the priority of CG- SDT in the present embodiment.

Since the RA-SDT is a method performed when the CG-SDT cannot be performed, the priority of the RA-SDT is configured to be higher than the priority of the SRS for positioning in the present embodiment. That is, if a collision occurs between the SRS for positioning and the CG-SDT, the UE may perform the SRS for positioning and not perform the CG-SDT. The UE may determine that the CG-SDT is invalid, and then perform RA-SDT.

### 6. Rule #2-3: PUSCH for SDT > SRS for positioning > PUSCH for RACH

This rule is a method of giving a highest priority to small data transmission. The present embodiment considers a case where contents of small data to be transmitted are determined to be very important.

Based on the priority rule according to the present embodiment, if a collision occurs between the SRS and the PUSCH, the UE may operate as follows. 1) If the configured PUSCH resource is used for SDT(RA-SDT), the UE may suspend SRS transmission and select and transmit a preamble for SDT before the corresponding time point. 2) If a collision occurs between a PUSCH resource related to a RACH procedure and an SRS resource, the UE may perform SRS transmission, and may not transmit a preamble related to the RACH procedure (i.e., may not transmit a preamble and a PUSCH related to the RACH procedure).

### 7. Rule #3: PUSCH for RACH >PUSCH for SDT > SRS for positioning

According to the present embodiment, a priority of PUSCH transmission is defined to be higher than a priority of SRS for positioning. According to the priority rule of the present embodiment, data transmission at the UE side may be considered to be more important than location measurement. For example, based on the data transmission at the UE side being determined to be more important than the location measurement, the priority rule according to the present embodiment may be applied.

The UE may not perform SRS transmission in all the SRS resources for positioning (e.g., resources configured by SRS-PosResource) configured to overlap with other transmissions (PUSCH for RACH/PUSCH for SDT). In this instance, if a Tx spatial filter of the configured PUSCH is the same as a Tx spatial filter configured in the SRS resources for positioning, the UE may perform transmission of the SRS for positioning in resources, where the collision does not occur, based on a capability. The resources where the collision does not occur may refer to resources (e.g., OFDM symbol(s)) in which other transmission is not scheduled. In this regard, specific examples are described.

1) The UE may drop the SRS in resources (e.g., OFDM symbols) overlapping with other transmission among resources for SRS transmission within the same slot irrespective of the condition of the TX filter.

2) For resources (e.g., OFDM symbols) not overlapping with other transmission among resources for SRS transmission within the same slot, the UE may operate as follows.

2-1) If the TX filters applied to the SRS and the other transmission are the same, the UE may transmit the SRS only in OFDM symbols where the collision does not occur (i.e., resources at a location where no overlap occurs).

2-2) If the TX filters applied to the SRS and the other transmission are not the same, the UE may not perform the SRS transmission.

### 8. Rule #3-1: CG-SDT > PUSCH for RACH > SRS for positioning

According to the present embodiment, as described in the Rule #3, a priority of PUSCH transmission is defined to be higher than a priority of SRS for positioning. When the UE attempts the SDT transmission based on the CG, the associated RACH procedure is stopped. That is, the priority rule according to the present embodiment prioritizes the SDT transmission over the PRACH for other purposes than the SDT. For example, if contents transmitted through the SDT consist of critical information, the priority rule according to the present embodiment may be applied. In the same manner as described in the Rule #3, if a Tx spatial filter of the configured PUSCH is the same as a Tx spatial filter configured in the SRS resources for positioning, the UE may perform transmission of the SRS for positioning on resources, where a collision does not occur, based on a capability.

In addition, the above-described priority rule may be defined based on a simple comparison between physical channels, not based on the purpose (RACH or SDT, etc.). That is, priority may be simply defined for collisions between PUSCH/PUCCH/SRS.

As an example, the SRS for positioning may have the lowest priority. Here, the PUCCH may refer to a PUCCH related to the SDT. For example, the PUCCH may refer to a PUCCH related to feedback (ACKNACK) of the base station after performing the SDT. Since the PUCCH is a channel for data transmission and feedback (PUCCH) related to the data transmission, it may be determined that it is important to prioritize the data transmission over transmission of a reference signal. Considering this, the PUCCH may have a higher priority than the SRS for positioning. That is, the SRS for positioning may have a lower priority than all other UL channels if it is transmitted in an inactive state. Based on the capability of the UE, transmission of the SRS for positioning is not performed in a partially overlapped portion, and transmission of the SRS for positioning may be performed in a portion where no collision occurs (e.g., non-overlapped symbol(s)). The UE may forward/transmit the capability to the base station or the LMF.

As an example, a priority of the SRS for positioning may be higher than a priority of the PUCCH. Specifically, the priority of the SRS for positioning may be lower than a priority of the PUSCH but higher than the priority of the PUCCH. The present embodiment takes the following technical matters into consideration. The PUCCH in the current RRC inactive state is transmitted for a response of the base station to data in the CG-SDT. That is, since the main purpose of the CG-SDT is data transmission of the UE, the response of the base station to the data may be less important than the data transmission. Considering this, the SRS for positioning may be configured to be higher in priority than the PUCCH.

If a BW for the SRS for positioning transmission is configured to be large, including an initial BWP, the UE may transmit the PUSCH in time/frequency resources colliding with PUSCH for SDT and/or RACH and expect the SRS for positioning transmission in the remaining resources. This is because performance for location measurement may be poor in terms of performance, but dropping the remaining portion may be inefficient in terms of resource efficiency. Here, a power prioritization rule may be applied between the SRS and the PUSCH which are FDMed (frequency division multiplexing). The transmit power for the SRS/PUSCH may be determined by the rule as follows. Based on a collision rule, the transmit power may be first allocated for the PUSCH within the allowable transmit power, and the remaining power may be used for the transmission of the SRS for positioning.

If the UE operates not to transmit PUSCH for RACH or RA-SDT colliding with the SRS because the SRS for positioning has the high priority in the rule, the UE may not transmit related msgA preamble or msg1 (related RA-SDT).

The rule(s) listed above have been described focusing on the SRS for positioning, but the rules can also be applied when performing general SDT. Specifically, even if the SRS for positioning is excluded, when the UE attempts CG-SDT, a collision between multiple PUSCH resources and PRACH or PUSCH associated with a normal PRACH procedure not the RA-SDT (e.g., a RACH procedure triggered by another event not the SDT) may occur. Accordingly, the priority rules described above may be applied for collision handling with other UL channels in the SDT.

A preamble (e.g., PRACH) used for the RACH procedure in the above description may have the highest priority regardless of whether to perform the SDT. In other words, the PRACH preamble may have the highest priority regardless of whether the RACH procedure has been triggered for the SDT. However, since the preamble for RA-SDT is selected and transmitted by the UE for data transmission, a priority of the preamble for RA-SDT may be configured to be the same as a priority of the RA-SDT.

In the above rule, the CG-SDT may include a PUCCH for CG-SDT. The CG-SDT and the PUCCH have an equivalent relationship, unless otherwise stated. That is, the PUCCH for CG-SDT may follow the priority rule described above. This is because, in the case of PUCCH transmitted in the RRC inactive state, the PUCCH is transmitted only for the current CG-SDT.

It may be assumed that all the PUSCHs used regardless of the RACH or SDT purpose have the same priority in the above rule. In this case, the priority of the SRS for positioning may be lower than the priority of the PUSCH, but higher than the priority of the priority of the PUCCH. The reason for this is as follows. This is because the PUCCH is a resource used for a response of the CG-SDT, and even if no response is given, the UE using the CG- SDT expects to try again RA-SDT or CG-SDT in the future.

According to an embodiment, a capability related to the above-described priority rule may be defined/reported. That is, the UE may transmit capability information related to the above-described priority rule (and/or SRS for positioning in RRC INACTIVE state (mode)) to the base station. The capability may be based on at least one of the following examples.

As an example, the capability may be related to whether to support the SRS for positioning in the RRC INACTIVE state (mode). The UE may transmit, to the base station, capability information including information representing whether to support the SRS for positioning in the RRC INACTIVE state (mode). As a specific example, the capability information may include 1) information (e.g., srs-PosResourcesRRC-Inactive-r17) representing whether positioning SRS transmission in the RRC INACTIVE state (mode) for an initial UL BWP is supported and/or 2) information (e.g., posSRS-RRC-Inactive-OutsideInitialUL-BWP-r17) representing whether positioning SRS transmission outside the initial UL BWP in the RRC INACTIVE state (mode) is supported.

The capability information according to the present embodiment may be based on Table 16 below.

[Table 16]

| |
|---|
| ***srs-PosResourcesRRC-Inactive-r17***<br>Indicates support of positioning SRS transmission in RRC_INACTIVE for initial UL BWP. The capability signalling comprises the following parameters:<br>    - *maxNumberSRS-PosResourceSetPerBWP-r17* Indicates the max number of SRS Resource Sets for positioning supported by UE;<br>    - *maxNumberSRS-PosResourcesPerBWP-r17* indicates the max number of P/SP SRS Resources for positioning;<br>    - *maxNumberSRS-ResourcesPerBWP-PerSlot-r17* indicates the max number of P/SP SRS Resources for positioning per slot;<br>    - *maxNumberPeriodicSRS-PosResourcesPerBWP-r17* indicates the max number of periodic SRS Resources for positioning;<br>    - *maxNumberPeriodicSRS-PosResourcesPerBWP-PerSlot-r17* indicates the max number of periodic SRS Resources for positioning per slot.<br>NOTE: OLPC for SRS for positioning based on SSB from the last serving cell (the cell that releases UE from connection) is part of this feature. No dedicated capability signalling is intended for this component<br>***posSRS-RRC-Inactive-OutsideInitialUL-BWP-r17*** |
| Indicates support of Positioning SRS transmission in RRC_INACTIVE state configured outside initial UL BWP. The capability signalling comprises the following parameters:<br>    - *maxSRSposBandwidthForEachSCS-withinCC-FRI-r17* Indicates the maximum SRS bandwidth supported for each SCS that UE supports within a single CC for FR1;<br>    - *maxSRSposBandwidthForEachSCS-withinCC-FR2-r17* indicates the maximum SRS bandwidth supported for each SCS that UE supports within a single CC for FR2;<br>    - *maxNumOfSRSposResourceSets-r17* indicates the max number of SRS Resource Sets for positioning supported by UE;<br>    - *maxNumOfPeriodicSRSposResources-r17* indicates the max number of periodic SRS Resources for positioning;<br>    - *maxNumOfPeriodicSRSposResourcesPerSlot-r17* indicates the max number of periodic SRS Resources for positioning per slot;<br>    - *differentNumerologyBetweenSRSposAndInitialBWP-r17* indicates the support of different numerology between the SRS and the initial UL BWP;<br>    - *srsPosWithoutRestrictionOnBWP-r17* indicates the support of SRS operation without restriction on the BW: BW of the SRS may not include BW of the CORESET#0 and SSB;<br>    - *maxNumOjPeriodicAndSemipersistentSRSposResources-r17* indicates the max number of P/SP SRS Resources for positioning;<br>    - *maxNumOfPeriodicAndSemipersistentSRSposResourcesPerSlot-r17* indicates the max number of P/SP SRS Resources for positioning per slot;<br>    - *differentCenterFreqBetweenSRSposAndInitialBWP-r17* indicates the support of a different center frequency between the SRS for positioning and the initial UL BWP;<br>    - *switchingTimeSRS-TX-OtherTX-r17* indicates the switching time between SRS TX and other TX in initial UL BWP or RX in initial DL BWP |

| |
|---|
|     - *maxNumOfSemiPersistentSRSposResources-r17* indicates the max number of semi-persistent SRS Resources for positioning;<br>    - *maxNumOfSemiPersistentSRSposResourcesPerSlot-r17* indicates the max number of semi-persistent SRS Resources for positioning per slot.<br>The UE can include this field only if the UE supports *srs-PosResourcesRRC-Inactive-r17*. Otherwise, the UE does not include this field;<br>NOTE 1: The SRS should have a *locationAndBandwidth,* SCS, CP, defined the same way as a legacy BWP.<br>NOTE 2: If *differentCenterFreqBetweenSRSposAndInitialBWP-r17* is not signalled, the UE only supports same center frequency between the SRS for positioning and initial UL BWP.<br>NOTE 3: If *differentNumerologyBetweenSRSposAndInitialBWP-r17* is not signalled, the UE only supports same numerology between the SRS and the initial UL BWP. |

(continued)

| | |
|---|---|
| NOTE 4: If *srsPosWithoutRestrictionOnBWP-r17* is not signalled, the UE supports only SRS BW that include the BW of the CORESET #0 and SSB. | |
| NOTE 5: The fields of *maxNumOfSemiPersistentSRSposResources-r17* and *maxNumOfSemiPersistentSRSpos-ResourcesPerSlot-rl7* shall be reported together if supported by UE. One of the fields between *maxSRSposBandwidthForEachSCS-withinCC-FRI-r17* and *maxSRSposBandwidthForEachSCS-withinCC-FR2-r17*, and the fields of *maxNumOfSRSposResourceSets-r17, maxNumOfPeriodicSRSposResources-r17, maxNumOfPeriodicSRSpos-ResourcesPerSlot-r17, maxNumOfPeriodicAndSemipersistentSRSposResources-r17, maxNumOfPeriodicAndSe mipersistentSRSposResourcesPerSlot-r17,* and *switchingTimeSRS-TX-OtherTX-r17* shall be | |
| reported together if supported by UE. | |
| NOTE 6: srsPosWithoutRestrictionOnBWP-r17 is not applicable to FDD or SUL bands. | |

As an example, the capability may relate to a unit that applies a priority. Specifically, the capability information may include information representing whether the above-described priority rule for at least one of a symbol, a slot, or a subframe is supported by the UE. If multiple units (e.g., symbols and slots) are supported at the same time, the UE may report whether the multiple units can be supported. The base station or the LMF may indicate/configure a unit for applying the priority rule based on the capability information. Configuration information based on the capability may be transmitted via LPP, RRC or MAC. For example, the base station may transmit the configuration information based on the capability to the UE based on at least one of an LPP message, an RRC message, or MAC CE.

According to an embodiment, the priority rule may be defined/represented as bitwise information.

For example, the bitwise information may be one-to-one mapping of bits (or bit values) and the priority rules. The priority may be flexibly changed as the base station or the LMF configures the bitwise information to the UE.

For example, the bitwise information may represent specific priority rules selected from among the above-described priority rules (Rule #1 to Rule #3-1) in the form of bitwise. If '3 bits' are allocated to all bits for priority, the three bits may be sequentially associated with the Rules #1, #3 and #5 from the lowest bit (e.g., the Rule #1 is '001', the Rule #3 is '010', and the Rule #5 is '100'), respectively. The base station or the LMF may set ('ON') only one bit of the 3 bits to '1' and transmit it to the UE.

The bitwise information may be transmitted directly to the UE from the LMF via LPP.

Alternatively, information related to the bitwise information may be transmitted to the base station from the LMF via LPPa. The base station may indicate/configure information related to the priority rules (based on the bitwise information) to the UE via RRC/MAC.

According to an embodiment, when the UE reports the capability indicating whether the above-described priority rules are supported, the UE may transmit corresponding support information (i.e., information related to the capability) to the LMF. The base station or the LMF may configure a window, in which the priority rule is valid, to the UE via LPP/RRC/MAC. That is, the UE may apply the above-described priority rule in a duration indicated/configured by the base station/LMF. A remaining duration (a duration other than the indicated/configured duration) may be given a priority by implementation of the UE or may follow a single priority (e.g., default priority) according to the rule. A start (or start point) of the duration (i.e., the window in which the priority rule is valid) may be based on a start/end point of a channel regularly monitored by the UE, such as an SSB or a paging occasion. The window may be as much as a defined duration starting from a start point based on the start/end point of the channel. In other words, the window may end when time as much as the duration defined above elapses from the corresponding start point. Further, the window may have a periodicity. A start point of the window may be time at which the UE receives a request for the SRS for positioning transmission, or a start point of the most contiguous SRS for positioning.

If the priority is determined within the window, capability reporting may be performed for each UE as to whether the priority is supported/applied in units of symbol, slot, or subframe. Specifically, the UE may report, to the LMF or the base station, whether the priority determined within the window is supported per unit.

Not only semi-persistent SRS for positioning transmission in the RRC inactive state but also aperiodic SRS for positioning transmission and/or periodic SRS for positioning transmission may be supported. In this case, the priorities of the respective SRSs may follow as it is a priority (aperiodic > semi-persistent > periodic) applied in RRC connected state, and the above-described priority rules may be additionally applied unless they are mutually exclusive.

Although the above-described priority rules have been described focusing on the SRS for positioning in the RRC inactive state, the above-described priority rules can also be applied to SRSs for other purposes. Specifically, a normal SRS used for beam management, channel estimation, or antenna switching may be transmitted in the RRC inactive state. In this case, the normal SRS may follow the above-described priority rules. Here, the normal SRS may refer to an SRS configured with a usage according to other purposes, not for positioning. The usage may be configured with one of beamManagement, codebook, nonCodebook or antennaSwitching.

If the normal SRS and the SRS for positioning are transmitted within a single CC, the normal SRS may have a lower priority than the SRS for positioning. The rule may be applied to other UL RSs in the RRC inactive state.

The need for the priority rules described above may be based on Table 17 below.

【Table 17】

> The one of the additional points that should be discussed is a collision handling between SRS for positioning and other UL channels in the RRC inactive state. In case of PRS, the priority rule is agreed as shown in the below.
>
> > Agreement:
> >
> > - From RAN1 perspective, in RRC_INACTIVE state, reception of DL PRS has lower priority than other DL signals/channels (SSB, SIB1, CORESET0, MSG2/MSGB, paging, DL SDT)
> >   - FFS how to determine conflicts in DL PRS and other DL signals/channels reception by UE
> >   - FFS how to handle retuning time for the case when DL PRS and other DL signals/channels are allocated in different BW and/or have the same or different SCS as initial DL BWP
> > - Send LS to RAN4 (cc RAN2) and ask if there is any feedback
>
> Currently, additional PUSCH such as CG-SDT and RA-SDT can be transmitted within the initial BWP in addition to PUSCH for both msg3 and msgA PUSCH. Furthermore, PUCCH also can be transmitted in case of CG-SDT. So, considering the facts that SRS for positioning can be configured to occupy at most 12 symbols in one slot and limited uplink resources, a priority rule between SRS for positioning and other UL channels (e.g., PUSCH and PUCCH) should be discussed and defined to avoid collision between SRS for positioning and other UL channels (e.g., PUSCH and PUCCH).

An embodiment (e.g., Rule #2) in which the PUSCH for RACH has a higher priority than the SRS for positioning as described above may be based on an observation and a proposal according to Table 18 below.

[Table 18]

> ***Observation #2:***
> > • The SRS for positioning can collide with the following UL channels in the RRC Inactive state:
> > > ✔ PUSCH (in both SDT and RACH procedures(except for RA-SDT))
> > > ✔ PUCCH (in CG-SDT procedure)
>
> ***Proposal #2:***
> > • RAN1 should discuss/define a priority rule between SRS for positioning and other UL channels (e.g., PUSCH and PUCCH).
> Regarding the issue, it would be fully acceptable/considerable that PUSCH in the RACH procedure (except for RA-SDT) needs to have higher priority than SRS for positioning since the common RACH procedure is the one of the major procedure in the RRC inactive state and it is used for many purposes.

An embodiment (e.g., Rule #2) in which the SRS for positioning has a higher priority than the SDT (e.g., at least one of RA-SDT and/or CG-SDT) as described above may be based on an observation and a proposal according to Table 19 below.

[Table 19]

> ***Observation #3:***
> > • Except for RA-SDT, PUSCH in the common RACH procedure needs to have higher priority than SRS for positioning since the common RACH procedure is the one of the major procedure in the RRC inactive state and it is used for many purposes.

(continued)

| |
|---|
| ***Observation #3:***<br>But for SDT, at least we think that RAN1 should consider the issue from the efficiency of view and also need to figure out carefully which has more critical impact between SRS for positioning and PUSCH/PUCCH for SDT. In case of CG-SDT, |
| multiple resources can be configured and then the resources might be reserved until the UE is ready to transmit small data. When the SRS for positioning has lower priority than PUSCH/PUCCH for SDT and the resource are overlapped, not only do resources for PUSCH/PUCCH can be abandoned even UE does not ready for transmission of SDT, latency for positioning measurement would increase. Furthermore, even though the small data cannot transmit at this time, the UE spontaneously regards the PUSCH for SDT as invalid and then the small data can be naturally transmitted through RA-SDT procedure. For RA-SDT, even though UE also fails to attempt transmission of SDT when SRS for positioning has high priority and the resource are overlapped, UE can repeat it several times in accordance with back-off indicator. For both case (CG/RA-SDT), we think that latency is not a crucial factor for SDT if the data transfer is transmitted properly without change of RRC state. To sum up the whole facts, RAN1 should at least adopt that SRS for positioning has higher priority than PUSCH/PUCCH for SDT. |
| ***Observation #4:***<br>  • When the SRS for positioning has lower priority than PUSCH/PUCCH for SDT and resources are overlapped, followings can be observed:<br>     ✔ Pre-configured multiple set of resources for PUSCH/PUCCH can be abandoned even though UE does not expect to use resources for CG-SDT.<br>     ✔ The latency for positioning measurement increases.<br>     ✔ Even though UE fails to attempt transmission of SDT, UE can repeat it several times.<br>        ▪ Latency is not a crucial factor for SDT if the data transfer is transmitted properly without change of RRC state. |
| ***Proposal #3:***<br>  • For priority rule between SRS for positioning and other UL channels (e.g. PUSCH and PUCCH), RAN1 should adopt following rules:<br>     ✔ SRS for positioning has higher priority than PUSCH/PUCCH for SDT<br>     ✔ SRS for positioning has lower priority than other UL channel (except for PUSCH/PUCCH for SDT) |

In a UE sounding procedure for positioning purpose, an operation according to the proposal #3 in Table 17 described above may be defined as in Table 20 below.

【Table 20】

| *Proposal #4:* |
|---|
| • Adopt the following text proposal for collision handling between SRS-Pos and other UL channels in 38.214: |

| 6.2.1.4　　UE sounding procedure for positioning purposes |
|---|
| -------------------------------------------------- Unchanged part omitted -------------------------------------------------- --- |
| Subject to UE capability, the UE may be configured with an SRS resource for positioning associated with the initial UL BWP, and the SRS resource is transmitted inside the initial UL BWP during RRC_INACTIVE mode with the same CP and subcarrier spacing as configured for the initial UL BWP. Subject to UE capability, the UE may be configured with an SRS resource for positioning outside the initial BWP including frequency location and bandwidth, subcarrier spacing, and CP length for transmission of the SRS in RRC_INACTIVE mode. If the transmission of SRS for positioning outside the initial BWP in RRC_INACTIVE mode along with the switching time, indicated in higher layer parameter switchingTimeSRS-TX-OtherTX, in unpaired spectrum, subject to UE capability, collides in time domain with other DL signals or channels or UL signals or channels, the SRS for positioning transmission is dropped in the symbol(s) where the collision occurs. If the transmission of SRS for positioning outside the initial BWP in RRC_INACTIVE mode along with the switching time, indicated in higher layer parameter switchingTimeSRS-TXOtherTX, in paired spectrum or SUL band, subject to UE capability, collides in time domain with UL signals or channels on the same carrier, the SRS for positioning transmission is dropped in the symbol(s) where the collision occurs. The SRS resource for positioning outside the initial BWP in RRC_INACTIVE mode is configured in the same band and CC as the initial UL BWP. |

| The UE in RRC_INACTIVE mode expects to prioritize an SRS configured by the higher layer parameter SRS-PosResource than the transmission of configured grant Type 1 PUSCH and PUCCH with HARQ-ACK information associated with the PDSCH receptions as described in Clause 19.1 of [6, TS38.213]. The UE expects to prioritize an SRS configured by the higher layer parameter SRS-PosResource than the transmission of PUSCH in as defined in Clause 19.2 of [6, TS 38.213]; otherwise, the UE dose not expect to prioritize SRS for positioning than UL channels/signals. |

A method of configuring/indicating the above-described priority rule is described below.

From a perspective of an operation of a base station (and/or LMF), it is necessary to define how to forward/-configure the above-described priority rule (i.e., priority rule between an SRS and other UL channels in RRC inactive state) to the UE.

For example, priorities of other channels with respect to SRS for positioning of a UE need to be defined based on the above-described embodiments (e.g., at least one of the Rule #1, the Rule #1-1, the Rule #2, the Rule #2-1, the Rule #2-2, the Rule #2-3, the Rule #3, or the Rule #3-1). A method of configuring/indicating the priorities is described below.

Depending on scenarios described below, channels and related procedures required for the delivery of information related to the priorities may vary.

Hereinafter, an SRS for positioning is denoted as 'SRSp' so as to be distinguished from an SRS ('SRSn') configured/transmitted for usage of beam management, antenna switching, etc. However, the expressions 'SRSp' and 'SRSn' are merely for ease of description and distinction, and are not intended to limit the technical idea of embodiments described below to the above expression. That is, the SRSp may refer to the SRS for positioning, and the SRSn may refer to an SRS configured with a usage for purposes other than positioning. The usage may be one of beamManagement, codebook, nonCodebook, or antennaSwitching.

Information on a priority described below may be divided into a plurality of options to cover multiple use cases. Each option may include a plurality of states. A priority may be configured by each state. The state for each option may be defined in the regulations.

The LMF or the base station may directly or indirectly indicate/configure priority information for the options and the states to the UE based on scenarios # 1/#2 described below.

For example, the LMF may directly indicate/configure information related to the above-described priority rules to the UE based on A of the scenario # 1 described below. The LMF may indirectly indicate/configure information related to the above-described priority rules to the UE based on B (i~iv) of the scenario #1 described below (i.e., LMF → base station → UE).

For example, the base station may indicate/configure information related to the above-described priority rules to the UE based on at least one of A to D of the scenario #2 described below.

As an example, priority information may include three options for a priority of the SRSp. And/or, options 1/2/3 may have 2/3/2 states, respectively. The SRSp may have a highest priority based on the option # 1. The SRSp may have a lower priority than a preamble based on the option #2. The SRSp may have a lowest priority based on the option#3.

Priorities of the SRSp, PUSCH, and PUCCH may be divided into high and low priorities based on two states of the option #1. For example, the SRSp may have a higher priority than the PUSCH/PUCCH based on a first state of the option #1. The SRSp may have a lower priority than the PUSCH/PUCCH based on a second state of the option #1.

Similar to this, priorities based on the option #2 may be subdivided based on three states of the option #2. For example, a priority between the SRSp and other UL channels may be defined based on the three states of the option #2.

According to an embodiment, the priority rules may be defined based on a plurality of options without distinction of the above-described states. The base station or the LMF may transmit priority information including a single value or a plurality of values for each of the following scenarios to the UE in indicating/configuring the priorities according to the regulations. Here, each of the plurality of values may be a value assigned to indicate an option and configure/indicate priorities based on states belonging to the option.

Priority information (i.e., information related to the priority rules) for the SRSp and other UL channels in the RRC inactive state may be defined/configured based on the above-described methods. The priority information (i.e., information related to the priority rules) may be transmitted from the LMF and/or the base station to the UE via different physical channels or signaling based on the following scenarios.

1. Scenario #1: LMF initiated

This scenario is a method in which the LMF selects priority information and transmits it to the UE. In general, the LMF may not recognize RRC state of the UE. To this end, each base station may inform the LMF of whether a state transition for the RRC state of the UE is performed, via NRPPa message. In this scenario, even if the LMF sends the priority information to the UE, it may not be necessary for the UE to inform the base station of the priority information received from the LMF. The reason for this operation is as follows.

The UE may not transmit the priority information to the base station in that the positioning is directly calculated/managed by the LMF.

Alternatively, the LMF may send a priority (priority information) to the UE and at the same time send the priority information to the base station. Therefore, the UE may not transmit the priority information to the base station in order to reduce unnecessary signaling. The reason why the priority information is also transmitted to the base station is that it may be necessary to configure a resource such as a preamble occasion or an SDT in the base station. For message transmission related to the priority information, the corresponding information (information related to the priority rules) may be added to an existing specific NRPPa message, or an additional NRPPA message and a related procedure may be additionally defined.

A. Direct indication (LMF → UE)

This method is a method in which the LMF directly transmits a priority to the UE. For SRSp resource configuration, the gNB directly transmits/configurates it to the UE. Therefore, information on a priority of the SRSp may be transmitted through an existing LPP message to support the corresponding method. As an example, priority information for the SRSp may be transmitted together in addition to existing provided information through assistance information that delivers the configuration of the existing DL PRS resource. The information may also be transmitted via physical channel/signal described in the scenario #2.

B. Indirect indication (LMF → gNB → UE)

Since the base station has the right to select and determine resources for the SRSp, the LMF may include information on a preferred priority within the NRPPa message below in the base station and transmit the information to the base station. Finally, the determination of the priority may be performed by the base station. The base station may transmit information on the determined priority to the UE via the physical channel/signal described in the scenario #2.

i. In activation request/deactivation message (in NRPPa message)

The LMF may send a message including information related to an SRS resource set/SRS resource to the base station. The SRS resource set/SRS resource may be an SRS resource set or an SRS resource for which triggering is required when the base station requests the UE to transmit semi-persistent (SP)/aperiodic (A) SRS.

The SP/P SRSp may be supported in the RRC inactive state. Based on the above-described operation, the LMF may add priority information for the SRSp to the existing activation request/deactivation message and transmit it to the base station. Here, based on the priority information included in the deactivation message, the UE may operate on the assumption that the indicated/associated priority has expired or is invalid.

ii. In positioning information request (in NRPPa message)

The original purpose of the corresponding message is for the LMF to transmit resource information (e.g., resource type/# of periodic transmission, BW/SRS resource set, etc.) that would like to be further considered when the LMF configures the SRS resource to the base station. This message (positioning information request) is a common message that is not related to a type (P/SP/A) of the SRSp. Therefore, if a priority of the SRSp does not depend on the type, the LMF may indirectly provide preferred priority information to the base station through the message. The base station may transmit the priority information received from the LMF to the UE.

iii. In measurement request (NRPPa message)

This message is a message transmitted when the LMF indicates a measurement report from the base station. The LMF may transmit together priority information within the message. After the base station receives the priority information, the base station may perform an update of SRS resource on the UE based on the received priority information. The update of the SRS resource may be performed via RRC or system information. If the priority information is transmitted via the system information, an update of the system information may also be required.

iv. In assistance information control (NRPPa message)

The LMF transmits a message (assistance information control) to the base station for assistance information broadcasting. The message includes assistance data related to DL PRS (related with posSIB) to be broadcasted by the base station. As an example, the present embodiment may be applied based on determining that there is little change in a priority related to the SRSp.
The base station may update the priority based on the information obtained through the message when the SRS resources are configured and may transmit the priority to the UE.

2. Scenario #2: gNB initiated

Through the scenario #1, the base station may transmit the priority information received from the LMF to the UE via system information/RRC/MAC.
The scenario #2 is a case in which it is considered that the base station configures its own priority regardless of whether or not there is configuration/indication of the LMF and indicates/configures the priority to the UE. If the base station directly configures the priority, the priority information does not need to be additionally transmitted to the LMF, and a physical channel on which the priority information is transmitted may vary depending on the RRC state of the UE.
The base station may indicate the priority information via RRC/system information/MAC-CE.
For example, the base station may directly indicate priority information related to the SRSp of the RRC inactive state in the RRC connected state of the UE, and the UE may apply the indicated/configured priority information in the RRC Inactive state.
For example, the base station may configure it to the UE in the RRC inactive state via a physical channel described below.
For example, the base station may directly indicate the priority information in the RRC inactive state to the UE through an RRC connection release message (e.g., RRC release message).
When there is no special additional indication/configuration for the configured priority information in the RRC connected state, the UE may transmit the SRSp in the RRC inactive state based on the priority information.
Physical channels used by the base station to transmit priority information for the SRSp to the UE are described in detail below. Based on the physical channels described below, a single or a plurality of bit information as described above may be transmitted from the base station to the UE via each channel. All information may be sent to each single channel (e.g., PDCCH or PDSCH) required for each procedure. Alternatively, each information may be split and transmitted through a plurality of channels (e.g., PDCCH and PDSCH).

A. In UL-SDT procedure (Response of UL SDT (PDCCH and/or PDSCH)

According to the present embodiment, priority information for the SRSp may be transmitted along with a response to the UL SDT.

Specifically, when the UE transmits data on a preset PUSCH resource for data transmission, the base station may send a response to the data and additional information to the UE via the PDCCH and the PDSCH. In this instance, the base station may transmit together priority information on the SRSp to the UE in addition to response information on the basic UL-SDT.

The UE may prioritize the SRSp configured after the time of receiving the priority information to transmit the SRSp. This method may be constrained because the base station can transmit the information after the UE triggers the UL-SDT.

B. In DL-SDT procedure (PDCCH and/or PDSCH)

According to the present embodiment, priority information for the SRSp may be transmitted through the DL SDT.

Specifically, the base station may transmit not only data information but also resource information related to the SRSp or priority information related to the SRSp to the UE by using the DL-SDT. The base station may transmit priority information based on PDCCH and/or PDSCH for the DL-SDT.

As an example, the present embodiment may be applied when the base station determines that SRSp transmission of the UE has the high priority.

C. In paging procedure (PDCCH, PDSCH)

According to the present embodiment, priority information for the SRSp may be transmitted through a paging procedure.

Specifically, considering periodic paging of the UE, the priority information may be transmitted through RAN paging triggering.

As an example, the priority information for the SRSp may be transmitted together via system information. When it is determined that the information needs to be changed, the base station may operate as follows. As an example, the base station may 'on' modification information for system information triggering the RAN paging to the UE based on the change of the system information. Specifically, the base station sends a paging message to the UE to inform the UE of the change of the system information. The UE receiving the paging message may receive new system information (system information including the changed priority information) from the base station in a modification period. For example, the base station may separately send the priority information to the UE through reserved bits of DCI.

For another example, the base station may add the priority information to record information (e.g., a paging record list) and transmit the same to the UEs. The record information may be transmitted based on a PDSCH. The record information may sequentially include priority information for each UE. For example, after M records for M UEs in the record information, N bits may be additionally allocated for priority configuration information. The record information may include priority configuration information for each of the M UEs (e.g., the priority configuration information for each UE is N/M bit).

D. In RACH procedure (msg2/4, msgB)

According to the present embodiment, priority information for the SRSp may be transmitted through a RACH procedure.

Specifically, if there is a RACH operation on the UE side, the base station may send information on the SRSp to the UE together based on the existing msg2/4B message. And/or, the base station may send the priority information to the UE on a PDSCH related to the RACH procedure as well as a PDCCH associated with the PDSCH.

The information transmission for priority described above may be used for indication of some priorities not only in the RRC inactive state but also in the RRC connected state. In this instance, the above-described priority (i.e., priority rule) may also be equally utilized. If there is a state transition of the above-described priority, the indicated/configured priority may be deactivated. As an example, it may be assumed that the base station or the LMF separately indicates and configures the priority for the SRSp of the RRC inactive state in the RRC connected state or the RRC inactive state. In this case, the UE may follow the priority only in the RRC inactive state, and then release the indicated/configured priority and follow a default priority in the RRC connected state.

If a priority conflict occurs between information sent by the LMF and information sent by the base station (specifically, if a priority configured/indicated by the LMH is different from a priority configured/indicated by the base station), the following operation may be considered. Since the base station has the right to determine the resource configuration for the SRSp, the UE may operate by prioritizing priority information received from the base station. That is, it may be assumed that the UE receives priority configuration information from the LMF, and then additionally receives priority configuration information from the base station. The UE may operate based on a priority according to the indication/configuration of the base station. Conversely, it may be assumed that priority configuration by the base station is first performed and additional indication/configuration from the LMF is performed. The UE may follow the priority indication/configuration of the base station as it is, and may report details (or reasons) of failure to the LMF through a response message.

The above-described priority may be a priority between some UL channels and the SRSp, not a priority between all UL channels, that can be transmitted by the UE, and the SRSp. For example, the some UL channels may be UL channels determined considering a case where positioning accuracy at the UE side needs to be ensured or a case where data transmission is instantaneously determined to be more important than a configured priority. To this end, the UE may send preferred priority information to the base station or the LMF. The information may be sent via PUCCH, PUSCH, etc., used in the UL-SDT or paging or RACH procedure.

As an example, the above-described priority may be configured based on an SRS type (e.g., periodic (P)/semi-persistent (SP)/aperiodic (A)). For example, the above-described priority may be applied to all the SRS types based on one common priority information.

For example, the UE may send to the LMF whether to support the above-described priority together when sending a capability to the LMF, and the LMF may send information on the capability to the base station. Whether to support the priority may mean whether the UE supports the above-described priority rules when transmitting the SRSp in the RRC inactive state.

The information transmission method for the priority may be utilized to transmit information on a priority of PRS as well as the SRSp. The PRS is a part of accuracy enhancement of the RRC inactive state, and a priority of the PRS with respect to other DL channels (e.g., SSB, PDCCH, PDSCH, etc.) may be stipulated per the above-described option and/or state. For example, in the above-described Rules #1 to #3-1, the SRS for positioning may be changed/replaced with the PRS and applied. The LMF may directly select priority information of the PRS and provide it to the UE. The LMF may transmit the priority information to the UE and at the same time transmit it to the base station through the NRPPa message.

Since examples of the above-described proposed methods can also be included as one of various embodiments of the present disclosure, it is obvious that the examples can be considered as a kind of proposed methods. Further, the above-described proposed methods may be independently implemented, but may be implemented in the form of a combination (or merge) of some proposed methods. A rule may be defined so that a base station informs a UE of information about whether to apply the proposed methods (or information on rules of the proposed methods) via pre-defined signaling (e.g., physical layer signaling or higher layer signaling).

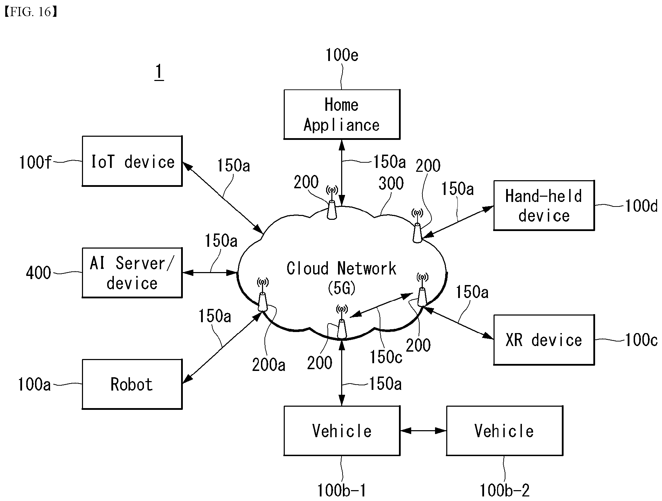

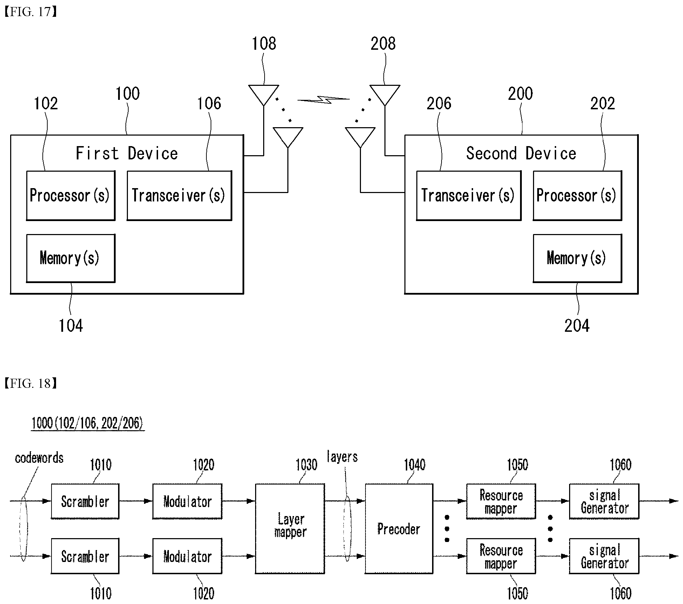

From an implementation perspective, operations (e.g., operations related to the SRS for positioning) of the UE/base station/location server according to the above-described embodiments can be processed by a device (e.g., processors 102 and 202 of FIG. 17) of FIGS. 16 to 20 to be described below.

Further, the operations (e.g., operations related to the SRS for positioning) of the UE/base station/location server according to the above-described embodiments can be stored in a memory (e.g., memories 104 and 204 of FIG. 17) in the form of commands/programs (e.g., instructions, executable codes) for running at least one processor (e.g., processors 102 and 202 of FIG. 17).

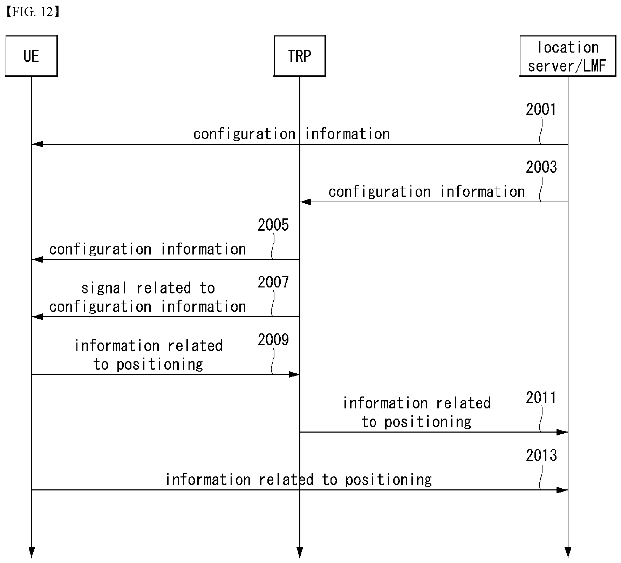

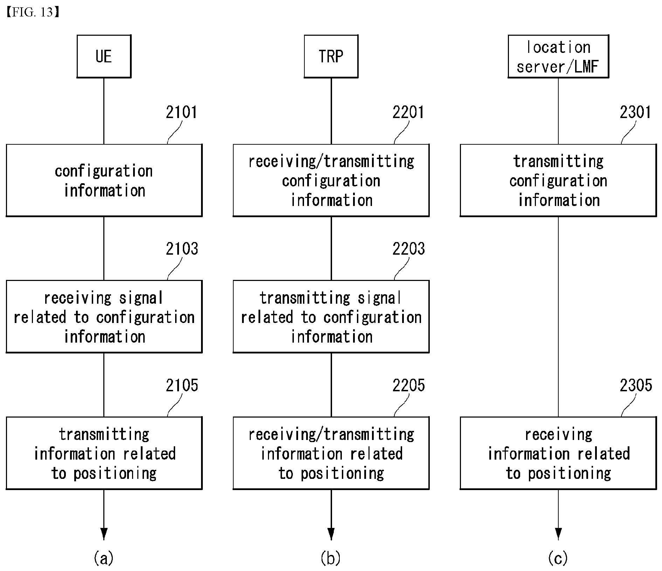

Hereinafter, operations of a UE, a base station (TRP), and a location server (LMF) to which the above-described embodiments can be combined and applied will be described in detail with reference to FIGS. 12 and 13.

FIG. 12 illustrates operations of a UE, TRP, and LMF to which a method proposed in the present disclosure can be applied.

Referring to FIG. 12, in operation 2001 according to an exemplary embodiment, the location server and/or the LMF may transmit configuration information to the UE, and the UE may receive it.

Meanwhile, in operation 2003 according to an exemplary embodiment, the location server and/or the LMF may transmit reference configuration information to a transmission and reception point (TRP), and the TRP may receive it. In operation 2005 according to an exemplary embodiment, the TRP may transmit reference configuration information to the UE, and the UE may receive it. In this case, the operation 2001 according to the exemplary embodiment may be omitted.

Conversely, the operations 2003 and 2005 according to an exemplary embodiment may be omitted. In this case, the operation 2001 according to the exemplary embodiment may be performed.

That is, the operations 2001 according to an exemplary embodiment and the operations 2003 and 2005 according to an exemplary embodiment may be optional.

In operation 2007 according to an exemplary embodiment, the TRP may transmit a signal related to configuration information to the UE, and the UE may receive it. For example, the signal related to the configuration information may be a signal for positioning of the UE.

In operation 2009 according to an exemplary embodiment, the UE may transmit a signal related to positioning to the TRP, and the TRP may receive it. In operation 2011 according to an exemplary embodiment, the TRP may transmit the signal related to positioning to the location server and/or the LMF, and the location server and/or the LMF may receive it.

Meanwhile, in operation 2013 according to an exemplary embodiment, the UE may transmit the signal related to positioning to the location server and/or the LMF, and the location server and/or the LMF may receive it. In this case, operations 2009 and 2011 according to the exemplary embodiment may be omitted.

Conversely, operation 2013 according to an exemplary embodiment may be omitted. In this case, operations 2009 and 2011 according to the exemplary embodiment may be performed.

That is, operations 2009 and 2011 according to an exemplary embodiment and operations 2013 according to an exemplary embodiment may be optional.

In an exemplary embodiment, the signal related to positioning may be obtained based on the configuration information and/or the signal related to the configuration information.

FIG. 13 is a flowchart for explaining an operation of each UE, TRP and LMF to which a method proposed in the present disclosure can be applied.

Referring to (a) of FIG. 13, in operation 2101 according to an exemplary embodiment, the UE may receive configuration information. In operation 2103 according to an exemplary embodiment, the UE may receive a signal related to configuration information. In operation 2105 according to an exemplary embodiment, the UE may transmit information related to positioning.

Referring to (b) of FIG. 13, in operation 2201 according to an exemplary embodiment, the TRP may receive configuration information from the location server and/or the LMF, and may transmit it to the UE. In operation 2203 according to an exemplary embodiment, the TRP may transmit the signal related to configuration information. In operation 2205 according to an exemplary embodiment, the TRP may receive information related to positioning, and may transmit it to the location server and/or the LMF.

Referring to (c) of FIG. 13, in operation 2301 according to an exemplary embodiment, the location server and/or the LMF may transmit the configuration information. In operation 2305 according to an exemplary embodiment, the location server and/or the LMF may receive the information related to positioning.

More specific operations, functions, terms, etc. in the operation according to each exemplary embodiment may be performed and described in combination with at least one of the various embodiments described above and the embodiments to be described later.

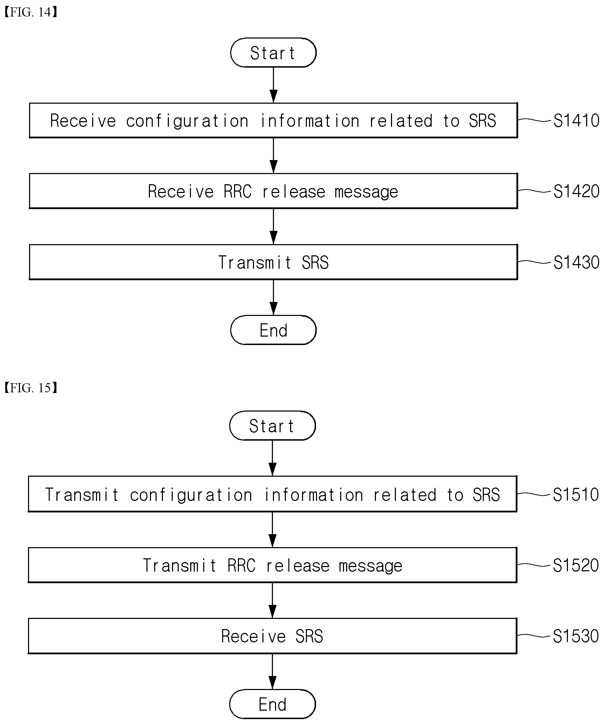

Below, the above-described embodiments are described in detail from a perspective of an operation of a UE with reference to FIG. 14. Methods to be described below are merely distinguished for convenience of explanation. Thus, as long as the methods are not mutually exclusive, it is obvious that partial configuration of any method can be substituted or combined with partial configuration of another method.

FIG. 14 is a flowchart illustrating a method performed by a UE based on an embodiment of the present disclosure.

Referring to FIG. 14, a method performed by a UE based on an embodiment of the present disclosure may comprise a step S1410 of receiving configuration information related to an SRS, a step S1420 of receiving an RRC release message, and a step S1430 of transmitting the SRS.

In the step S1410, the UE receives configuration information related to a sounding reference signal (SRS) from a base station.

For example, the configuration information related to the SRS may be based on an SRS-config information element based on Table 11. Based on the configuration information related to the SRS, an SRS (e.g., the above-described SRSp) for positioning purpose and/or an SRS (e.g., the above-described SRSn) for purposes other than the positioning purpose may be configured.

According to an embodiment, the SRS may be related to positioning. That is, the SRS may be based on the SRS (e.g., the above-described SRSp) for positioning purpose. The configuration information related to the SRS may include a list of one or more SRS-PosResourceSets and a list of one or more SRS-PosResources. The SRS-PosResourceSet is a set of SRS resources for positioning, and the SRS-PosResource is an SRS resource for positioning. One SRS resource set (SRS-PosResourceSet) for positioning may include one or more SRS resources (SRS-PosResources) for positioning. For example, one SRS-PosResourceSet may include up to 16 SRS-PosResources.

According to an embodiment, the SRS may be based on the SRS (e.g., the above-described SRSn) for purposes other than the positioning purpose. In this instance, a usage of the SRS may be configured with one of beamManagement, codebook, nonCodebook or antennaSwitching.

According to the step S1410, an operation of the UE (100/200 of FIGS. 16 to 20) to receive the configuration information related to the SRS from the base station (100/200 of FIGS. 16 to 20) may be implemented by a device of FIGS. 16 to 20. For example, referring to FIG. 17, one or more processors 102 may control one or more transceivers 106 and/or one or more memories 104 so as to receive the configuration information related to the SRS from the base station 200.

In the step S1420, the UE receives the RRC release message from the base station.

The RRC release message may be related to a release or suspension of RRC connection. An RRC state of the UE may transit from an RRC_CONNECTED state to an RRC_INACTIVE state or an RRC_IDLE state based on the RRC release message. The RRC release message may be based on Table 14. The terms 'RRC_INACTIVE state' and 'RRC_CONNECTED state' related to the RRC state of the UE can be changed/interpreted/applied to an 'RRC_INACTIVE mode' and an 'RRC_CONNECTED mode', respectively.

According to an embodiment, the RRC release message may include configuration information related to the SRS for positioning in the RRC_INACTIVE state. The configuration information related to the SRS for positioning in the RRC_INACTIVE state may include information on at least one of i) an SRS resource and/or ii) a bandwidth part (BWP). Based on the information on the BWP, the SRS may be transmitted inside or outside an initial uplink (UL) BWP.

According to an embodiment, the RRC release message may further include configuration information related to a small data transmission (SDT). The configuration information related to the SDT may include information related to a configured grant (CG)-SDT. For example, the configuration information related to the SDT may be based on SDT-MAC-PHY-CG-Config-r17 included in the RRC release message in Table 14.

According to the step S1420, an operation of the UE (100/200 of FIGS. 16 to 20) to receive the RRC release message from the base station (100/200 of FIGS. 16 to 20) may be implemented by the device of FIGS. 16 to 20. For example, referring to FIG. 17, one or more processors 102 may control one or more transceivers 106 and/or one or more memories 104 so as to receive the RRC release message from the base station 200.

In the step S1430, the UE transmits the SRS in the RRC_INACTIVE state to the base station. The SRS is the SRS for positioning purpose described above.

According to an embodiment, the SRS may be transmitted inside or outside the initial UL BWP. For example, the SRS may be transmitted inside or outside the initial UL BWP based on a capability of the UE.

Based on a transmission of the SRS for positioning for the initial UL BWP in the RRC_INACTIVE state being supported by the UE, the SRS may be transmitted inside the initial UL BWP.

Based on a transmission of the SRS for positioning configured outside the initial UL BWP in the RRC_INACTIVE state being supported by the UE, the SRS may be transmitted outside the initial UL BWP.

In this instance, a BWP (i.e., inside the initial UL BWP or outside the initial UL BWP) in which the SRS is transmitted may be determined based on the configuration information related to the SRS for positioning in the RRC_INACTIVE state included in the RRC release message.

The SRS may be transmitted based on a priority (or priority rule) (e.g., at least one of the Rules #1 to #3-1) related to the SRS for positioning.

According to an embodiment, based on the transmission of the SRS colliding with other physical signal or other physical channel in a time domain, the transmission of the SRS may be dropped or performed in at least one symbol in which the collision occurs.

Whether to perform the transmission of the SRS may be determined based on a priority between i) the SRS and ii) the other physical signal or the other physical channel. The other physical channel may include a physical channel related to the SDT.

For example, the other physical channel may include a downlink physical channel (e.g., PDCCH, PDSCH, PBCH) and/or an uplink physical channel (e.g., PRACH, PUCCH, PUSCH). For example, the other physical signal may include a downlink physical signal (e.g., CSI-RS, DL DMRS) and/or an uplink physical signal (e.g., SRS, UL DMRS).

For example, the SDT may include configured grant (CG)-SDT and/or random access (RA)-SDT. The SDT may be performed based on Tables 12 and 13.

According to an embodiment, based on the transmission of the SRS colliding with a physical channel related to the RA-SDT or the CG-SDT in the time domain, the transmission of the SRS may be dropped in at least one symbol in which the collision occurs. The present embodiment may be based on the Rule #3 described above.

According to an embodiment, based on the transmission of the SRS colliding with a physical channel related to the RA-SDT or the CG-SDT in the time domain, the transmission of the SRS may be dropped in at least one symbol in which the collision occurs. Based on the transmission of the SRS colliding with a physical channel related to the CG-SDT in the time domain, the transmission of the SRS may be performed in at least one symbol in which the collision occurs. The present embodiment may be based on the Rule #2-2 described above.

For example, the physical channel related to the CG-SDT may be a physical uplink shared channel (PUSCH) transmitted based on a configured grant in the RRC_INACTIVE state (e.g., Configured-grant based PUSCH transmission in Table 13).

For example, the physical channel related to the RA-SDT may be a physical uplink shared channel (PUSCH) transmitted based on a random access procedure in the RRC_INACTIVE state (e.g., Random-access based PUSCH transmission in Table 13).

According to the step S1430, an operation of the UE (100/200 of FIGS. 16 to 20) to transmit the SRS in the RRC_INACTIVE state to the base station (100/200 of FIGS. 16 to 20) may be implemented by the device of FIGS. 16 to 20. For example, referring to FIG. 17, one or more processors 102 may control one or more transceivers 106 and/or one or more memories 104 so as to transmit the SRS in the RRC_INACTIVE state to the base station 200.

The method may further comprise a step of transmitting the SRS in the RRC_CONNECTED state. Specifically, the UE may transmit the SRS to the base station in the RRC_CONNECTED state. The step may be performed after the step S1410 or before the step S1420. According to an embodiment, the SRS may be transmitted inside an active UL BWP.

According to the step, an operation of the UE (100/200 of FIGS. 16 to 20) to transmit the SRS in the RRC_CONNECTED state to the base station (100/200 of FIGS. 16 to 20) may be implemented by the device of FIGS. 16 to 20. For example, referring to FIG. 17, one or more processors 102 may control one or more transceivers 106 and/or one or more memories 104 so as to transmit the SRS in the RRC_CONNECTED state to the base station 200.

The method may further comprise a step of transmitting capability information. Specifically, the UE may transmit the capability information to the base station. The capability information may be related to a support of the SRS transmission for positioning in the RRC_INACTIVE state. The step may be performed before the step S1410 or before the step S1420.

Specifically, the capability information may include at least one of i) information (e.g., srs-PosResourcesRRC-Inactive-r17 in Table 16) representing whether the transmission of the SRS for positioning for the initial UL BWP in the RRC INACTIVE state is supported and/or ii) information (e.g., posSRS-RRC-Inactive-OutsideInitialUL-BWP-r17) representing whether the transmission of the SRS for positioning outside the initial UL BWP in the RRC INACTIVE state is supported. The capability information may include information based on Table 16.

The transmission (S1430) of the SRS for positioning in the RRC_INACTIVE state may be performed on the assumption that the SRS transmission inside the initial UL BWP or the SRS transmission outside the initial UL BWP is supported by the UE. Further, the SRS transmission outside the initial UL BWP may be based on the assumption that the SRS transmission inside the initial UL BWP is supported.

For example, it may be determined based on the capability information that only the transmission of the SRS for positioning inside the initial UL BWP is supported by the UE. The RRC release message may not include configuration of the BWP related to the SRS for positioning in the RRC_INACTIVE state (e.g., bwp-NUL (normal uplink carrier) in Table 14 or bwp-SUL (supplementary uplink carrier) in Table 14).

For example, it may be determined based on the capability information that the transmission of the SRS for positioning outside the initial UL BWP is supported by the UE. In this case, the RRC release message may include configuration of the BWP related to the SRS for positioning in the RRC_INACTIVE state (e.g., bwp-NUL (normal uplink carrier) in Table 14 or bwp-SUL (supplementary uplink carrier) in Table 14).

As a specific example, based on the transmission of the SRS for positioning outside the initial UL BWP being supported by the UE, and the RRC release message including the configuration of the BWP related to the SRS for positioning in the RRC_INACTIVE state (e.g., bwp-NUL in Table 14 or bwp-SUL in Table 14), the SRS may be transmitted outside the initial UL BWP.

For another example, based on the transmission of the SRS for positioning outside the initial UL BWP being supported by the UE, and the RRC release message not including the configuration of the BWP related to the SRS for positioning in the RRC_INACTIVE state (e.g., bwp-NUL in Table 14 or bwp-SUL in Table 14), the SRS may be transmitted inside the initial UL BWP.

According to the step, an operation of the UE (100/200 of FIGS. 16 to 20) to transmit the capability information to the base station (100/200 of FIGS. 16 to 20) may be implemented by the device of FIGS. 16 to 20. For example, referring to FIG. 17, one or more processors 102 may control one or more transceivers 106 and/or one or more memories 104 so as to transmit the capability information to the base station 200.

The method may further comprise a step of transmitting a physical uplink shared channel (PUSCH) in the RRC_INACTIVE state. Specifically, the UE may transmit the PUSCH to the base station in the RRC_INACTIVE state. The step may be performed after the step S1420. The PUSCH may be related to the CG-SDT or the RA-SDT. The transmission of the PUSCH may be based on Table 13. For example, the PUSCH may be transmitted in the initial UL BWP based on configured grant Type 1. For example, the PUSCH may be transmitted in the initial UL BWP based on a Type-1 random access procedure (4 step RACH) or a Type-2 random access procedure (2 step RACH).

According to an embodiment, if the transmission of the PUSCH collides with the transmission of the SRS in the time domain, the above-described priority rules (e.g., the Rule #1 to the Rule #3-1) may be applied. In this instance, the SRS may be an SRS transmitted inside the initial UL BWP or outside the initial UL BWP. For example, in at least one symbol where the collision occurs, the transmission of the PUSCH may be performed, and the transmission of the SRS may be dropped (the Rule #3). For example, in at least one symbol where the collision occurs, the transmission of the PUSCH may be dropped, and the transmission of the SRS may be performed (the Rule #2).

According to the step, an operation of the UE (100/200 of FIGS. 16 to 20) to transmit the PUSCH in the RRC_INACTIVE state to the base station (100/200 of FIGS. 16 to 20) may be implemented by the device of FIGS. 16 to 20. For example, referring to FIG. 17, one or more processors 102 may control one or more transceivers 106 and/or one or more memories 104 so as to transmit the PUSCH in the RRC_INACTIVE state to the base station 200.

Below, the above-described embodiments are described in detail from a perspective of an operation of a base station with reference to FIG. 15. Methods to be described below are merely distinguished for convenience of explanation. Thus, as long as the methods are not mutually exclusive, it is obvious that partial configuration of any method can be substituted or combined with partial configuration of another method.

FIG. 15 is a flowchart illustrating a method performed by a base station based on another embodiment of the present disclosure.

Referring to FIG. 15, a method performed by a base station based on another embodiment of the present disclosure may comprise a step S1510 of transmitting configuration information related to an SRS, a step S1520 of transmitting an RRC release message, and a step S1530 of receiving the SRS.

In the step 51510, the base station transmits configuration information related to a sounding reference signal (SRS) to a UE.

For example, the configuration information related to the SRS may be based on an SRS-config information element based on Table 11. Based on the configuration information related to the SRS, an SRS (e.g., the above-described SRSp) for positioning purpose and/or an SRS (e.g., the above-described SRSn) for purposes other than the positioning purpose may be configured.

According to an embodiment, the SRS may be related to positioning. That is, the SRS may be based on the SRS (e.g., the above-described SRSp) for positioning purpose. The configuration information related to the SRS may include a list of one or more SRS-PosResourceSets and a list of one or more SRS-PosResources. The SRS-PosResourceSet is a set of SRS resources for positioning, and the SRS-PosResource is an SRS resource for positioning. One SRS resource set (SRS-PosResourceSet) for positioning may include one or more SRS resources (SRS-PosResources) for positioning. For example, one SRS-PosResourceSet may include up to 16 SRS-PosResources.

According to an embodiment, the SRS may be based on the SRS (e.g., the above-described SRSn) for purposes other than the positioning purpose. In this instance, a usage of the SRS may be configured with one of beamManagement, codebook, nonCodebook or antennaSwitching.

According to the step S1510, an operation of the base station (100/200 of FIGS. 16 to 20) to transmit the configuration information related to the SRS to the UE (100/200 of FIGS. 16 to 20) may be implemented by a device of FIGS. 16 to 20. For example, referring to FIG. 17, one or more processors 202 may control one or more transceivers 206 and/or one or more memories 204 so as to transmit the configuration information related to the SRS to the UE 100.

In the step S1520, the base station transmits the RRC release message to the UE.

The RRC release message may be related to a release or suspension of RRC connection. An RRC state of the UE may transit from an RRC _CONNECTED state to an RRC _INACTIVE state or an RRC_IDLE state based on the RRC release message. The RRC release message may be based on Table 14. The terms 'RRC_INACTIVE state' and 'RRC_CONNECTED state' related to the RRC state of the UE can be changed/interpreted/applied to an 'RRC_INACTIVE mode' and an 'RRC_CONNECTED mode', respectively.

According to an embodiment, the RRC release message may include configuration information related to the SRS for positioning in the RRC_INACTIVE state. The configuration information related to the SRS for positioning in the RRC_INACTIVE state may include information on at least one of i) an SRS resource and/or ii) a bandwidth part (BWP). Based on the information on the BWP, the SRS may be received inside or outside an initial uplink (UL) BWP.

According to an embodiment, the RRC release message may further include configuration information related to a small data transmission (SDT). The configuration information related to the SDT may include information related to a configured grant (CG)-SDT. For example, the configuration information related to the SDT may be based on SDT-MAC-PHY-CG-Config-r17 included in the RRC release message in Table 14.

According to the step S1520, an operation of the base station (100/200 of FIGS. 16 to 20) to transmit the RRC release message to the UE (100/200 of FIGS. 16 to 20) may be implemented by the device of FIGS. 16 to 20. For example, referring to FIG. 17, one or more processors 202 may control one or more transceivers 206 and/or one or more memories 204 so as to transmit the RRC release message to the UE 100.

In the step S1530, the base station receives the SRS from the UE of the RRC_INACTIVE state. The SRS is the SRS for positioning purpose described above.

According to an embodiment, the SRS may be received inside or outside the initial UL BWP. For example, the SRS may be received inside or outside the initial UL BWP based on a capability of the UE.

Based on a transmission of the SRS for positioning for the initial UL BWP in the RRC_INACTIVE state being supported by the UE, the SRS may be received inside the initial UL BWP.

Based on a transmission of the SRS for positioning configured outside the initial UL BWP in the RRC_INACTIVE state being supported by the UE, the SRS may be received outside the initial UL BWP.

In this instance, a BWP (i.e., inside the initial UL BWP or outside the initial UL BWP) in which the SRS is transmitted may be determined based on the configuration information related to the SRS for positioning in the RRC_INACTIVE state included in the RRC release message.

The SRS may be received based on a priority (or priority rule) (e.g., at least one of the Rules #1 to #3-1) related to the SRS for positioning. For example, the transmission of the SRS may be dropped by the UE due to a collision. In this case, the base station may not receive the SRS. For example, even if the collision occurs, the transmission of the SRS may be performed based on the priority. In this case, the base station may receive the SRS.

According to an embodiment, based on the transmission of the SRS by the UE with colliding with other physical signal or other physical channel in a time domain, the transmission of the SRS may be dropped or performed in at least one symbol in which the collision occurs. That is, the base station may receive the SRS only when the transmission of the SRS by the UE is not dropped or is performed.

Whether to perform the transmission of the SRS may be determined based on a priority between i) the SRS and ii) the other physical signal or the other physical channel. The other physical channel may include a physical channel related to the SDT.

For example, the other physical channel may include a downlink physical channel (e.g., PDCCH, PDSCH, PBCH) and/or an uplink physical channel (e.g., PRACH, PUCCH, PUSCH). For example, the other physical signal may include a downlink physical signal (e.g., CSI-RS, DL DMRS) and/or an uplink physical signal (e.g., SRS, UL DMRS).

For example, the SDT may include configured grant (CG)-SDT and/or random access (RA)-SDT. The SDT may be performed based on Tables 12 and 13.

According to an embodiment, based on the transmission of the SRS colliding with a physical channel related to the RA-SDT or the CG-SDT in the time domain, the transmission of the SRS may be dropped in at least one symbol in which the collision occurs. The present embodiment may be based on the Rule #3 described above. In this case, the base station may receive the physical channel related to the RA-SDT or the CG-SDT from the UE.

According to an embodiment, based on the transmission of the SRS colliding with a physical channel related to the RA-SDT or the CG-SDT in the time domain, the transmission of the SRS may be dropped in at least one symbol in which the collision occurs. Based on the transmission of the SRS colliding with a physical channel related to the CG-SDT in the time domain, the transmission of the SRS may be performed in at least one symbol in which the collision occurs. The present embodiment may be based on the Rule #2-2 described above. That is, the base station may receive the SRS when the transmission of the SRS by the UE collides with a physical channel related to the CG-SDT in the time domain.

For example, the physical channel related to the CG-SDT may be a physical uplink shared channel (PUSCH) received based on a configured grant in the RRC_INACTIVE state (e.g., Configured-grant based PUSCH transmission in Table 13).

For example, the physical channel related to the RA-SDT may be a physical uplink shared channel (PUSCH) received based on a random access procedure in the RRC_INACTIVE state (e.g., Random-access based PUSCH transmission in Table 13).

According to the step S1530, an operation of the base station (100/200 of FIGS. 16 to 20) to receive the SRS in the RRC_INACTIVE state from the UE (100/200 of FIGS. 16 to 20) may be implemented by the device of FIGS. 16 to 20. For example, referring to FIG. 17, one or more processors 202 may control one or more transceivers 206 and/or one or more memories 204 so as to receive the SRS in the RRC_INACTIVE state from the UE 100.

The method may further comprise a step of receiving the SRS in the RRC_CONNECTED state. Specifically, the base station may receive the SRS from the UE of the RRC_CONNECTED state. The step may be performed after the step S1510 or before the step S1520. According to an embodiment, the SRS may be received inside an active UL BWP.

According to the step, an operation of the base station (100/200 of FIGS. 16 to 20) to receive the SRS in the RRC_CONNECTED state from the UE (100/200 of FIGS. 16 to 20) may be implemented by the device of FIGS. 16 to 20. For example, referring to FIG. 17, one or more processors 202 may control one or more transceivers 206 and/or one or more memories 204 so as to receive the SRS in the RRC_CONNECTED state from the UE 100.

The method may further comprise a step of receiving capability information. Specifically, the base station may receive the capability information from the UE. The capability information may be related to a support of the SRS transmission for positioning in the RRC_INACTIVE state. The step may be performed before the step S1510 or before the step 51520.

Specifically, the capability information may include at least one of i) information (e.g., srs-PosResourcesRRC-Inactive-r17 in Table 16) representing whether the transmission of the SRS for positioning for the initial UL BWP in the RRC INACTIVE state is supported and/or ii) information (e.g., posSRS-RRC-Inactive-OutsideInitialUL-BWP-r17) representing whether the transmission of the SRS for positioning outside the initial UL BWP in the RRC INACTIVE state is supported. The capability information may include information based on Table 16.

The reception (S1530) of the SRS for positioning from the UE of the RRC_INACTIVE state may be performed on the assumption that the SRS transmission inside the initial UL BWP or the SRS transmission outside the initial UL BWP is supported by the UE. Further, the SRS transmission outside the initial UL BWP may be based on the assumption that the SRS transmission inside the initial UL BWP is supported.

For example, it may be determined based on the capability information that only the transmission of the SRS for positioning inside the initial UL BWP is supported by the UE. The RRC release message may not include configuration of the BWP related to the SRS for positioning in the RRC_INACTIVE state (e.g., bwp-NUL (normal uplink carrier) in Table 14 or bwp-SUL (supplementary uplink carrier) in Table 14).

For example, it may be determined based on the capability information that the transmission of the SRS for positioning outside the initial UL BWP is supported by the UE. In this case, the RRC release message may include configuration of the BWP related to the SRS for positioning in the RRC_INACTIVE state (e.g., bwp-NUL (normal uplink carrier) in Table 14 or bwp-SUL (supplementary uplink carrier) in Table 14).

As a specific example, based on the transmission of the SRS for positioning outside the initial UL BWP being supported by the UE, and the RRC release message including the configuration of the BWP related to the SRS for positioning in the RRC_INACTIVE state (e.g., bwp-NUL in Table 14 or bwp-SUL in Table 14), the SRS may be received outside the initial UL BWP.

For another example, based on the transmission of the SRS for positioning outside the initial UL BWP being supported by the UE, and the RRC release message not including the configuration of the BWP related to the SRS for positioning in the RRC_INACTIVE state (e.g., bwp-NUL in Table 14 or bwp-SUL in Table 14), the SRS may be received inside the initial UL BWP.

According to the step, an operation of the base station (100/200 of FIGS. 16 to 20) to receive the capability information from the UE (100/200 of FIGS. 16 to 20) may be implemented by the device of FIGS. 16 to 20. For example, referring to FIG. 17, one or more processors 202 may control one or more transceivers 206 and/or one or more memories 204 so as to receive the capability information from the UE 100.

The method may further comprise a step of receiving a physical uplink shared channel (PUSCH). Specifically, the base station may receive the PUSCH from the UE of the RRC_INACTIVE state. The step may be performed after the step S1520. The PUSCH may be related to the CG-SDT or the RA-SDT. The reception of the PUSCH may be based on Table 13. For example, the PUSCH may be received in the initial UL BWP based on configured grant Type 1. For example, the PUSCH may be received in the initial UL BWP based on a Type-1 random access procedure (4 step RACH) or a Type-2 random access procedure (2 step RACH).

According to an embodiment, if the transmission of the PUSCH collides with the transmission of the SRS in the time domain, the above-described priority rules (e.g., the Rule #1 to the Rule #3-1) may be applied. In this instance, the SRS may be an SRS transmitted inside the initial UL BWP or outside the initial UL BWP. For example, in at least one symbol where the collision occurs, the transmission of the PUSCH may be performed, and the transmission of the SRS may be dropped (the Rule #3). That is, the base station may receive the PUSCH from the UE in at least one symbol where the collision occurs. For example, in at least one symbol where the collision occurs, the transmission of the PUSCH may be dropped, and the transmission of the SRS may be performed (the Rule #2). That is, the base station may receive the SRS from the UE in at least one symbol where the collision occurs.

According to the step, an operation of the base station (100/200 of FIGS. 16 to 20) to receive the PUSCH in the RRC_INACTIVE state from the UE (100/200 of FIGS. 16 to 20) may be implemented by the device of FIGS. 16 to 20. For example, referring to FIG. 17, one or more processors 202 may control one or more transceivers 206 and/or one or more memories 204 so as to receive the PUSCH in the RRC_INACTIVE state from the UE 100.

In the above-described UE/base station operation illustrated in FIGS. 14 and 15, the following embodiment may be additionally applied.

The UE may receive configuration information related to the priority from the base station or a location server (e.g., LMF). According to an embodiment, the UE may receive configuration information related to the priority from the location server. To this end, information on a transition of the RRC state of the UE may be transmitted from the base station to the location server.

According to an embodiment, the UE may receive configuration information related to the priority from the base station. In other words, the base station may transmit the configuration information related to the priority to the UE. In this instance, the configuration information related to the priority may be transmitted (received) based on the RRC state of the UE.

For example, based on the UE being in the RRC_CONNECTED state, the configuration information related to the priority may be transmitted (received) based on system information, an RRC message, or a medium access control-control element (MAC-CE).

For example, based on the UE being in the RRC INACTIVE state, the configuration information related to the priority may be transmitted (received) based on a predefined physical channel. The predefined physical channel may be a physical channel (e.g., PDCCH, PDSCH, msg2/4, msgB) based on A to D of the scenario #2.

## Example of communication system applied to present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

FIG. 16 illustrates a communication system 1 applied to the present disclosure.

Referring to FIG. 16, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2VyVehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Example of wireless device applied to the present disclosure.

FIG. 17 illustrates wireless devices applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Example of signal processing circuit applied to the present disclosure

FIG. 18 illustrates a signal process circuit for a transmission signal.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

Example of application of wireless device applied to the present disclosure

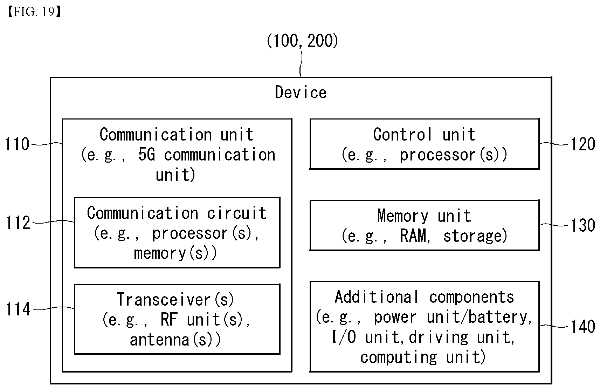

FIG. 19 illustrates another example of a wireless device applied to the present disclosure.

The wireless device may be implemented in various forms according to a use-case/service (refer to FIG. 16). Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g.,

other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM), a flash memory, a volatile memory, a non-volatile memory, and/or a combination thereof.

Example of hand-held device applied to the present disclosure

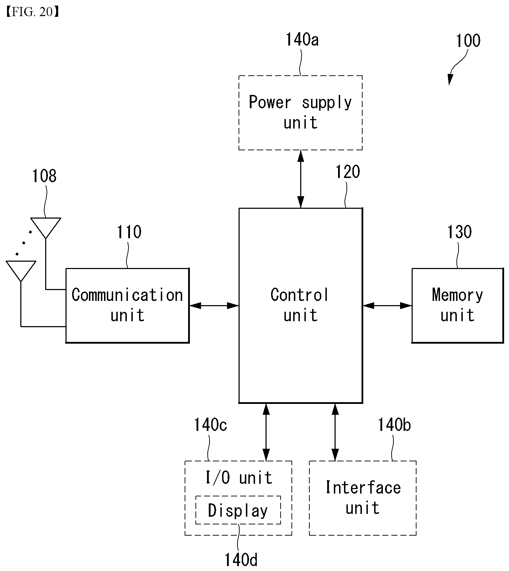

FIG. 20 illustrates a hand-held device applied to the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

Here, the wireless communication technology implemented in the device (FIGS. 19 to 23) of the present disclosure may include LTE, NR, and 6G as well as Narrowband Internet of Things (NB-IoT) for low-power communication. For example, the NB-IoT technology may be an example of a LPWAN (Low Power Wide Area Network) technology, and may be implemented in standards such as LTE Cat NB1 and/or LTE Cat NB2, and is not limited to the above-described name.

Additionally or alternatively, the wireless communication technology implemented in the device (FIGS. 19 to 23) of the present disclosure may perform communication based on the LTE-M technology. For example, the LTE-M technology may be an example of LPWAN technology, and may be called by various names such as enhanced machine type communication (eMTC). For example, LTE-M technology may be implemented in at least one of various standards such as 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M, and is not limited to the above-described name.

Additionally or alternatively, the wireless communication technology implemented in the device (FIGS. 19 to 23) of the present disclosure may include at least one of ZigBee, Bluetooth, and Low Power Wide Area Network (LPWAN) in consideration of low power communication, and is not limited to the above-described name. For example, the ZigBee technology may generate PAN (personal area networks) related to small/low-power digital communication based on various standards such as IEEE 802.15.4, and may be called by various names.

The embodiments of the present disclosure described hereinbelow are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Claims**

1. A method performed by a user equipment (UE) in a wireless communication system, the method comprising:

   receiving, from a base station, configuration information related to a sounding reference signal (SRS), the SRS being related to a positioning;
   receiving an RRC release message from the base station, wherein an RRC state of the UE transits from an RRC_CONNECTED state to an RRC_INACTIVE state or an RRC_IDLE state based on the RRC release message; and
   transmitting, to the base station, the SRS in the RRC_INACTIVE state,
   wherein the RRC release message includes configuration information related to the SRS for positioning in the RRC _INACTIVE state,
   wherein the SRS is transmitted inside or outside an initial uplink (UL) bandwidth part (BWP),
   wherein based on a transmission of the SRS colliding with other physical signal or other physical channel in a time domain, the transmission of the SRS is dropped or performed in at least one symbol in which the collision occurs,
   wherein whether to perform the transmission of the SRS is determined based on a priority between i) the SRS and ii) the other physical signal or the other physical channel, and
   wherein the other physical channel includes a physical channel related to a small data transmission (SDT).

2. The method of claim 1, wherein the SDT includes a configured grant (CG)-SDT and/or a random access (RA)-SDT.

3. The method of claim 2, wherein based on the transmission of the SRS colliding with a physical channel related to the RA-SDT or the CG-SDT in the time domain, the transmission of the SRS is dropped in at least one symbol in which the collision occurs.

4. The method of claim 2, wherein based on the transmission of the SRS colliding with a physical channel related to the RA-SDT or the CG-SDT in the time domain, the transmission of the SRS is dropped in at least one symbol in which the collision occurs, and
   wherein based on the transmission of the SRS colliding with the physical channel related to the CG-SDT in the time domain, the transmission of the SRS is performed in at least one symbol in which the collision occurs.

5. The method of claim 2, wherein a physical channel related to the CG-SDT is a physical uplink shared channel (PUSCH) transmitted based on a configured grant in the RRC_INACTIVE state.

6. The method of claim 2, wherein a physical channel related to the RA-SDT is a physical uplink shared channel (PUSCH) transmitted based on a random access procedure in the RRC_INACTIVE state.

7. The method of claim 1, wherein the RRC release message further includes configuration information related to the SDT.

8. The method of claim 7, wherein the configuration information related to the SDT includes information related to a configured grant (CG)-SDT.

9. The method of claim 1, wherein the configuration information related to the SRS for positioning in the RRC_INACTIVE state includes information on at least one of i) an SRS resource and/or ii) a BWP, and
wherein based on information on the BWP, the SRS is transmitted inside or outside the initial UL BWP.

10. The method of claim 1, further comprising transmitting, to the base station, the SRS in the RRC_CONNECTED state, wherein the SRS is transmitted inside an active UL BWP.

11. The method of claim 1, further comprising transmitting capability information to the base station,
wherein the capability information is related to a support of the transmission of the SRS for positioning in the RRC_INACTIVE state.

12. The method of claim 11, wherein the capability information includes at least one of i) information representing whether the transmission of the SRS for positioning for the initial UL BWP in the RRC_INACTIVE state is supported and/or ii) information representing whether the transmission of the SRS for positioning outside the initial UL BWP in the RRC_INACTIVE state is supported.

13. A user equipment (UE) operating in a wireless communication system, the UE comprising:

   one or more transceivers;
   one or more processors configured to control the one or more transceivers; and
   one or more memories operably connected to the one or more processors,
   wherein the one or more memories are configured to store instructions performing operations based on being executed by the one or more processors,
   wherein the operations comprise:

      receiving, from a base station, configuration information related to a sounding reference signal (SRS), the SRS being related to a positioning;
      receiving an RRC release message from the base station, wherein an RRC state of the UE transits from an RRC_CONNECTED state to an RRC_INACTIVE state or an RRC_IDLE state based on the RRC release message; and
      transmitting, to the base station, the SRS in the RRC_INACTIVE state,
      wherein the RRC release message includes configuration information related to the SRS for positioning in the RRC _INACTIVE state,
      wherein the SRS is transmitted inside or outside an initial uplink (UL) bandwidth part (BWP),
      wherein based on a transmission of the SRS colliding with other physical signal or other physical channel in a time domain, the transmission of the SRS is dropped or performed in at least one symbol in which the collision occurs,
      wherein whether to perform the transmission of the SRS is determined based on a priority between i) the SRS and ii) the other physical signal or the other physical channel, and
      wherein the other physical channel includes a physical channel related to a small data transmission (SDT).

14. A device controlling a user equipment (UE) in a wireless communication system, the device comprising:

   one or more processors; and

one or more memories operably connected to the one or more processors,
wherein the one or more memories are configured to store instructions performing operations based on being executed by the one or more processors,
wherein the operations comprise:

receiving, from a base station, configuration information related to a sounding reference signal (SRS), the SRS being related to a positioning;
receiving an RRC release message from the base station, wherein an RRC state of the UE transits from an RRC_CONNECTED state to an RRC_INACTIVE state or an RRC_IDLE state based on the RRC release message; and
transmitting, to the base station, the SRS in the RRC_INACTIVE state,
wherein the RRC release message includes configuration information related to the SRS for positioning in the RRC _INACTIVE state,
wherein the SRS is transmitted inside or outside an initial uplink (UL) bandwidth part (BWP),
wherein based on a transmission of the SRS colliding with other physical signal or other physical channel in a time domain, the transmission of the SRS is dropped or performed in at least one symbol in which the collision occurs,
wherein whether to perform the transmission of the SRS is determined based on a priority between i) the SRS and ii) the other physical signal or the other physical channel, and
wherein the other physical channel includes a physical channel related to a small data transmission (SDT).

15. One or more non-transitory computer readable mediums storing one or more instructions,

wherein the one or more instructions perform operations based on being executed by one or more processors,
wherein the operations comprise:

receiving, from a base station, configuration information related to a sounding reference signal (SRS), the SRS being related to a positioning;
receiving an RRC release message from the base station, wherein an RRC state of a user equipment (UE) transits from an RRC_CONNECTED state to an RRC_INACTIVE state or an RRC_IDLE state based on the RRC release message; and
transmitting, to the base station, the SRS in the RRC_INACTIVE state,
wherein the RRC release message includes configuration information related to the SRS for positioning in the RRC _INACTIVE state,
wherein the SRS is transmitted inside or outside an initial uplink (UL) bandwidth part (BWP),
wherein based on a transmission of the SRS colliding with other physical signal or other physical channel in a time domain, the transmission of the SRS is dropped or performed in at least one symbol in which the collision occurs,
wherein whether to perform the transmission of the SRS is determined based on a priority between i) the SRS and ii) the other physical signal or the other physical channel, and
wherein the other physical channel includes a physical channel related to a small data transmission (SDT).

16. A method performed by a base station in a wireless communication system, the method comprising:

transmitting, to a user equipment (UE), configuration information related to a sounding reference signal (SRS), the SRS being related to a positioning;
transmitting an RRC release message to the UE, wherein an RRC state of the UE transits from an RRC_CONNECTED state to an RRC_INACTIVE state or an RRC_IDLE state based on the RRC release message; and
receiving the SRS from the UE of the RRC _INACTIVE state,
wherein the RRC release message includes configuration information related to the SRS for positioning in the RRC _INACTIVE state,
wherein the SRS is received inside or outside an initial uplink (UL) bandwidth part (BWP),
wherein based on a transmission of the SRS colliding with other physical signal or other physical channel in a time domain, the transmission of the SRS is dropped or performed in at least one symbol in which the collision occurs,
wherein whether to perform the transmission of the SRS is determined based on a priority between i) the SRS and ii) the other physical signal or the other physical channel, and
wherein the other physical channel includes a physical channel related to a small data transmission (SDT).

17. A base station operating in a wireless communication system, the base station comprising:

one or more transceivers;
one or more processors configured to control the one or more transceivers; and
one or more memories operably connected to the one or more processors,
wherein the one or more memories are configured to store instructions performing operations based on being executed by the one or more processors,
wherein the operations comprise:

transmitting, to a user equipment (UE), configuration information related to a sounding reference signal (SRS), the SRS being related to a positioning;
transmitting an RRC release message to the UE, wherein an RRC state of the UE transits from an RRC_CONNECTED state to an RRC_INACTIVE state or an RRC_IDLE state based on the RRC release message; and
receiving the SRS from the UE of the RRC_INACTIVE state,
wherein the RRC release message includes configuration information related to the SRS for positioning in the RRC _INACTIVE state,
wherein the SRS is received inside or outside an initial uplink (UL) bandwidth part (BWP),
wherein based on a transmission of the SRS colliding with other physical signal or other physical channel in a time domain, the transmission of the SRS is dropped or performed in at least one symbol in which the collision occurs,
wherein whether to perform the transmission of the SRS is determined based on a priority between i) the SRS and ii) the other physical signal or the other physical channel, and
wherein the other physical channel includes a physical channel related to a small data transmission (SDT).

【FIG. 1】

【FIG. 2】

【FIG. 3】

Radio Frame 10ms

Subframe 1ms

| 0 | 1 | 2 | 3 | 4 | 5 | 6 | 7 | 8 | 9 |

Fixed Size

Subframe ={1, 2, 4} Slots

Slot

| 0 | 1 | 2 | 3 |

Slot={7, 14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2, 4, 7} Symbols - ffs

【FIG. 4】

One subframe

$14 \cdot 2^{\mu}$ OFDM symbols

$k = N_{RB}^{\mu} N_{SC}^{RB} - 1$

Resource Block

Resource Element
-In case of resource grid, $(k, \bar{l})$
-In case of resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

【FIG. 5】

Antenna Port A
Antenna Port B } Numerology X

Antenna Port A
Antenna Port B } Numerology Y

【FIG. 6】

INITIAL CELL SEARCH | SYSTEM INFORMATION RECEPTION | RANDOM ACCESS PROCEDURE | GENERAL DL/UL Tx/Rx

PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH

S601    S602    S603    S604    S605    S606    S607    S608

· DL/UL ACK/NACK
· UE CQI/PMI RI REPORT USING PUSCH AND PUCCH

【FIG. 7】

【FIG. 8】

【FIG. 9】

【FIG. 10】

| | | Relay | | | | Relay | | | | |
|---|---|---|---|---|---|---|---|---|---|---|
| LPP | | | | | | | | | | LPP |
| NAS | | | | | | NAS | HTTP/2 | | | |
| RRC | | RRC | NGAP | | | NGAP | | | | HTTP/2 |
| PDCP | | PDCP | SCTP | | | SCTP | TLS | | | TLS |
| | | | | | | | TCP | | | TCP |
| RLC | | RLC | IP | | | IP | IP | | | IP |
| MAC | | MAC | L2 | | | L2 | L2 | | | L2 |
| L1 | | L1 | L1 | | | L1 | L1 | | | L1 |
| UE | NR-Uu LTE-Uu | NG RAN | | NG-C | | AMF | | NLs | | LMF |

【FIG. 11】

| | | | Relay? | | | | |
|---|---|---|---|---|---|---|---|
| NRPPa | | | | | | | NRPPa |
| NGAP | | NGAP | HTTP/2 | | | | HTTP/2 |
| SCTP | | SCTP | TLS | | | | TLS |
| | | | TCP | | | | TCP |
| IP | | IP | IP | | | | IP |
| L2 | | L2 | L2 | | | | L2 |
| L1 | | L1 | L1 | | | | L1 |
| NG RAN | NG-C | AMF | | NLs | | LMF |

【FIG. 12】

【FIG. 13】

|UE|

2101
configuration information

2103
receiving signal related to configuration information

2105
transmitting information related to positioning

(a)

|TRP|

2201
receiving/transmitting configuration information

2203
transmitting signal related to configuration information

2205
receiving/transmitting information related to positioning

(b)

|location server/LMF|

2301
transmitting configuration information

2305
receiving information related to positioning

(c)

【FIG. 14】

```
                    ┌─────────┐
                    │  Start  │
                    └────┬────┘
                         │
                         ▼
┌───────────────────────────────────────────────────┐
│  Receive configuration information related to SRS  │──S1410
└───────────────────────────────────────────────────┘
                         │
                         ▼
┌───────────────────────────────────────────────────┐
│            Receive RRC release message             │──S1420
└───────────────────────────────────────────────────┘
                         │
                         ▼
┌───────────────────────────────────────────────────┐
│                   Transmit SRS                     │──S1430
└───────────────────────────────────────────────────┘
                         │
                         ▼
                    ┌─────────┐
                    │   End   │
                    └─────────┘
```

【FIG. 15】

```
                    ┌─────────┐
                    │  Start  │
                    └────┬────┘
                         │
                         ▼
┌───────────────────────────────────────────────────┐
│  Transmit configuration information related to SRS │──S1510
└───────────────────────────────────────────────────┘
                         │
                         ▼
┌───────────────────────────────────────────────────┐
│            Transmit RRC release message            │──S1520
└───────────────────────────────────────────────────┘
                         │
                         ▼
┌───────────────────────────────────────────────────┐
│                   Receive SRS                      │──S1530
└───────────────────────────────────────────────────┘
                         │
                         ▼
                    ┌─────────┐
                    │   End   │
                    └─────────┘
```

【FIG. 16】

EP 4 514 044 A1

【FIG. 17】

【FIG. 18】

1000(102/106, 202/206)

【FIG. 19】

(100, 200)

Device

110 — Communication unit
(e. g. , 5G communication
unit)

112 — Communication circuit
(e. g. , processor(s),
memory(s))

114 — Transceiver(s)
(e. g. , RF unit(s),
antenna(s))

Control unit
(e. g. , processor(s)) — 120

Memory unit
(e. g. , RAM, storage) — 130

Additional components
(e. g. , power unit/battery,
I/O unit, driving unit,
computing unit) — 140

【FIG. 20】

## INTERNATIONAL SEARCH REPORT

| International application No. |
|---|
| **PCT/KR2023/004437** |

**A. CLASSIFICATION OF SUBJECT MATTER**

**H04W 72/56**(2023.01)i; **H04W 64/00**(2009.01)i; **H04W 68/02**(2009.01)i; **H04W 72/23**(2023.01)i; **H04L 5/00**(2006.01)i; **H04W 72/12**(2009.01)i; **H04W 72/566**(2023.01)i; **H04W 72/21**(2023.01)i

According to International Patent Classification (IPC) or to both national classification and IPC

**B. FIELDS SEARCHED**

Minimum documentation searched (classification system followed by classification symbols)

H04W 72/56(2023.01); H04W 72/12(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비활성(inactive), SRS, SDT, 충돌(collide), 우선순위(priority)

**C. DOCUMENTS CONSIDERED TO BE RELEVANT**

| Category* | Citation of document, with indication, where appropriate, of the relevant passages | Relevant to claim No. |
|---|---|---|
| Y<br>A | INTERDIGITAL INC. Email discussion Report on [Pre117-e][609][POS] Open issues on positioning in RRC_INACTIVE (InterDigital). R2-2203524, 3GPP TSG RAN WG2 Meeting #117-e. 20 February 2022.<br>See sections 3.1-3.6, 4 and 5. | 1-2,7-17<br>3-6 |
| Y | US 2022-0124780 A1 (QUALCOMM INCORPORATED) 21 April 2022 (2022-04-21)<br>See paragraphs [0087]-[0137]; and claims 1-30. | 1-2,7-17 |
| A | HUAWEI et al. Remaining Issues on RRC_INACTIVE Positioning. R2-2202601, 3GPP TSG RAN WG2 Meeting #117-e. 14 February 2022.<br>See section 2.1. | 1-17 |
| A | OPPO. Open issues on positioning in RRC_INACTIVE state. R2-2202338, 3GPP TSG RAN WG2 Meeting #117-e. 14 February 2022.<br>See section 2.2. | 1-17 |
| A | VIVO. Discussion on positioning in RRC_INACTIVE. R2-2203089, 3GPP TSG RAN WG2 Meeting #117-e. 14 February 2022.<br>See section 2.1. | 1-17 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 June 2023** | **28 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
**Information on patent family members**

International application No.

**PCT/KR2023/004437**

| Patent document cited in search report | Publication date (day/month/year) | Patent family member(s) | Publication date (day/month/year) |
|---|---|---|---|
| US 2022-0124780 A1 | 21 April 2022 | WO 2022-087572 A1 | 28 April 2022 |

Form PCT/ISA/210 (patent family annex) (July 2022)

93